# EUROPEAN PATENT APPLICATION

(11) **EP 4 733 196 A1**
(43) Date of publication of application: **29.04.2026**
(21) Application number: 24825543.2
(22) Date of filing: 04.04.2024
(51) Int. Cl.: B64D 31/16, B64D 27/30

(54) **PROPULSION SYSTEM, PROPULSION CONTROL DEVICE, AND PROPULSION CONTROL PROGRAM**

(30) Priority: 23.06.2023 JP 2023103620; 27.03.2024 JP 2024052412
(71) Applicant: DENSO CORPORATION, Kariya-city, Aichi 448-8661 (JP)
(72) Inventor: KAWAZU Shinsuke, Kariya- city Aichi 4488661 (JP); TAKEMURA Yuichi, Kariya- city Aichi 4488661 (JP); SUZUKI Hideaki, Kariya- city Aichi 4488661 (JP)
(74) Representative: TBK
(86) International application number: PCT/JP2024/013962
(87) International publication number: WO 2024/262133

(57) **Abstract**

In an inverter device (80), an inverter high-voltage unit (86) is accommodated in an inverter housing (90). The inverter housing (90) includes an inverter opening portion (92) and an inverter lid portion (95). The inverter lid portion (95) covers the inverter opening portion (92) to hide the inverter high-voltage unit (86). When a control mode of a flight control device (40) is set to an interlock mode, power supply from a battery (31) to a motor (61) is cut off as the inverter lid portion (95) is opened. When the control mode is set to an interlock release mode, the power supply from the battery (31) to the motor (61) is not cut off even when the inverter lid portion (95) is opened. The control mode is set to the interlock release mode when the eVTOL (10) is in flight.

## Description

### CROSS REFERENCE TO RELATED APPLICATION

The present application is based on Japanese Patent Applications No. 2023-103620 filed on June 23, 2023 and No. 2024-052412 filed on March 27, 2024. The entire disclosures of all of the above applications are incorporated herein by reference.

### TECHNICAL FIELD

The present disclosure relates to a propulsion system, a propulsion control device, and a propulsion control program.

### BACKGROUND ART

Patent Literature 1 discloses a system for controlling a motor. In the system, a control unit which is a high-voltage device is accommodated in an accommodation box. When a cover of the accommodation box is opened, high-voltage power supplied to the control unit is cut off by an interlock circuit.

### PRIOR ART LITERATURE

### PATENT LITERATURE

PATENT LITERATURE 1: JP2004-112902A

### SUMMARY OF INVENTION

A motor may be mounted in a flight vehicle as a driving source for propelling the flight vehicle. For example, in a configuration in which the system of Patent Literature 1 is mounted in the flight vehicle, when the cover of the accommodation box is opened by an unintended external force or the like, the high-voltage power is cut off by the interlock circuit although the flight vehicle is in flight. In the configuration, there is a concern that driving of the motor is stopped as the high-voltage power is cut off, and safety of the flight vehicle decreases due to an insufficient propulsive force of the flight vehicle, or the like.

An object of the present disclosure is to provide a propulsion system, a propulsion control device, and a propulsion control program capable of enhancing safety of a flight vehicle.

Multiple embodiments disclosed in this description employ different technical means from each other to attain their respective objects. In addition, reference numerals in parentheses in claims and in this section are examples of correspondence with specific means described in the embodiment described below as one of the modes, and do not limit the technical scope.

In order to attain the above object, according to an aspect of the disclosure, a propulsion system is configured to propel a flight vehicle. The propulsion system comprises: a motor configured to be driven to propel the flight vehicle using electric power supplied from a power supply unit; a driving voltage unit configured to be applied with a driving voltage to drive the motor, when the power supply unit supplies the electric power to the motor; a driving housing accommodating the driving voltage unit; a housing lid portion covering an opening portion of the driving housing to hide the driving voltage unit and configured to open the opening portion; an interlock unit configured to set, as a control mode to control the power supply from the power supply unit to the motor, an interlock mode to cut off the power supply from the power supply unit to the motor to stop the application of the driving voltage to the driving voltage unit due to opening of the housing lid portion; and an interlock release unit configured to release the interlock mode when the flight vehicle is in flight.

According to the propulsion system described above, when the control mode is the interlock mode, the application of the driving voltage to the driving voltage unit is stopped as the housing lid portion is opened. In this case, even if the driving voltage unit is exposed from the opening portion of the driving housing, a decrease in safety of an operator or the like can be limited. Moreover, when the flight vehicle is in flight, the interlock mode is released. In this case, even if the housing lid portion is unintentionally opened, the power supply from the power supply unit to the motor is not cut off by the interlock mode. Therefore, a decrease in safety of the flight vehicle due to an insufficient propulsive force of the flight vehicle, or the like caused by the housing lid portion being opened can be prevented. As described above, the safety of the flight vehicle can be enhanced.

According to an aspect of the disclosure, a propulsion control device is configured to control a propulsion system. The propulsion system includes: a motor configured to be driven to propel a flight vehicle using electric power supplied from a power supply unit; a driving voltage unit configured to be applied with a driving voltage to drive the motor, when the power supply unit supplies the electric power to the motor; a driving housing accommodating the driving voltage unit; and a housing lid portion covering an opening portion of the driving housing to hide the driving voltage unit and configured to open the opening portion. The propulsion control device comprises: an interlock unit configured to set, as a control mode to control the power supply from the power supply unit to the motor, an interlock mode to cut off the power supply from the power supply unit to the motor to stop the application of the driving voltage to the driving voltage unit due to opening of the housing lid portion; and an interlock release unit configured to release the interlock mode when the flight vehicle is in flight.

According to the propulsion control device described above, the safety of the flight vehicle can be enhanced, similar to the propulsion system described above.

According to an aspect of the disclosure, a propulsion control program is configured to control a propulsion system. The propulsion system includes: a motor configured to be driven to propel a flight vehicle using electric power supplied from a power supply unit; a driving voltage unit configured to be applied with a driving voltage to drive the motor, when the power supply unit supplies the electric power to the motor; a driving housing accommodating the driving voltage unit; and a housing lid portion covering an opening portion of the driving housing to hide the driving voltage unit and configured to open the opening portion. The propulsion control program is configured to cause at least one processing unit to: set, as a control mode to control the power supply from the power supply unit to the motor, an interlock mode to cut off the power supply from the power supply unit to the motor to stop the application of the driving voltage to the driving voltage unit due to opening of the housing lid portion; and release the interlock mode when the flight vehicle is in flight.

According to the propulsion control program described above, the safety of the flight vehicle can be enhanced, similar to the propulsion system described above.

### BRIEF DESCRIPTION OF THE DRAWINGS

FIG. 1 is a diagram showing a configuration of an eVTOL in a first embodiment.
FIG. 2 is a block diagram showing an electrical configuration of a propulsion system.
FIG. 3 is a diagram showing a circuit configuration of an inverter device.
FIG. 4 is a diagram showing a circuit configuration of a lid detection circuit.
FIG. 5 is a flowchart showing a procedure of a flight control process.
FIG. 6 is a flowchart showing a procedure of a discharging control process.
FIG. 7 is a diagram showing a circuit configuration of the lid detection circuit in a second embodiment.
FIG. 8 is a flowchart showing a procedure of the discharging control process.
FIG. 9 is a block diagram showing an electrical configuration of the propulsion system in a third embodiment.
FIG. 10 is a block diagram showing an electrical configuration of the propulsion system in a fourth embodiment.
FIG. 11 is a flowchart showing a procedure of the discharging control process.
FIG. 12 is a flowchart showing a procedure of the discharging control process in a fifth embodiment.
FIG. 13 is a flowchart showing a procedure of the flight control process in a sixth embodiment.
FIG. 14 is a diagram showing a circuit configuration of another propulsion system.
FIG. 15 is a diagram showing a circuit configuration of the inverter device in a seventh embodiment.
FIG. 16 is a flowchart showing a procedure of the discharging control process.
FIG. 17 is a diagram illustrating an upper-on-state current.
FIG. 18 is a diagram illustrating a lower-on-state current.
FIG. 19 is a timing chart illustrating how an upper parasitic voltage and a lower parasitic voltage change.
FIG. 20 is a diagram showing a circuit configuration of the inverter device in an eighth embodiment.
FIG. 21 is a flowchart showing a procedure of the discharging control process.
FIG. 22 is a flowchart showing a procedure of a first discharging process.
FIG. 23 is a flowchart showing a procedure of a second discharging process.
FIG. 24 is a timing chart illustrating how the upper parasitic voltage and the lower parasitic voltage change.
FIG. 25 is a flowchart showing a procedure of the discharging control process in a ninth embodiment.
FIG. 26 is a timing chart illustrating how the upper parasitic voltage and the lower parasitic voltage change.
FIG. 27 is a flowchart showing a procedure of the discharging control process in a tenth embodiment.
FIG. 28 is a timing chart illustrating how the upper parasitic voltage and the lower parasitic voltage change.
FIG. 29 is a diagram showing a circuit configuration of the inverter device in an eleventh embodiment.
FIG. 30 is a diagram showing a circuit configuration of the inverter device in a twelfth embodiment.
FIG. 31 is a flowchart showing a procedure of the flight control process.
FIG. 32 is a flowchart showing a procedure of the flight control process in a thirteenth embodiment.
FIG. 33 is a flowchart showing a procedure of the flight control process in a fourteenth embodiment.
FIG. 34 is a flowchart showing a procedure of a resuming process.
FIG. 35 is a flowchart showing a procedure of the flight control process in a fifteenth embodiment.
FIG. 36 is a flowchart showing a procedure of an all-cut-off process.
FIG. 37 is a diagram showing a circuit configuration of the inverter device in a sixteenth embodiment.

### DESCRIPTION OF EMBODIMENTS

Hereinafter, multiple aspects for implementing the present disclosure will be described with reference to the drawings. In each embodiment, the same reference numerals are assigned to portions corresponding to the items described in the preceding embodiments, and a repetitive description thereof may be omitted. In each embodiment, when only a part of the configuration is described, another embodiment previously described can be employed for the other part of the configuration. Not only portions which are specifically clarified so as to be combined in each embodiment are capable of being combined, but also embodiments are capable of being partially combined with each other even though combination is not clarified as long as no adverse effect is particularly generated with respect to the combination.

### <First Embodiment>

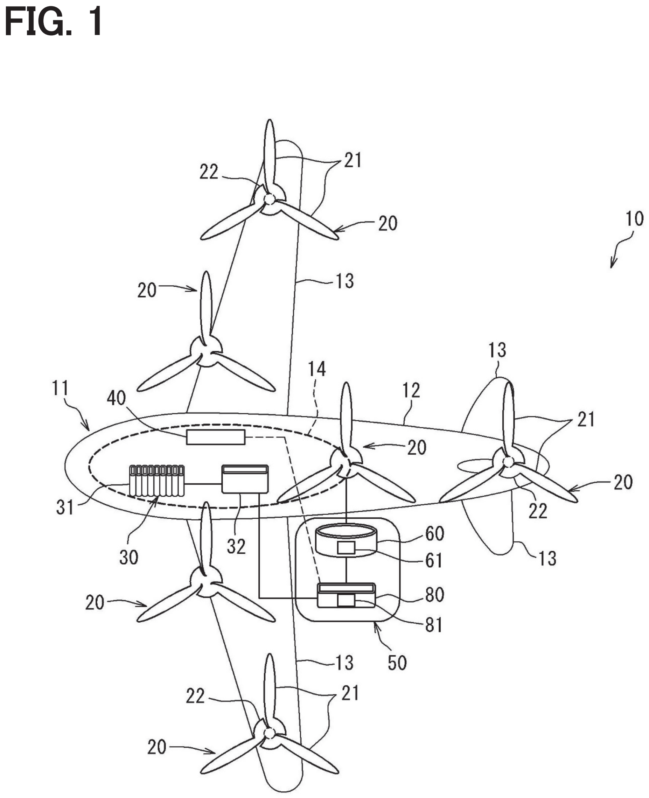

A propulsion system 30 shown in FIG. 1 is mounted in an eVTOL 10. The eVTOL 10 is an electric vertical take-off and landing aircraft. The electric vertical take-off and landing aircraft is an electric-powered vertical take-off and landing aircraft, and can take off and land vertically. The eVTOL is an abbreviation of an electric vertical take-off and landing aircraft. The eVTOL 10 is an electric-powered flight vehicle that flies through the atmosphere and may be referred to as an electric flight vehicle. The eVTOL 10 is also an electric-powered aircraft and may be referred to as an electric aircraft. The eVTOL 10 is a manned flight vehicle carrying an occupant. The occupant of the eVTOL 10 includes a pilot acting as an operator or a driver. The propulsion system 30 is a system that is driven to propel the eVTOL 10. The propulsion system 30 may be referred to as a flight system.

The eVTOL 10 includes an airframe 11 and propellers 20. The airframe 11 includes an airframe main body 12 and wings 13. The airframe main body 12 is a body of the airframe 11 and has, for example, a shape extending in a front-rear direction. The airframe main body 12 has an occupant compartment 14 for carrying occupants. Each of the wings 13 extends from the airframe main body 12 and multiple wings 13 are provided on the airframe main body 12. The wings 13 are fixed wings. The multiple wings 13 include a main wing, a tail wing, and the like.

The eVTOL 10 has a cabin. The cabin is provided inside the eVTOL 10. For example, the cabin is an internal space of the airframe main body 12 and is formed by the airframe main body 12. Examples of the cabin include the occupant compartment 14, and a cargo compartment. Examples of the occupant compartment 14 include a passenger compartment, and a pilot compartment. Seats for the occupants to sit are provided in the occupant compartment 14. The occupant compartment 14 may not be occupied by the occupants, and may accommodate cargo.

Multiple propellers 20 are provided on the airframe 11. The eVTOL 10 is a multicopter including at least three propellers 20. For example, at least six propellers 20 are provided on the airframe 11. The propellers 20 are provided on the airframe main body 12 and the wings 13. Each of the propellers 20 rotates around a propeller axis. The propeller axis is, for example, a center line of the propeller 20. The propeller 20 can generate thrust and lift in the eVTOL 10. The propeller 20 may be referred to as a rotor or a rotary blade.

In the eVTOL 10, by providing multiple propellers 20, balance of the airframe is easily maintained. Even if a propeller output of one of the propellers 20 is unintentionally reduced, the eVTOL 10 can continue to fly using the remaining propellers 20. Examples of the propeller output include a rotational speed, and a torque of the propeller 20.

The propeller 20 includes blades, a boss, and a propeller shaft. The blades are arranged in a circumferential direction of the propeller axis. The boss couples the multiple blades. The propeller shaft is a rotating shaft of the propeller 20 and extends along the propeller axis from the boss.

Examples of a flight mode of the eVTOL 10 include vertical take-off, vertical landing, cruise, and hovering. The flight mode may be referred to as a flight manner. In the vertical take-off, the eVTOL 10 can take off without sliding. In the vertical take-off, the eVTOL 10 may ascend in a vertical direction or may ascend obliquely upward. In the vertical landing, the eVTOL 10 can land without sliding. In the vertical landing, the eVTOL 10 may descend in the vertical direction or may descend obliquely downward.

The cruise may be referred to as horizontal flight. In the cruise, the eVTOL 10 may fly in a horizontal direction without moving in an upper-lower direction, or may fly in the horizontal direction while moving in the upper-lower direction. The hovering may be referred to as stationary flight. In the hovering, the eVTOL 10 may fly as if stopping at a predetermined position in the air, or the eVTOL 10 may deviate from the predetermined position in the upper-lower direction or the horizontal direction.

The flight mode of the eVTOL 10 includes lift. In the lift, the eVTOL 10 moves in the upper-lower direction. As the lift, the eVTOL 10 may ascend obliquely upward or may descend obliquely downward. The eVTOL 10 takes off vertically when lifting upward. The eVTOL 10 lands vertically when lifting downward.

The eVTOL 10 is a tilt-rotor aircraft. In the eVTOL 10, a tilt angle of the propeller 20 is adjustable. In the eVTOL 10, one propeller 20 can function as both a lift-propeller and a cruise-propeller. For example, when the eVTOL 10 is to lift, the tilt angle is adjusted such that the propeller 20 functions as a lift propeller. When the eVTOL 10 is to cruise, the tilt angle is adjusted such that the propeller 20 functions as a cruise propeller. The eVTOL 10 may not be a tilt-rotor aircraft. For example, the eVTOL 10 may include the lift-propeller 20 and the cruise-propeller 20 which are separated.

The eVTOL 10 includes a battery 31, a distributor 32, a communication unit 34, a flight control device 40, and EPUs 50. The battery 31, the distributor 32, the communication unit 34, the flight control device 40, and the EPU 50 are included in the propulsion system 30. The propulsion system 30 may include at least the flight control device 40 and the EPU 50. The flight control device 40 may be referred to as a flight controller.

The battery 31 is electrically connected to the EPUs 50. The battery 31 is a power supplying unit that supplies electric power to the EPUs 50, and corresponds to a power supply unit. The battery 31 is a DC voltage source that applies a DC voltage to the EPUs 50. The battery 31 has a rechargeable secondary battery. Examples of the secondary battery include a lithium-ion battery and a nickel-hydrogen battery. The battery 31 can store electric power and corresponds to a power storage device. In addition to or instead of the battery 31, a fuel cell, a generator, or the like may be used as the power supply unit.

The distributor 32 is electrically connected to the battery 31 and multiple EPUs 50. The distributor 32 distributes the electric power from the battery 31 to the multiple EPUs 50. The battery 31 is electrically connected to the multiple EPUs 50 via the distributor 32. The battery 31 supplies the electric power to the EPUs 50 via the distributor 32.

The communication unit 34 is a communication device capable of performing wireless communication with an external device. The external device is a device located at a position away from the eVTOL 10. Examples of the external device include a communication device provided in an external facility on the ground and a communication device provided in another flight vehicle. Examples of the external facility include a control center, and a management center. The communication unit 34 can communicate with the flight control device 40. The communication unit 34 is connected to the flight control device 40 so as to be capable of performing wired communication. The communication unit 34 may wirelessly communicate with the flight control device 40.

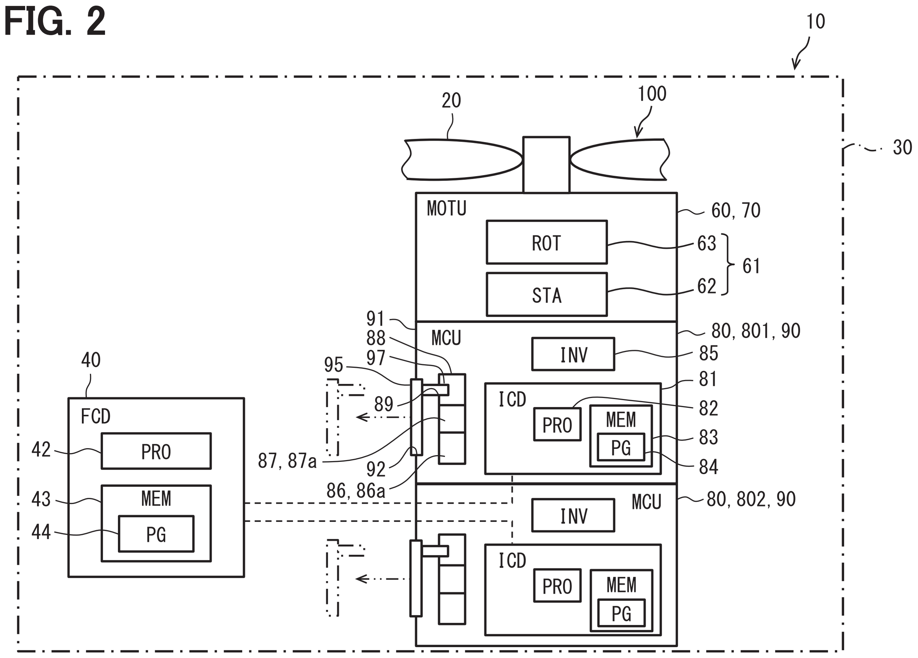

In FIGS. 1 and 2, each of the EPUs 50 is a device for driving the propeller 20 to rotate, and corresponds to a drive device. The EPU is an abbreviation of an electric propulsion unit. The EPU 50 may be referred to as a power drive device or a power drive system. The EPU 50 is provided individually for each of the multiple propellers 20. The EPU 50 is arranged on the propeller 20 along the propeller axis. All of the multiple EPUs 50 are fixed on the airframe 11. The EPU 50 rotatably supports the propeller 20. The EPU 50 is connected to the propeller 20. The propeller 20 is fixed to the airframe 11 with the EPU 50 interposed therebetween.

As shown in FIG. 2, the eVTOL 10 includes a propulsion device 100. The propulsion device 100 includes the propeller 20 and the EPU 50. The propulsion device 100 is a device for propelling the eVTOL 10. The propulsion device 100 rotates the propeller 20 to cause the eVTOL 10 to fly. The eVTOL 10 is also a moving object that moves using the propulsion device 100. Multiple propulsion devices 100 are provided in the eVTOL 10. One propulsion device 100 includes one propeller 20 and one EPU 50 for driving the propeller 20. Only the EPU 50 among the propeller 20 and the EPU 50 may be referred to as the propulsion device 100.

The EPU 50 includes a motor device 60 and an inverter device 80. The motor device 60 includes a motor 61 and a motor housing 70. The motor housing 70 is a case and accommodates the motor 61. The motor 61 is a multi-phase AC motor. The motor 61 is a rotary electric machine of a multi-phase AC type. The motor 61 is a flight driving source of the eVTOL 10 and functions as an electric motor. The motor 61 drives and rotates the propeller 20 to enable the eVTOL 10 to fly. The motor 61 is a flight-motor causing the eVTOL 10 to fly. The EPU 50 drives the propeller 20 to rotate by driving the motor 61. As the motor 61, for example, a brushless motor is used.

The motor 61 includes a motor stator 62 and a motor rotor 63. The motor 61 includes the motor stator 62. The motor stator 62 is a stator and is fixed to the motor housing 70. The motor rotor 63 is rotated relative to the motor stator 62. Rotation of the motor rotor 63 may be referred to as rotation of the motor 61. The motor 61 is, for example, an axial gap-type motor. In the motor 61, the motor stator 62 and the motor rotor 63 are arranged along an axial direction of the motor 61. The motor 61 includes a motor shaft that rotates together with the motor rotor 63. The motor shaft is rotatably supported by the motor housing 70 and the like.

The motor 61 is driven when electric power is supplied to the motor stator 62. The motor stator 62 includes a stator coil. The stator coil is a multi-phase coil. The stator coil forms an armature. When the electric power is supplied to the motor stator 62, a current flows through the stator coil, and thus the motor rotor 63 is rotated. Driving the motor 61 to rotate the motor rotor 63 may be referred to as rotational driving of the motor 61. The rotational driving of the motor 61 may be simply referred to as driving of the motor 61.

The inverter device 80 supplies electric power to the motor device 60 to drive the motor device 60. The inverter device 80 is a driving unit for driving the motor 61, and corresponds to a motor driving unit. The inverter device 80 includes an inverter circuit 85 and an inverter housing 90. The inverter circuit 85 converts the electric power to be supplied to the motor 61. The inverter circuit 85 may be referred to as the inverter, a power conversion unit, or a control circuit. The inverter circuit 85 performs power conversion for each of the multiple phases. The motor 61 is driven in response to a voltage or a current supplied from the inverter circuit 85. The inverter housing 90 is a case, and accommodates the inverter circuit 85 and an inverter control unit 81 which is to be described later. The inverter housing 90 corresponds to a driving housing.

The inverter device 80 includes the inverter control unit 81. The inverter control unit 81 performs motor control via the inverter circuit 85. The motor control is control for driving the motor 61. The inverter control unit 81 performs propulsion control. The propulsion control is control for driving the propulsion device 100. The propulsion control includes the motor control. The propulsion control is also control for controlling the EPU 50, and may be referred to as EPU control.

The inverter control unit 81 includes, for example, an ECU. The ECU is an abbreviation of an electronic control unit. The inverter control unit 81 includes a processor 82, a memory 83, and a program 84. The inverter control unit 81 is mainly implemented by a computer. The computer includes the processor 82, the memory 83, an input/output interface, and a bus connecting these components. The memory 83 stores the program 84. The program 84 is a program for performing the propulsion control. The program 84 corresponds to a propulsion control program.

The processor 82 is hardware for performing an arithmetic process coupled to the memory 83. The processor 82 executes various processes by accessing the memory 83. The memory 83 is a storage medium that stores a control program and the like. For example, the memory 83 is a non-transitory tangible storage medium that non-temporarily stores computer readable programs and data. The non-transitory tangible storage medium is a non-transitory tangible storage medium, and is implemented by a semi-conductor memory, a magnetic disk, or the like. The program 84 includes computer-readable instructions that cause the processor 82 to execute various functions. The processor 82 is a processing unit that executes a predetermined process by executing the instructions in the program 84.

The inverter control unit 81 performs the motor control in response to a required output. The required output is a motor output required to the inverter control unit 81. Examples of the required output include a required torque required for an output torque. The required output is included in a command signal or the like that the flight control device 40 outputs to the inverter control unit 81. The inverter control unit 81 adjusts the motor output according to the required output. The required output or the required torque may be referred to as a target output or a target torque. As the motor output, a torque, a current, a voltage, a motor rotational speed, or the like may be used.

The inverter control unit 81 performs the motor control using the command signal from the flight control device 40, detection signals from various sensors, and the like. The various sensors are communicably connected to the inverter control unit 81. Examples of the various sensors include a motor sensor, a battery sensor, and an inverter sensor. The motor sensor is a temperature sensor or the like provided in the motor device 60. The battery sensor is a temperature sensor or the like provided in the battery 31. The inverter sensor is a temperature sensor or the like provided in the inverter device 80.

The flight control device 40 is communicably connected to the inverter control unit 81. The flight control device 40 and the inverter control unit 81 may perform wireless communication. The flight control device 40 performs integrated control to integrate driving of the multiple propulsion devices 100. In the integrated control, the propulsion control performed by each of the multiple inverter control units 81 is integrated. The flight control device 40 performs flight control. The flight control is control for causing the eVTOL 10 to fly. As the flight control, the flight control device 40 controls the propulsion system 30 and the EPU 50. The flight control is also control for propelling the eVTOL 10, and may be referred to as the propulsion control. The flight control device 40 corresponds to a propulsion control device.

The flight control device 40 includes, for example, an ECU. The flight control device 40 includes a processor 42, a memory 43, and a program 44. The flight control device 40 is mainly implemented by a computer. The computer includes the processor 42, the memory 43, an input/output interface, and a bus connecting these components. The memory 43 stores the program 44. The program 44 is a program for performing the flight control.

The processor 42 is hardware for performing an arithmetic process coupled to the memory 43. The processor 42 executes various processes by accessing the memory 43. The memory 43 is a storage medium that stores a control program and the like. For example, the memory 43 is a non-transitory tangible storage medium that non-temporarily stores computer readable programs and data. The program 44 includes computer-readable instructions that cause the processor 42 to execute various functions. The processor 42 is a processing unit that executes a predetermined process by executing the instructions in the program 44.

The flight control device 40 outputs information necessary for the propulsion control to the inverter control unit 81. The flight control device 40 is a host ECU for the inverter control unit 81. The flight control device 40 individually controls the multiple propulsion devices 100 according to the flight mode or the like of the eVTOL 10. The flight control device 40 is capable of individually adjusting, for each of the propulsion devices 100, an output of the propulsion device 100. For example, the flight control device 40 outputs the required output to each of the multiple propulsion devices 100. The required output is an output required for the propulsion device 100. The required output includes the required torque required for the motor 61. As the required output, the torque, the current, the voltage, the motor rotational speed, or the like may be used.

The flight control device 40 performs the flight control according to a flight state of the eVTOL 10, the detection signals from various sensors, and the like. Examples of the flight state of the eVTOL 10 include a flight mode and a flight attitude of the eVTOL 10. The various sensors are communicably connected to the flight control device 40.

In the present embodiment, the propulsion device 100 includes multiple inverter devices 80. For example, the propulsion device 100 includes a first inverter device 801 and a second inverter device 802, as the inverter devices 80.

In the propulsion device 100, both the inverter devices 801 and 802 control the motor 61. In each of the inverter devices 801 and 802, the inverter circuit 85 supplies the electric power to the motor stator 62. In each of the inverter devices 801 and 802, the inverter control unit 81 performs the motor control. The motor 61 is a motor of 2 × n phases. N is a natural number. One of the inverter devices 801 and 802 drives the motor of n phases and the other drives the motor of the remaining n phases. For example, the motor 61 includes coils of 2 × n phases, as motor coils. In the inverter devices 801 and 802, one inverter circuit 85 supplies electric power to the coils of n phases, and the other inverter circuit 85 supplies electric power to the coils of remaining n phases.

In FIG. 2, the motor device 60 is illustrated as MOTU, the motor stator 62 is illustrated as STA, and the motor rotor 63 is illustrated as ROT. The inverter device 80 is illustrated as MCU, the inverter circuit 85 is illustrated as INV, and the inverter control unit 81 is illustrated as ICD. The processor 82 is illustrated as PRO, the memory 83 is illustrated as MEM, and the program 84 is illustrated as PG. The flight control device 40 is illustrated as FCD, the processor 42 is illustrated as PRO, the memory 43 is illustrated as MEM, and the program 44 is illustrated as PG.

The inverter device 80 includes a P-line 111, an N-line 112, and output lines 113. The P-line 111 and the N-line 112 are electrically connected to the battery 31 and the inverter circuit 85. The P-line 111 is electrically connected to a positive electrode of the battery 31. The N-line 112 is electrically connected to a negative electrode of the battery 31. In the battery 31, the positive electrode is an electrode on a high potential side, and the negative electrode is an electrode on a low potential side. The P-line 111 and the N-line 112 are power lines for supplying the electric power of the battery 31 to the inverter circuit 85. The P-line 111 is a power line on the high potential side and may be referred to as a high potential line. The N-line 112 is a power line on the low potential side and may be referred to as a low potential line.

The output lines 113 are power lines for supplying the electric power from the inverter circuit 85 to the motor 61. Each of the output lines 113 is electrically connected to the motor 61 and the inverter circuit 85. For example, the output line 113 is electrically connected to the motor stator 62.

The inverter device 80 includes a smoothing capacitor 114. The smoothing capacitor 114 is a capacitor that smooths the DC voltage supplied from the battery 31. The smoothing capacitor 114 is connected to the P-line 111 and the N-line 112 between the battery 31 and the inverter circuit 85. The smoothing capacitor 114 is connected in parallel to the inverter circuit 85.

The inverter circuit 85 is a power conversion circuit, for example, a DC-AC conversion circuit. The inverter circuit 85 includes upper and lower arm circuits 115 corresponding to multiple phases. For example, the inverter circuit 85 includes the upper and lower arm circuits 115 respectively for a U-phase, a V-phase, and a W-phase. Each of the upper and lower arm circuits 115 includes an upper arm switch 116 and a lower arm switch 117. The arm switches 116 and 117 are connected in series to the battery 31. The upper arm switch 116 is electrically connected to the P-line 111. The lower arm switch 117 is electrically connected to the N-line 112.

Each of the arm switches 116 and 117 is a transistor such as an MOSFET or an IGBT. The MOSFET is an abbreviation of a metal-oxide-semiconductor field-effect transistor. The IGBT is an abbreviation of an insulated gate bipolar transistor. The arm switches 116 and 117 are switch elements, and can convert the electric power by switching. The switch element is a semi-conductor element such as a power element. The arm switches 116 and 117 are conversion switches for converting the electric power. A freewheeling diode is connected in antiparallel to the arm switches 116 and 117.

The output lines 113 are electrically connected to the upper and lower arm circuits 115 in the multiple phases respectively. Each of the output lines 113 is connected between the upper arm switch 116 and the lower arm switch 117. The inverter circuit 85 of the first inverter device 801 and the inverter circuit 85 of the second inverter device 802 are connected in parallel to the battery 31. Multiple output lines 113 are provided in each of the first inverter device 801 and the second inverter device 802.

As shown in FIG. 2, the inverter housing 90 includes an inverter outer wall 91 and an inverter lid portion 95. The inverter outer wall 91 forms an outer surface and an inner surface of the inverter housing 90. The inverter outer wall 91 is made of a metal material or the like. The inverter outer wall 91 accommodates the inverter circuit 85 and the inverter control unit 81.

The inverter outer wall 91 is provided with an inverter opening portion 92. The inverter opening portion 92 is an opening portion formed in the inverter outer wall 91. For example, the inverter opening portion 92 is provided on an outer peripheral surface of the inverter outer wall 91. The inverter opening portion 92 is an opening portion for maintenance. An operator such as the pilot can perform maintenance of the inverter device 80 by accessing an inside of the inverter device 80 through the inverter opening portion 92.

The inverter lid portion 95 is a lid portion that covers the inverter opening portion 92. The inverter lid portion 95 is made of a metal material or the like. The inverter lid portion 95 can open the inverter opening portion 92. The inverter lid portion 95 can be shifted between an open state where the inverter opening portion 92 is opened and a closed state where the inverter opening portion 92 is closed. The inverter lid portion 95 is normally in the closed state, and is temporarily brought into the open state during maintenance or the like. For example, the inverter lid portion 95 is detachably fixed to the inverter outer wall 91 by a fixture such as a knob bolt. The inverter lid portion 95 is brought into the open state when being detached from the inverter outer wall 91. The inverter lid portion 95 corresponds to a housing lid portion.

The inverter device 80 includes an inverter high-voltage unit 86 and an inverter low-voltage unit 87. The inverter high-voltage unit 86 is a part or a component in the inverter device 80 which is applied with a driving voltage. The driving voltage is a voltage for driving the motor 61. For example, the driving voltage is applied to the P-line 111 as a high voltage. The driving voltage is a voltage higher than a control voltage to be described later. The driving voltage is a voltage applied to the inverter high-voltage unit 86 along with the power supply from the battery 31 to the motor 61. The driving voltage is applied to the output line 113, power terminals of the arm switches 116 and 117, motor coils, and the like.

In the inverter device 80, the inverter high-voltage unit 86 is a portion through which a current flows as the driving voltage is applied. Examples of the inverter high-voltage unit 86 include high-voltage wirings such as bus bars forming the lines 111 to 113, terminal components to which the high-voltage wirings are connected, semi-conductor components forming the arm switches 116 and 117, and capacitor components forming the smoothing capacitors 114. The inverter high-voltage unit 86 corresponds to a driving voltage unit.

The inverter high-voltage unit 86 includes a high-voltage facing portion 86a. The high-voltage facing portion 86a is a portion of the inverter high-voltage unit 86 at a position facing the inverter opening portion 92. The high-voltage facing portion 86a is at least a part of the inverter high-voltage unit 86. In the inverter high-voltage unit 86, at least a part of the high-voltage wirings, at least a part of the terminal components, at least a part of the semi-conductor components, at least a part of the capacitor components, and the like can be the high-voltage facing portion 86a. The high-voltage facing portion 86a is located at a position facing the inverter lid portion 95. The inverter lid portion 95 closes the inverter opening portion 92 to cover the high-voltage facing portion 86a. That is, the inverter lid portion 95 covers the inverter opening portion 92 to hide at least a part of the inverter high-voltage unit 86.

The inverter low-voltage unit 87 is a portion or a component in the inverter device 80 which is applied with a control voltage. The control voltage is a voltage for controlling the driving of the motor 61. For example, the control voltage is applied to the inverter control unit 81 as a low voltage. The control voltage is applied to control terminals of the arm switches 116 and 117. Examples of the inverter low-voltage unit 87 include electronic components such as circuit boards forming the inverter control unit 81, low-voltage wirings such as communication lines, terminal components to which the low-voltage wirings are connected, and sensor components forming various sensors.

The inverter low-voltage unit 87 includes a low-voltage facing portion 87a. The low-voltage facing portion 87a is a portion of the inverter low-voltage unit 87 at a position facing the inverter opening portion 92. The low-voltage facing portion 87a is at least a part of the inverter low-voltage unit 87. In the inverter low-voltage unit 87, at least a part of the electronic components, at least a part of the low-voltage wirings, at least a part of the terminal components, at least a part of the sensor components, and the like can be the low-voltage facing portion 87a. The low-voltage facing portion 87a is located at a position facing the inverter lid portion 95. The inverter lid portion 95 closes the inverter opening portion 92 to cover the low-voltage facing portion 87a. That is, the inverter lid portion 95 covers the inverter opening portion 92 to hide at least a part of the inverter low-voltage unit 87.

When the inverter lid portion 95 is in the open state, the operator can access the inverter high-voltage unit 86 and the inverter low-voltage unit 87 through the inverter opening portion 92. In this case, in the inverter device 80, the high-voltage facing portion 86a and the low-voltage facing portion 87a are exposed to an outside of the inverter device 80 through the inverter opening portion 92. Therefore, the operator can perform maintenance of the inverter high-voltage unit 86 and the inverter low-voltage unit 87 through the inverter opening portion 92. For example, the operator can replace components included in the inverter high-voltage unit 86 and the inverter low-voltage unit 87 through the inverter opening portion 92.

The inverter device 80 includes an opening peripheral portion 88. The opening peripheral portion 88 is a portion provided around the inverter opening portion 92 in the inverter device 80. Examples of the opening peripheral portion 88 include components attached to the high-voltage facing portion 86a, a part of the inverter high-voltage unit 86, components attached to the low-voltage facing portion 87a, and a part of the inverter low-voltage unit 87. The opening peripheral portion 88 may be components attached to the inverter outer wall 91 or a part of the inverter outer wall 91.

In the inverter device 80, an opening-side contact portion 89 of the opening peripheral portion 88 is in contact with a lid-side contact portion 97 of the inverter lid portion 95. The opening-side contact portion 89 is a part of the opening peripheral portion 88. The lid-side contact portion 97 is a part of the inverter lid portion 95. The opening-side contact portion 89 and the lid-side contact portion 97 are in contact with each other when the inverter lid portion 95 is in the closed state, and are separated from each other without being in contact with each other when the inverter lid portion 95 is in the open state.

The opening-side contact portion 89 and the lid-side contact portion 97 are provided at a fitting portion where the opening peripheral portion 88 and the inverter lid portion 95 are fitted. For example, when the inverter lid portion 95 is in the closed state, a projection portion of the inverter lid portion 95 is fitted into a recess portion of the opening peripheral portion 88. The opening-side contact portion 89 is provided on an inner surface of the recess portion in the opening peripheral portion 88. The lid-side contact portion 97 is provided on an outer surface of the projection portion in the inverter lid portion 95. In a state where the projection portion of the inverter lid portion 95 is fitted into the recess portion of the opening peripheral portion 88, the opening-side contact portion 89 and the lid-side contact portion 97 are in contact with each other.

Each of the opening-side contact portion 89 and the lid-side contact portion 97 is made of a metal material or the like and has a conduction property. In a state where the opening-side contact portion 89 and the lid-side contact portion 97 are in contact with each other, the opening-side contact portion 89 and the lid-side contact portion 97 are electrically connected to each other.

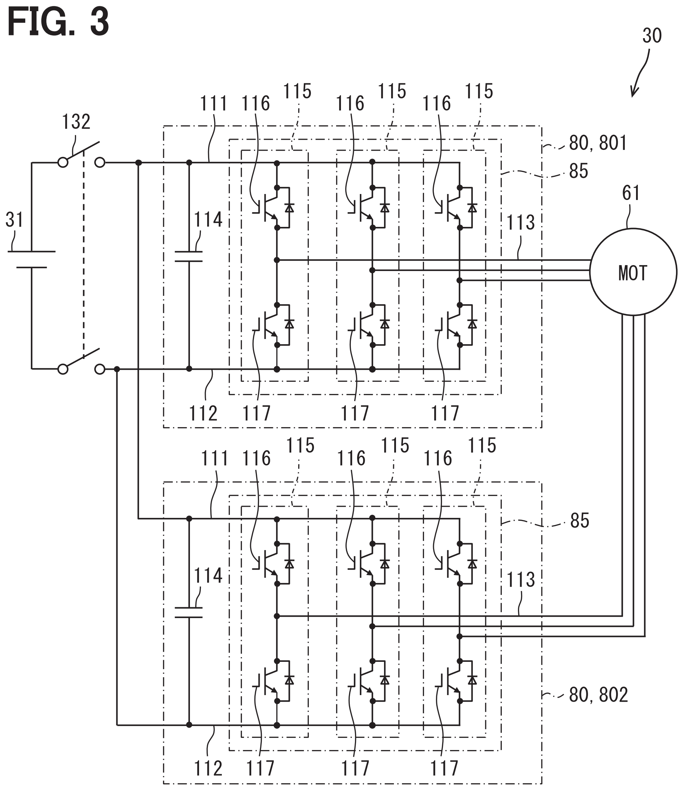

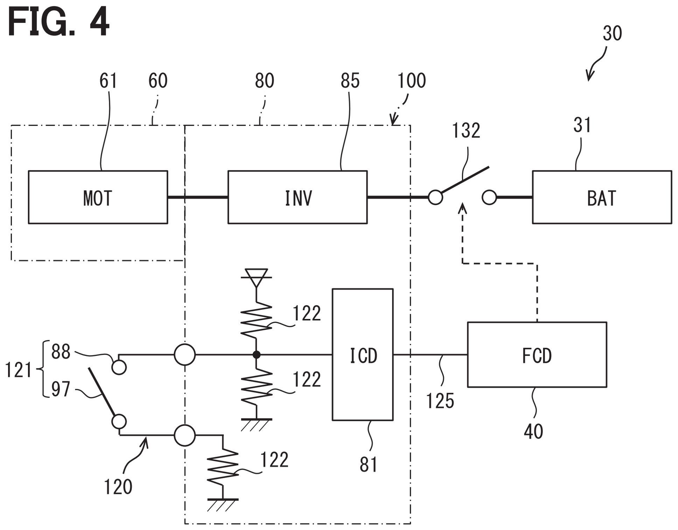

In the propulsion device 100, when the inverter lid portion 95 is opened, the power supply from the battery 31 to the motor 61 is cut off. As shown in FIGS. 3 and 4, the propulsion device 100 includes a power supply switch 132. The power supply switch 132 is a switch such as an SMR. The SMR is an abbreviation of a system main relay. The power supply switch 132 is capable of cutting off the power supply from the battery 31 to the motor 61. The power supply switch 132 is provided between the battery 31 and the inverter circuit 85. The power supply switches 132 are provided respectively to the P-line 111 and the N-line 112.

The power supply switch 132 can be shifted between a switch-on state and a switch-off state. When the power supply switch 132 is in the switch-on state, the electric power is supplied from the battery 31 to the motor 61, and thus the driving voltage is applied to the inverter high-voltage unit 86. When the power supply switch 132 is in the switch-off state, the power supply from the battery 31 to the motor 61 is cut off, and thus application of the driving voltage to the inverter high-voltage unit 86 is stopped.

The power supply switch 132 is individually provided for each of the multiple propulsion devices 100. The power supply switch 132 may be provided integrally with the propulsion device 100 or may be provided independently of the propulsion device 100. In one propulsion device 100, only one power supply switch 132 may be collectively provided for the multiple inverter circuits 85, or the power supply switch 132 may be individually provided for each of the multiple inverter circuits 85. The power supply switch 132 may be provided integrally with the inverter device 80 or may be provided independently of the inverter device 80.

Even when the power supply from the battery 31 to the motor 61 is cut off by the power supply switch 132, the power supply from the battery 31 or the like to the flight control device 40 and the inverter control unit 81 is continued. In this case, the flight control device 40 and the inverter control unit 81 are capable of driving the inverter circuit 85 such that the arm switches 116 and 117 are turned on and off. That is, the flight control device 40 and the inverter control unit 81 are capable of performing the motor control even in a state where the power supply from the battery 31 to the motor 61 is cut off. In FIG. 4, the battery 31 is illustrated as BAT, and the motor 61 is illustrated as MOT.

As shown in FIG. 4, the propulsion device 100 includes a lid detection circuit 120. The lid detection circuit 120 is a circuit that detects the opening of the inverter lid portion 95. The lid detection circuit 120 may be referred to as a lid detection unit. The lid detection circuit 120 is communicably connected to the flight control device 40 via the inverter control unit 81 and a communication path 125. The communication path 125 communicably connects the inverter control unit 81 and the flight control device 40. The lid detection circuit 120 outputs a detection signal corresponding to the state of the inverter lid portion 95. The detection signal of the lid detection circuit 120 is input to the flight control device 40 via the inverter control unit 81. For example, the lid detection circuit 120 inputs a voltage corresponding to the state of the inverter lid portion 95 as the detection signal to the inverter control unit 81.

The lid detection circuit 120 includes a lid switch 121 and detection resistors 122. Each of the detection resistors 122 is implemented by a resistive element or the like. Multiple detection resistors 122 are provided in the lid detection circuit 120. The lid switch 121 is opened and closed according to the opening and closing of the inverter lid portion 95. The lid detection circuit 120 detects a state of the lid switch 121 as the state of the inverter lid portion 95. The lid switch 121 is provided on the inverter housing 90. For example, when the inverter lid portion 95 is in the closed state, the lid switch 121 is in a switch-on state. When the inverter lid portion 95 is in the open state, the lid switch 121 is in a switch-off state.

The lid switch 121 has a function as a contact sensor. In the lid switch 121, contacts of the switch are formed by the opening-side contact portion 89 and the lid-side contact portion 97. When the opening-side contact portion 89 and the lid-side contact portion 97 are in contact with each other, the contacts of the lid switch 121 are in contact with each other. In this case, in the lid detection circuit 120, the lid switch 121 detects that the inverter lid portion 95 is in the closed state. On the other hand, when the opening-side contact portion 89 and the lid-side contact portion 97 are not in contact with each other, the contacts of the lid switch 121 are opened. In this case, in the lid detection circuit 120, the lid switch 121 detects that the inverter lid portion 95 is in the open state.

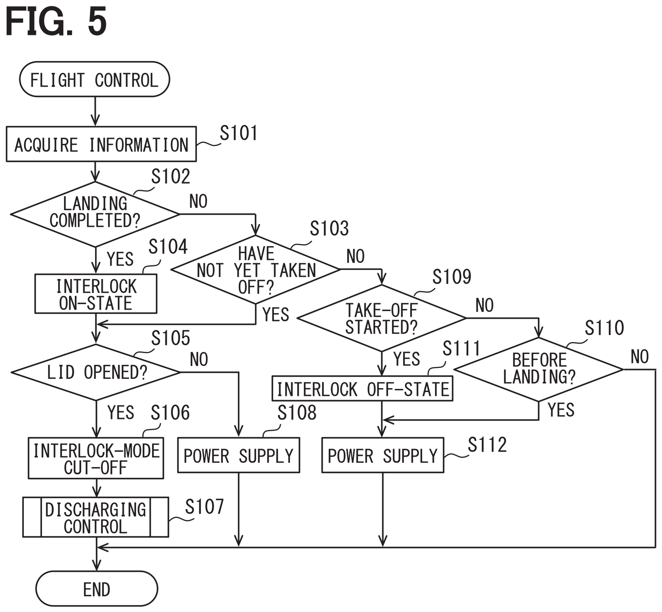

The flight control device 40 performs a flight control process. The flight control process will be described with reference to a flowchart of FIG. 5. The flight control device 40 repeatedly executes the flight control process at a predetermined control cycle.

In step S101 shown in FIG. 5, the flight control device 40 acquires eVTOL information. The eVTOL information is information indicating a state of the eVTOL 10. Examples of the eVTOL information include information indicating the flight state of the eVTOL 10 and information indicating a state of the propulsion device 100. The information indicating the state of the propulsion device 100 includes an opening and closing state of the power supply switch 132, a driving state of the motor 61, and the like. Examples of the eVTOL information include information input from an external device to the flight control device 40 via the communication unit 34.

In step S102, the flight control device 40 determines whether the landing of the eVTOL 10 is completed. Examples of the case where the landing of the eVTOL 10 is completed include a case where at least a part of the eVTOL 10 comes into contact with a ground surface and a case where an attitude of the eVTOL 10 is stabilized after the eVTOL 10 descends to the ground. In the eVTOL 10, the flight ends when the landing is completed. When the landing of the eVTOL 10 is completed, the flight control device 40 determines that the eVTOL 10 is not in flight but is on the ground.

When the landing of the eVTOL 10 is completed, the flight control device 40 proceeds to step S104. In step S104, the flight control device 40 sets interlock of the inverter lid portion 95 to an on-state. That is, the flight control device 40 enables the interlock of the inverter lid portion 95. For example, the flight control device 40 sets a control mode for controlling the propulsion device 100 to an interlock mode. The control mode is a mode for controlling the power supply from the battery 31 to the motor 61. The flight control device 40 performs the motor control according to the control mode. The interlock mode is a mode for switching the power supply switch 132 to the switch-off state when the inverter lid portion 95 is opened. In the interlock mode, the supply of electric power from the battery 31 to the motor 61 is cut off by the power supply switch 132 as the inverter lid portion 95 is opened. A function of executing the process in step S104 in the flight control device 40 corresponds to an interlock unit.

When the control mode is set to the interlock mode as the landing of the eVTOL 10 is completed, the flight control device 40 maintains the control mode in the interlock mode until the eVTOL 10 takes off for a next flight. In FIG. 5 and the like, the interlock is illustrated as IL.

When the landing of the eVTOL 10 is not completed, the flight control device 40 proceeds to step S103. In step S103, the flight control device 40 determines whether the eVTOL 10 has not yet taken off. Examples of the case where the eVTOL 10 has not yet taken off include a case where a part of the eVTOL 10 is still in contact with the ground and a case where the lift generated by the propeller 20 is not large enough to make the attitude of the eVTOL 10 unstable. For the eVTOL 10, having not yet taken off means not being in flight. When the eVTOL 10 has not yet taken off, the flight control device 40 determines that the eVTOL 10 is not in flight but is on the ground. When the eVTOL 10 has not yet taken off, the flight control device 40 proceeds to step S105 while maintaining the control mode in the interlock mode.

The flight control device 40 may determine whether the eVTOL 10 has not yet taken off by determining whether a flight start command has been received. The flight start command is a command for starting the flight of the eVTOL 10. The flight start command is input to the flight control device 40 from a pilot or an external device. The flight control device 40 determines that the eVTOL 10 has not yet taken off, before the flight start command is received. After the flight start command is received, the flight control device 40 determines that the eVTOL 10 has taken off.

When the landing of the eVTOL 10 is completed or when the eVTOL 10 has not yet taken off, the flight control device 40 determines that the eVTOL 10 is on the ground in the interlock mode, and proceeds to step S105. In step S105, the flight control device 40 determines whether the inverter lid portion 95 is in the open state. The detection signal of the lid detection circuit 120 is used for the determination. Examples of the case where the inverter lid portion 95 is in the open state include a case where the operator opens the inverter lid portion 95 for maintenance or the like after the eVTOL 10 completes the landing or has not yet taken off.

When the inverter lid portion 95 is in the open state, the flight control device 40 proceeds to step S106. In step S106, the flight control device 40 performs an interlock-mode cut-off process. In the interlock-mode cut-off process, a process for cutting off the power supply from the battery 31 to the motor 61 according to the opening of the inverter lid portion 95 is performed in a situation where the control mode is the interlock mode. For example, in a situation where the inverter lid portion 95 is shifted from the closed state to the open state, the flight control device 40 shifts the power supply switch 132 from the switch-on state to the switch-off state. In this situation, the application of the driving voltage to the inverter high-voltage unit 86 is stopped. On the other hand, in a situation where the inverter lid portion 95 is continuously in the open state, the flight control device 40 maintains the power supply switch 132 in the switch-off state. In this situation, a state where no driving voltage is applied to the inverter high-voltage unit 86 is maintained.

The flight control device 40 performs a discharging control process in step S107. In the propulsion device 100, after the power supply from the battery 31 to the motor 61 is cut off, residual electric power may remain in the inverter high-voltage unit 86 or the like. The residual electric power is electric power generated by the residual charges remaining in the inverter high-voltage unit 86. For example, the residual electric power tends to remain in a capacitor component such as the smoothing capacitor 114. In the inverter high-voltage unit 86, a residual voltage may be generated due to the residual electric power. When the residual electric power remains in the smoothing capacitor 114, a residual voltage may be generated in the smoothing capacitor 114 due to the residual electric power. The residual voltage generated in the smoothing capacitor 114 may be applied to the lines 111 to 113, the arm switches 116 and 117, and the like.

In the discharging control process, a process for discharging the residual charges from the inverter high-voltage unit 86 is performed. By performing the discharging control process, for example, the residual electric power in the smoothing capacitor 114 is discharged. In the inverter high-voltage unit 86, the residual charges flow as a discharging current to the motor 61, and thus the residual electric power is discharged by the motor 61. A function of executing the process in step S107 in the flight control device 40 corresponds to a discharging execution unit. As the time elapses, the residual electric power decreases due to natural discharging in the inverter high-voltage unit 86. In the discharging control process, the residual charges in the inverter high-voltage unit 86 are forcibly discharged such that the residual electric power in the inverter high-voltage unit 86 is eliminated with a time shorter than that in the natural discharging. The discharging control process in step S107 will be described later.

When the inverter lid portion 95 is not in the open state, the flight control device 40 determines that the inverter lid portion 95 is in the closed state, and proceeds to step S108. In step S108, the flight control device 40 performs a power supply process in the interlock mode. In the power supply process in the interlock mode, a process for supplying the electric power from the battery 31 to the motor 61 is performed. For example, in a situation where the inverter lid portion 95 is shifted from the open state to the closed state, the flight control device 40 shifts the power supply switch 132 from the switch-off state to the switch-on state. On the other hand, when the inverter lid portion 95 is continuously in the closed state, the flight control device 40 maintains the power supply switch 132 in the switch-on state.

When the eVTOL 10 is in flight in steps S102 and S103, the flight control device 40 proceeds to step S109. In step S109, the flight control device 40 determines whether take-off of the eVTOL 10 is started. Examples of the case where the take-off of the eVTOL 10 is started include a case where at least a part of the eVTOL 10 floats and a case where the lift generated by the propeller 20 is large enough to make the attitude of the eVTOL 10 unstable. The take-off of the eVTOL 10 being started means that the eVTOL 10 is in flight. When the take-off of the eVTOL 10 is started, the flight control device 40 determines that the eVTOL 10 is not on the ground and is in flight.

When the take-off of the eVTOL 10 is started, the flight control device 40 proceeds to step S111. In step S111, the flight control device 40 sets the interlock of the inverter lid portion 95 to an off-state. That is, the flight control device 40 disables the interlock of the inverter lid portion 95. For example, the flight control device 40 sets the control mode to an interlock release mode. The interlock release mode is a mode for maintaining the power supply switch 132 in the switch-on state even if the inverter lid portion 95 is opened. In the interlock release mode, even if the inverter lid portion 95 is opened, the power supply from the battery 31 to the motor 61 is continued without being cut off. The interlock release mode corresponds to a continuation mode. A function of executing the process in step S111 in the flight control device 40 corresponds to an interlock release unit.

When the control mode is set to the interlock release mode as the take-off of the eVTOL 10 is started, the flight control device 40 maintains the control mode in the interlock release mode until the eVTOL 10 lands on a destination or the like after a current flight is completed. Examples of the state where the interlock is disabled by the interlock release mode include a state where the flight control device 40 acquires the opening and closing of the inverter lid portion 95 and a state where the flight control device 40 does not acquire the opening and closing of the inverter lid portion 95. In the interlock release mode, regardless of whether the flight control device 40 acquires the opening and closing of the inverter lid portion 95, the power supply switch 132 is maintained in the switch-on state even if the lid detection circuit 120 erroneously detects the opening of the inverter lid portion 95. In the state where the flight control device 40 does not acquire the opening and closing of the inverter lid portion 95, the flight control device 40 may or may not acquire the detection signal of the lid detection circuit 120.

When the take-off of the eVTOL 10 is not started, the flight control device 40 proceeds to step S110. In step S110, the flight control device 40 determines whether the eVTOL 10 is before landing. Examples of the case where the eVTOL 10 is before landing include a case where the eVTOL 10 has not yet come into contact with the ground and a case where the lift generated by the propeller 20 is still large enough to make the attitude of the eVTOL 10 unstable even when the eVTOL 10 has fallen on the ground. For the eVTOL 10, being before landing means being in flight. When the eVTOL 10 is before landing, the flight control device 40 determines that the eVTOL 10 is not on the ground and is in flight. When the eVTOL 10 is before landing, the flight control device 40 proceeds to step S112 while maintaining the control mode in the interlock release mode.

When the take-off of the eVTOL 10 is started or when the eVTOL 10 is before landing, the flight control device 40 determines that the eVTOL 10 is in flight in the interlock release mode, and proceeds to step S112. In step S112, the flight control device 40 performs the power supply process in the interlock release mode. In the power supply process in the interlock release mode, a process for supplying the electric power from the battery 31 to the motor 61 is performed regardless of the opening and closing state of the inverter lid portion 95. That is, the power supply switch 132 is maintained in the switch-on state regardless of the detection signal of the lid detection circuit 120, and thus the state where the driving voltage is applied to the inverter high-voltage unit 86 is maintained.

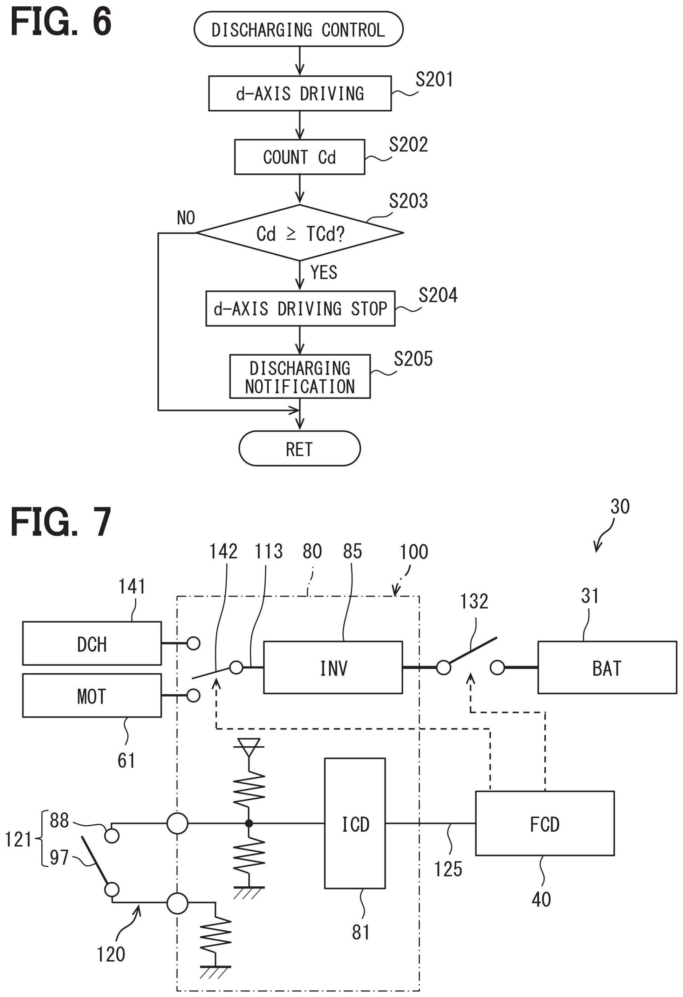

Next, the discharging control process will be described with reference to a flowchart of FIG. 6. In step S201 shown in FIG. 6, the flight control device 40 performs a d-axis driving process. In the d-axis driving process, a process for discharging the residual electric power in the inverter high-voltage unit 86 to the motor 61 is performed. In the d-axis driving process, a discharging current flows from the inverter high-voltage unit 86 to the motor coil, and thus the residual electric power in the inverter high-voltage unit 86 is discharged. A function of executing the process in step S201 in the flight control device 40 corresponds to a motor discharging unit.

In the propulsion device 100, vector control is performed as the motor control. For example, the flight control device 40 performs the motor control via the inverter control unit 81. The flight control device 40 controls a current vector in a dq coordinate system, as the vector control. In the vector control, a d-axis current and a q-axis current are used. The current vector is a current flowing through the motor 61 and may be referred to as a motor current. The d-axis current is a component in the current vector for generating a magnetic flux. The q-axis current is a component in the current vector for generating torque.

In the d-axis driving process, the flight control device 40 discharges the residual electric power in the inverter high-voltage unit 86 such that the propeller 20 is not rotated. In the d-axis driving process, the discharging current is controlled such that the motor 61 does not generate torque for rotating the propeller 20. For example, the flight control device 40 performs vector control to perform d-axis energization, thereby driving the motor 61 in a d-axis by the discharging current. In the d-axis energization, only the d-axis current among the d-axis current and the q-axis current is output to the motor 61 in order to prevent the motor rotor 63 from rotating. The flight control device 40 performs the d-axis energization by controlling the inverter circuit 85 such that the torque of the motor 61 and the q-axis current are zero. A function of executing the process in step S201 in the flight control device 40 corresponds to a stationary discharging unit.

In step S202, the flight control device 40 counts a discharging counter Cd. The flight control device 40 increments the discharging counter Cd by a predetermined addition value. The addition value may be referred to as a count-up amount. For example, the flight control device 40 increments the discharging counter Cd by 1 with the addition value set to 1. A count value of the discharging counter Cd indicates discharging duration of the inverter high-voltage unit 86 in the d-axis driving process. In the propulsion device 100, as the discharging counter Cd increases, the discharging of the inverter high-voltage unit 86 progresses, and the residual electric power in the inverter high-voltage unit 86 tends to decrease. The discharging counter Cd is set in the memory 43 or the like.

In step S203, the flight control device 40 determines whether the discharging counter Cd has reached a counter threshold TCd. The counter threshold TCd is a value determined in advance in a test or the like, and is stored in the memory 43 or the like. The counter threshold TCd is a value indicating an upper limit time of the discharging duration in the d-axis driving process, and is a value indicating a time required to complete the discharging of the inverter high-voltage unit 86 by the d-axis driving process. For example, the counter threshold TCd is a value indicating a time required for the residual electric power in the inverter high-voltage unit 86 to become zero. When the discharging counter Cd reaches the counter threshold TCd, the flight control device 40 determines that the residual electric power in the inverter high-voltage unit 86 becomes zero. In the inverter high-voltage unit 86, the residual voltage also becomes zero as the residual electric power becomes zero.

When the discharging counter Cd reaches the counter threshold TCd, the flight control device 40 determines that the discharging of the inverter high-voltage unit 86 is completed, and proceeds to step S204. In step S204, the flight control device 40 performs a d-axis driving stop process. In the d-axis driving stop process, a process for ending the d-axis driving process is performed. In the d-axis driving stop process, the driving of the inverter circuit 85 is stopped. For example, the flight control device 40 stops the driving of the arm switches 116 and 117 such that electrical conduction between the inverter high-voltage unit 86 and the motor 61 is cut off. The flight control device 40 may stop the driving of the arm switches 116 and 117 such that the inverter high-voltage unit 86 and the motor 61 are in an electrically conducted state.

In step S205, the flight control device 40 performs a discharging notification process. In the discharging notification process, a process for notifying that the residual electric power in the inverter high-voltage unit 86 is discharged is performed. For example, in the discharging notification process, a pilot, an external facility, or the like is notified that the inverter high-voltage unit 86 is discharged by the d-axis energization, the discharging of the inverter high-voltage unit 86 is completed, or the like.

According to the present embodiment described above, when the control mode is the interlock mode, the flight control device 40 stops the application of the driving voltage to the inverter high-voltage unit 86 as the inverter lid portion 95 is opened. In this case, even if the inverter high-voltage unit 86 is exposed from the inverter opening portion 92, a decrease in safety of the operator or the like can be limited. For example, when the operator simply opens the inverter lid portion 95 for maintenance or the like, the application of the driving voltage to the inverter high-voltage unit 86 is stopped. Therefore, the operator can be prevented from touching the inverter high-voltage unit 86 to which the driving voltage is applied.

The flight control device 40 releases the interlock mode when the eVTOL 10 is in flight. In this case, even if the inverter lid portion 95 is unintentionally opened, the power supply from the battery 31 to the motor 61 is not cut off by the interlock mode. Therefore, a decrease in safety of the eVTOL 10 due to an insufficient propulsive force of the eVTOL 10 or the like caused by the inverter lid portion 95 being opened can be prevented.

When the eVTOL 10 is in flight, a situation where an occupant such as the pilot touches the propulsion device 100 hardly occurs. Therefore, even if the inverter lid portion 95 is opened unintentionally, a risk of the occupant touching the inverter high-voltage unit 86 to which the driving voltage is applied tends to be low. Accordingly, in a situation where the eVTOL 10 is flying, overall safety of the occupant can be enhanced by preferentially limiting the insufficiency of the propulsive force of the eVTOL 10 rather than the occupant touching the inverter high-voltage unit 86. In this way, by setting and releasing the interlock mode, the safety of the eVTOL 10 can be enhanced.

According to the present embodiment, the flight control device 40 releases the interlock mode by setting the control mode to the interlock release mode. In the interlock release mode, even if the inverter lid portion 95 is opened, the power supply from the battery 31 to the motor 61 is continued. Therefore, unintentional stop of the power supply from the battery 31 to the motor 61 caused by the opening of the inverter lid portion 95 can be prevented by the interlock release mode.

According to the present embodiment, the flight control device 40 releases the interlock mode in response to the take-off of the eVTOL 10. In the configuration, a situation where the interlock mode is enabled during the flight of the eVTOL 10 is avoided. That is, a situation where the control mode remains set to the interlock mode although the eVTOL 10 takes off is avoided. Therefore, the cut-off of the power supply from the battery 31 to the motor 61 caused by the unintended opening of the inverter lid portion 95 can be reliably prevented.

In the interlock mode, the power supply switch 132 is maintained in the switch-on state regardless of the detection signal of the lid detection circuit 120. Therefore, even if the lid detection circuit 120 malfunctions, the cut-off of the power supply from the battery 31 to the motor 61 by the power supply switch 132 can be prevented.

According to the present embodiment, the flight control device 40 sets the control mode to the interlock mode in response to the landing of the eVTOL 10. In the configuration, a situation where the interlock mode is disabled after the landing of the eVTOL 10 is avoided. That is, a situation where the control mode remains set to the interlock release mode although the eVTOL 10 is not flying can be avoided. Therefore, a situation where the driving voltage is applied to the inverter high-voltage unit 86 although the operator such as the pilot opens the inverter lid portion 95 after the landing of the eVTOL 10 can be reliably prevented.

According to the present embodiment, the flight control device 40 maintains the interlock mode when the eVTOL 10 is on the ground. In this case, a situation where the control mode is not set to the interlock mode in a state where the eVTOL 10 is not flying such as during maintenance of the eVTOL 10 can be avoided. Therefore, a situation where the driving voltage is applied to the inverter high-voltage unit 86 although the operator opens the inverter lid portion 95 during the maintenance can be reliably prevented.

According to the present embodiment, the flight control device 40 discharges the inverter high-voltage unit 86 when the control mode is the interlock mode and the power supply from the battery 31 to the motor 61 is cut off as the inverter lid portion 95 is opened. In the configuration, when the inverter lid portion 95 is opened, the residual electric power in the inverter high-voltage unit 86 can be forcibly discharged in a time shorter than that in the natural discharging. In this case, a risk of the operator touching the inverter high-voltage unit 86 in a state where the residual electric power remains in the inverter high-voltage unit 86 can be reduced. In this case, a waiting time until the discharging of the inverter high-voltage unit 86 is completed can be shortened as compared with that of the natural discharging. Accordingly, during the maintenance or the like of the eVTOL 10, both of improvement in the safety of the operator and shortening of a working time including the waiting time can be achieved.

According to the present embodiment, the flight control device 40 discharges the residual electric power in the inverter high-voltage unit 86 to the motor 61. In the configuration, the inverter high-voltage unit 86 can be discharged without using a dedicated circuit for discharging the residual charges of the inverter high-voltage unit 86. Therefore, it is not necessary to provide, in the propulsion device 100, a dedicated circuit for discharging the inverter high-voltage unit 86. Accordingly, the safety of the eVTOL 10 can be enhanced while avoiding an increase in size of the propulsion device 100 by an amount corresponding to the dedicated circuit.

According to the present embodiment, the flight control device 40 discharges the residual electric power in the inverter high-voltage unit 86 to the motor 61 such that the propeller 20 is not rotated, by performing the d-axis energization of the motor 61. In the configuration, a situation where the propeller 20 is rotated by the residual electric power in the inverter high-voltage unit 86 although the power supply from the battery 31 to the motor 61 is cut off by the power supply switch 132 can be avoided. That is, a configuration in which the propeller 20 is not rotated even if the motor 61 is driven can be implemented by the d-axis driving of the motor 61. Therefore, a decrease in the safety of the eVTOL 10 due to the rotation of the propeller 20 caused by the discharging of the inverter high-voltage unit 86 can be prevented.

For example, when the propeller 20 is rotated due to the discharging of the inverter high-voltage unit 86, there are concerns that the lift is generated as the propeller 20 is rotated and the attitude of the eVTOL 10 becomes unstable, or the operator easily comes into contact with the propeller 20 that is rotating. Meanwhile, in the present embodiment, the propeller 20 is not rotated accompanying the discharging of the inverter high-voltage unit 86, and thus the concerns can be eliminated.

In the present embodiment, when the inverter lid portion 95 is opened, the inverter high-voltage unit 86 and the inverter low-voltage unit 87 are exposed from the inverter opening portion 92. Therefore, there is a concern that the operator may touch the inverter high-voltage unit 86 when the operator performs replacement work of an electronic component or the like from the inverter opening portion 92 as maintenance of the inverter low-voltage unit 87. Meanwhile, according to the present embodiment, in the interlock mode, the application of the driving voltage to the inverter high-voltage unit 86 is stopped as the inverter lid portion 95 is opened. Therefore, even if the operator touches the inverter high-voltage unit 86 when performing the maintenance of the inverter low-voltage unit 87, no driving voltage is applied to the inverter high-voltage unit 86. Therefore, a decrease in the safety of the operator caused by the inverter high-voltage unit 86 when the operator performs the maintenance of the inverter low-voltage unit 87 can be limited.

### <Second Embodiment>

In the first embodiment, the residual electric power in the inverter high-voltage unit 86 is discharged to the motor 61. Meanwhile, in a second embodiment, the residual electric power in the inverter high-voltage unit 86 is discharged to a dedicated circuit. Configurations, operations, and effects not particularly described in the second embodiment are the same as those in the first embodiment. In the second embodiment, differences from the first embodiment will be mainly described.

As shown in FIG. 7, the propulsion system 30 includes a discharging circuit 141 and a first selection switch 142. The discharging circuit 141 is a circuit for discharging the residual electric power in the inverter high-voltage unit 86. The discharging circuit 141 includes a resistive element, a capacitor element, and the like. The discharging circuit 141 is a dedicated circuit for discharging the inverter high-voltage unit 86. The discharging circuit 141 is an electric circuit different from the motor 61. The discharging circuit 141 is provided in the propulsion device 100. For example, the discharging circuit 141 is accommodated in the inverter housing 90. The discharging circuit 141 may be provided independently of the propulsion device 100. In FIG. 7, the discharging circuit 141 is illustrated as DCH.

The discharging circuit 141 is electrically connected to the inverter high-voltage unit 86. The discharging circuit 141 is electrically connected to the inverter high-voltage unit 86 between the inverter high-voltage unit 86 and the motor 61. That is, the discharging circuit 141 is electrically connected to the inverter circuit 85 between the inverter circuit 85 and the motor 61. The discharging circuit 141 is connected to the multiple output lines 113. For example, the discharging circuit 141 is connected to a first line and a second line among the multiple output lines 113 so as to allow conduction of the first line and the second line. The first line and the second line are different output lines 113. In the propulsion device 100, a discharging current flows from the inverter high-voltage unit 86 to the discharging circuit 141, and thus the residual electric power in the inverter high-voltage unit 86 is discharged to the discharging circuit 141.

The discharging circuit 141 is connected to the smoothing capacitor 114 via the inverter circuit 85. In the inverter high-voltage unit 86, when the inverter circuit 85 is in a dischargeable state, the residual electric power in the smoothing capacitor 114 can be discharged to the motor 61 through the inverter circuit 85. The dischargeable state is a state where the inverter circuit 85 electrically connects the smoothing capacitor 114 and the motor 61. For example, in the dischargeable state, both the upper arm switch 116 connected to one of the first line and the second line and the lower arm switch 117 connected to the other line are in a switch-on state. In this state, the residual electric power in the smoothing capacitor 114 is discharged to the motor 61 through the first line and the second line.

The discharging circuit 141 is formed such that a time required for the discharging circuit 141 to discharge the inverter high-voltage unit 86 is shorter than the time required for the motor 61 to discharge the inverter high-voltage unit 86. For example, the discharging circuit 141 is formed such that the discharging current flowing from the inverter high-voltage unit 86 to the discharging circuit 141 is larger than the discharging current flowing from the inverter high-voltage unit 86 to the motor 61. The time required for the discharging by the discharging circuit 141 is shorter than a time required for the discharging by the d-axis energization in the first embodiment. The time required for the discharging by the discharging circuit 141 may be shorter than a time required for discharging accompanying the rotation of the motor 61 in a fourth embodiment to be described later. The time required for the discharging by the discharging circuit 141 may be shorter than a time required for discharging accompanying the rotation of the propeller 20 in a fifth embodiment to be described later.

The first selection switch 142 is capable of cutting off the electric conduction between the inverter high-voltage unit 86 and the motor 61. The first selection switch 142 is provided between the inverter high-voltage unit 86 and the motor 61. The first selection switch 142 is provided in the output line 113. For example, the first selection switch 142 is capable of cutting off at least one of the first line and the second line.

The first selection switch 142 is capable of selectively connecting only one of the motor 61 and the discharging circuit 141 to the inverter high-voltage unit 86. The first selection switch 142 can be shifted between a first state and a second state. When being in the first state, the first selection switch 142 electrically connects the motor 61 and the inverter high-voltage unit 86, and cuts off the electric conduction between the discharging circuit 141 and the inverter high-voltage unit 86. When being in the second state, the first selection switch 142 electrically connects the discharging circuit 141 and the inverter high-voltage unit 86, and cuts off the electric conduction between the motor 61 and the inverter high-voltage unit 86. The first selection switch 142 is provided in the propulsion device 100. For example, the first selection switch 142 is accommodated in the inverter housing 90. The first selection switch 142 may be provided independently of the propulsion device 100.

In the propulsion device 100, when the first selection switch 142 is in the second state, the residual electric power in the inverter high-voltage unit 86 is discharged to the discharging circuit 141 through the first selection switch 142. In the propulsion device 100, when the first selection switch 142 is in the second state and the inverter circuit 85 is in the dischargeable state, the residual electric power in the smoothing capacitor 114 is discharged to the discharging circuit 141 through the first selection switch 142 and the inverter circuit 85. The first selection switch 142 may be referred to as a discharging switch for discharging the inverter high-voltage unit 86.

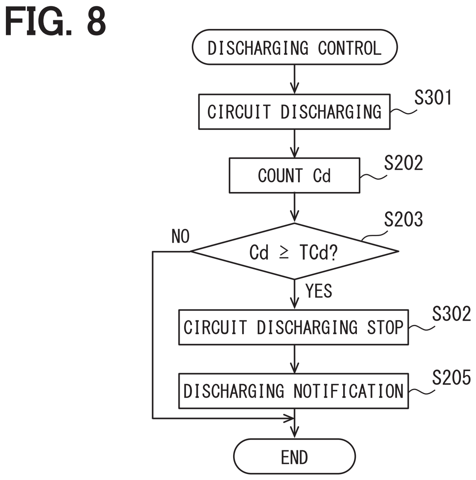

The flight control device 40 performs the discharging control process, as in the first embodiment. In the present embodiment, the discharging control process in the flight control process will be described with reference to a flowchart of FIG. 8.

The flight control device 40 performs a circuit discharging process in step S301 shown in FIG. 8. In the circuit discharging process, a process for discharging the residual electric power in the inverter high-voltage unit 86 to the discharging circuit 141 is performed. In the circuit discharging process, the flight control device 40 switches the first selection switch 142 to the second state and switches the inverter circuit 85 to a chargeable state. Accordingly, a discharging current flows from the inverter high-voltage unit 86 to the discharging circuit 141 through the first selection switch 142, and thus the inverter high-voltage unit 86 is discharged. In the inverter high-voltage unit 86, a discharging current flows from the smoothing capacitor 114 to the discharging circuit 141 through the inverter circuit 85 and the first selection switch 142, and thus the smoothing capacitor 114 is discharged. A function of executing the process in step S301 in the flight control device 40 corresponds to a circuit discharging unit.

After step S301, the flight control device 40 performs processes in steps S202 and S203, as in the first embodiment. However, in the present embodiment, the count value of the discharging counter Cd indicates discharging duration of the inverter high-voltage unit 86 in the circuit discharging process. The counter threshold TCd is a value indicating an upper limit time of the discharging duration in the circuit discharging process, and is a value indicating a time required to complete the discharging of the inverter high-voltage unit 86 by the circuit discharging process.

When the discharging counter Cd reaches the counter threshold TCd, the flight control device 40 determines that the discharging of the inverter high-voltage unit 86 is completed, and proceeds to step S302. In step S302, the flight control device 40 performs a circuit discharging stop process. In the circuit discharging stop process, a process for ending the circuit discharging process is performed. In the circuit discharging stop process, the electrical connection between the inverter high-voltage unit 86 and the discharging circuit 141 is cut off. For example, the flight control device 40 switches the first selection switch 142 to the first state. In the circuit discharging stop process, the driving of the inverter circuit 85 may be stopped in a state where the first selection switch 142 is switched to the first state, similar to the d-axis driving stop process of the first embodiment.

After step S302, the flight control device 40 proceeds to step S205, and performs the discharging notification process, as in the first embodiment. In the discharging notification process, it is notified that the inverter high-voltage unit 86 is discharged by the discharging circuit 141.

According to the present embodiment, the flight control device 40 discharges the residual electric power in the inverter high-voltage unit 86 to the discharging circuit 141. In the configuration, since the discharging circuit 141 is a dedicated circuit for discharging, the inverter high-voltage unit 86 can be discharged quickly. For example, the time required for the discharging circuit 141 to discharge the inverter high-voltage unit 86 can be shorter than the time required for the motor 61 to discharge the inverter high-voltage unit 86. Therefore, a risk of the operator touching the inverter high-voltage unit 86 in a state where the residual electric power remains in the inverter high-voltage unit 86 after the inverter lid portion 95 is opened can be reduced by the discharging circuit 141.

### <Third Embodiment>

In the second embodiment, the discharging circuit 141 is connected between the motor 61 and the inverter circuit 85. Meanwhile, in a third embodiment, the discharging circuit 141 is connected between the inverter circuit 85 and the battery 31. Configurations, operations, and effects not particularly described in the third embodiment are the same as those in the second embodiment. In the third embodiment, differences from the second embodiment will be mainly described.

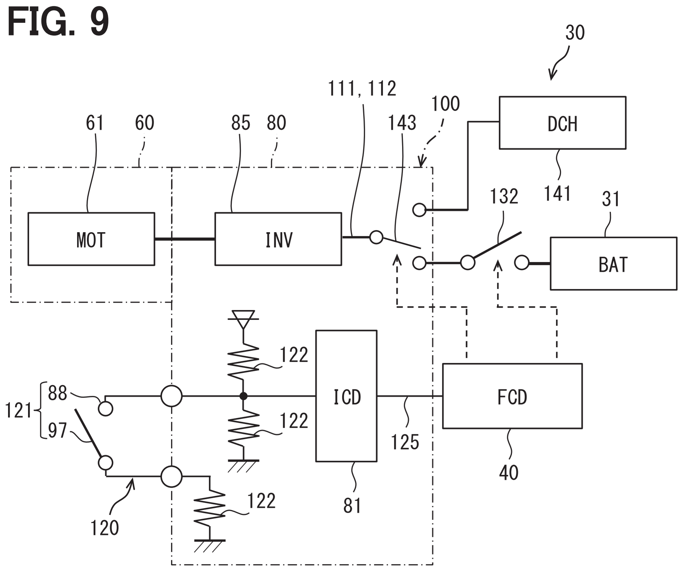

As shown in FIG. 9, the discharging circuit 141 is electrically connected to the inverter circuit 85 between the inverter circuit 85 and the battery 31. That is, the discharging circuit 141 is electrically connected to the inverter high-voltage unit 86 between the inverter high-voltage unit 86 and the battery 31. The discharging circuit 141 is connected to at least the P-line 111 among the P-line 111 and the N-line 112. For example, the discharging circuit 141 is connected to the P-line 111 and the N-line 112 to enable electric conduction between the P-line 111 and the N-line 112. The discharging circuit 141 is connected between the smoothing capacitor 114 and the power supply switch 132.

In the present embodiment, the propulsion system 30 includes a second selection switch 143. The second selection switch 143 is capable of cutting off the electric conduction between the battery 31 and the inverter high-voltage unit 86. The second selection switch 143 is provided between the battery 31 and the inverter high-voltage unit 86. The second selection switch 143 is provided in at least one of the P-line 111 and the N-line 112. For example, the second selection switch 143 is capable of cutting off both the P-line 111 and the N-line 112.

The second selection switch 143 is capable of selectively connecting only one of the battery 31 and the discharging circuit 141 to the inverter high-voltage unit 86. When being in the first state, the second selection switch 143 electrically connects the battery 31 and the inverter high-voltage unit 86, and cuts off the electric conduction between the discharging circuit 141 and the inverter high-voltage unit 86. When being in the second state, the second selection switch 143 electrically connects the discharging circuit 141 and the inverter high-voltage unit 86, and cuts off the electric conduction between the battery 31 and the inverter high-voltage unit 86.

In the propulsion device 100, when the second selection switch 143 is in the second state, the residual electric power in the inverter high-voltage unit 86 is discharged to the discharging circuit 141 through the second selection switch 143. In this case, the residual electric power in the smoothing capacitor 114 is discharged to the discharging circuit 141 through the second selection switch 143. In the present embodiment, since the discharging circuit 141 is electrically connected to the smoothing capacitor 114 without passing through the inverter circuit 85, the discharging current flows from the smoothing capacitor 114 to the discharging circuit 141 regardless of whether the inverter circuit 85 is in the dischargeable state. The second selection switch 143 may be referred to as the discharging switch for discharging the inverter high-voltage unit 86.

In the present embodiment, the discharging control process is performed, as in the second embodiment. For example, the flight control device 40 performs the circuit discharging process in step S301 of the discharging control process, as in the second embodiment. In the circuit discharging process, the flight control device 40 switches the second selection switch 143 to the second state. Accordingly, the discharging current flows from the inverter high-voltage unit 86 to the discharging circuit 141 through the second selection switch 143, and thus the inverter high-voltage unit 86 is discharged. In the inverter high-voltage unit 86, the discharging current flows from the smoothing capacitor 114 to the discharging circuit 141 through the second selection switch 143, and thus the smoothing capacitor 114 is discharged. In the inverter high-voltage unit 86, since a discharging current flows from the smoothing capacitor 114 to the discharging circuit 141 without passing through the inverter circuit 85, the flight control device 40 does not need to shift the inverter circuit 85 to the dischargeable state when discharging the inverter high-voltage unit 86.

In the present embodiment, the second selection switch 143 may be connected between the power supply switch 132 and the battery 31. In the configuration, when the inverter high-voltage unit 86 is discharged by the discharging circuit 141, the flight control device 40 needs to switch the second selection switch 143 to the second state and set the power supply switch 132 to the switch-on state.

### <Fourth Embodiment>

In the first embodiment, the inverter high-voltage unit 86 is discharged by performing the d-axis driving of the motor 61 such that the motor rotor 63 is not rotated. Meanwhile, in a fourth embodiment, the inverter high-voltage unit 86 is discharged by performing the rotational driving of the motor 61 such that the motor rotor 63 is rotated. Configurations, operations, and effects not particularly described in the fourth embodiment are the same as those in the first embodiment. In the fourth embodiment, differences from the first embodiment will be mainly described.

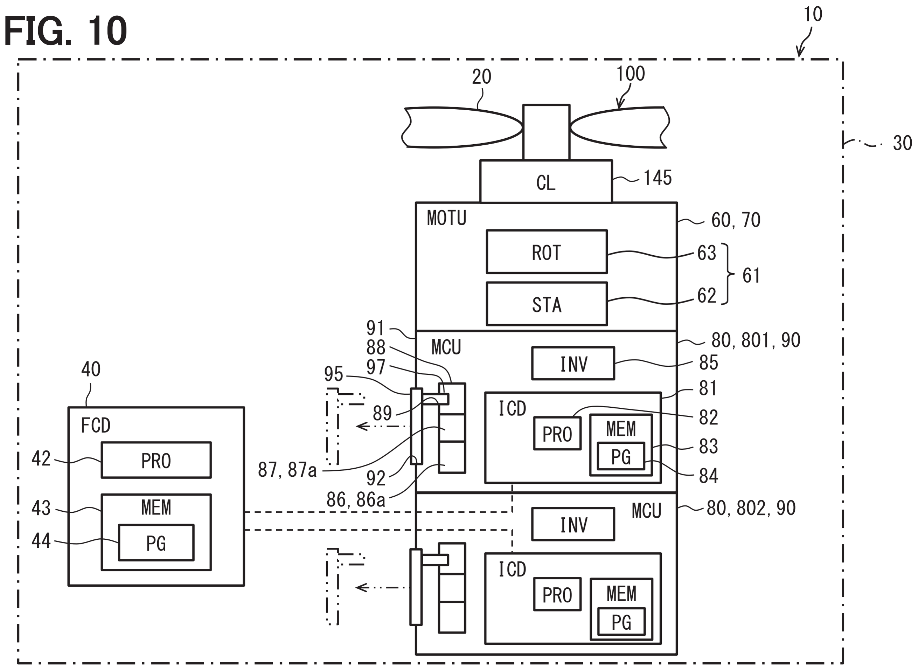

As shown in FIG. 10, the propulsion system 30 includes a clutch 145. The clutch 145 is capable of cutting off transmission of the rotation of the motor rotor 63 to the propeller 20. The clutch 145 is provided between the motor rotor 63 and the propeller 20. For example, the clutch 145 is provided between the motor shaft and the propeller shaft. The clutch 145 includes a one-way clutch, an electromagnetic clutch, and the like.

The clutch 145 is capable of being shifted between a transmission state and a disconnection state. When the clutch 145 is in the transmission state, the torque of the motor 61 is transmitted to the propeller 20. In this case, the propeller 20 is rotated by the torque of the motor 61. When the clutch 145 is in the disconnection state, the torque of the motor 61 is not transmitted to the propeller 20. In this case, the propeller 20 is not rotated even when the motor 61 is rotationally driven. That is, the motor 61 idles with respect to the propeller 20.

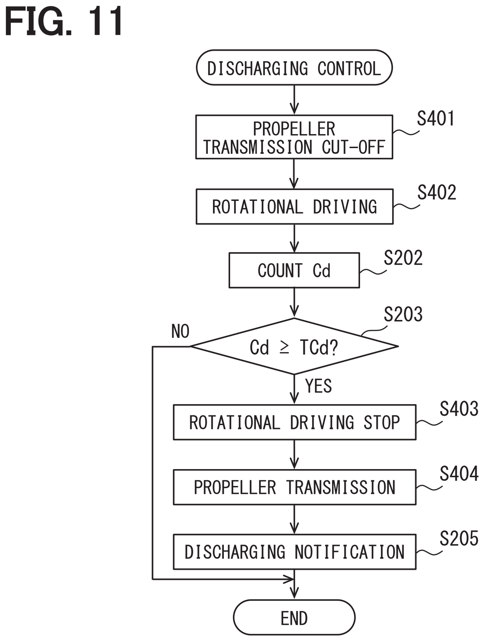

In the present embodiment, the discharging control process will be described with reference to a flowchart of FIG. 11.

The flight control device 40 performs a motor idling process in steps S401 and S402 shown in FIG. 11. In the motor idling process, the motor 61 idles with respect to the propeller 20 to discharge the residual electric power in the inverter high-voltage unit 86 to the motor 61. In the motor idling process, the propeller 20 is not rotated even when the motor 61 is rotationally driven. A function of executing the processes in steps S401 and S402 in the flight control device 40 corresponds to the motor discharging unit and the stationary discharging unit.

The flight control device 40 performs a propeller transmission cut-off process in step S401 in the motor idling process. In the propeller transmission cut-off process, a process for preventing the rotation of the motor 61 from being transmitted to the propeller 20 is performed. For example, the flight control device 40 shifts the clutch 145 to the disconnection state.

In step S402, the flight control device 40 performs a rotational driving process. In the rotational driving process, a process for rotationally driving the motor 61 is performed, as in the case where the motor 61 is driven to cause the eVTOL 10 to fly. For example, in the rotational driving process, unlike the d-axis driving process of the first embodiment, the motor control is performed such that a torque for rotating the motor rotor 63 is generated. For example, the flight control device 40 outputs both the d-axis current and the q-axis current to rotate the motor rotor 63. In the motor idling process, since the clutch 145 is in the disconnection state, the propeller 20 is not rotated even when the motor 61 is rotationally driven by the residual electric power in the inverter high-voltage unit 86.

After step S402, the flight control device 40 performs the processes in steps S202 and S203, as in the first embodiment. However, in the present embodiment, the count value of the discharging counter Cd indicates discharging duration of the inverter high-voltage unit 86 in the motor idling process. The counter threshold TCd is a value indicating an upper limit time of the discharging duration in the motor idling process, and is a value indicating a time required to complete the discharging of the inverter high-voltage unit 86 by the motor idling process.

When the discharging counter Cd reaches the counter threshold TCd, the flight control device 40 determines that the discharging of the inverter high-voltage unit 86 is completed, and proceeds to step S403. In step S403, the flight control device 40 performs a rotational driving stop process. In the rotational driving stop process, a process for stopping the rotational driving process is performed. For example, in the rotational driving stop process, the same process as the d-axis driving stop process of the first embodiment is performed. The rotational driving stop process is also a process for stopping the motor idling process.

In step S404, the flight control device 40 performs a propeller transmission process. In the propeller transmission process, a process for transmitting the rotation of the motor 61 to the propeller 20 when the motor 61 is rotationally driven is performed. For example, the flight control device 40 shifts the clutch 145 to the transmission state.

After step S404, the flight control device 40 proceeds to step S205, and performs the discharging notification process, as in the first embodiment. In the discharging notification process, it is notified that the inverter high-voltage unit 86 is discharged by the motor idling process or the rotational driving process.

According to the present embodiment, the flight control device 40 discharges the residual electric power in the inverter high-voltage unit 86 to the motor 61 such that the propeller 20 is not rotated, by causing the motor 61 to idle with respect to the propeller 20. In the configuration, as in the first embodiment, the situation where the propeller 20 is rotated by the residual electric power in the inverter high-voltage unit 86 although the power supply from the battery 31 to the motor 61 is cut off by the power supply switch 132 can be avoided. That is, a configuration in which the propeller 20 is not rotated even if the motor 61 is rotationally driven can be implemented by the clutch 145.

### <Fifth Embodiment>

In the first embodiment, the inverter high-voltage unit 86 is discharged such that the propeller 20 is not rotated. Meanwhile, in a fifth embodiment, the inverter high-voltage unit 86 is discharged such that the propeller 20 is rotated. Configurations, operations, and effects not particularly described in the fifth embodiment are the same as those in the first embodiment. In the fifth embodiment, differences from the first embodiment will be mainly described.

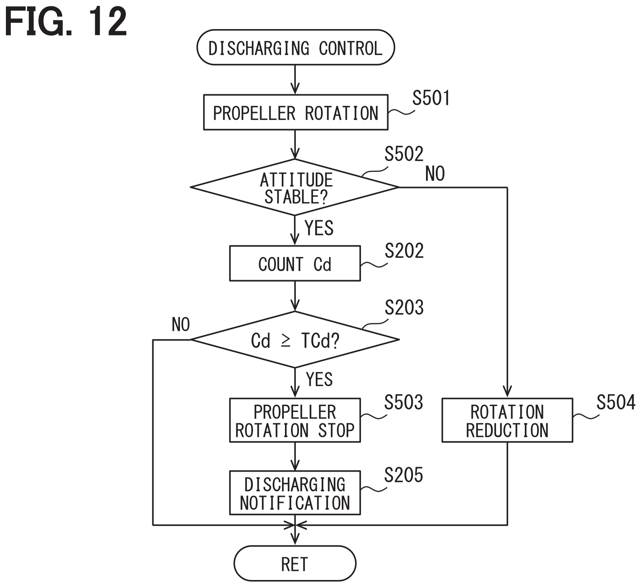

In the present embodiment, the discharging control process will be described with reference to a flowchart of FIG. 12.

The flight control device 40 performs a propeller rotation process in step S501 shown in FIG. 12. In the propeller rotation process, a process for rotationally driving the motor 61 to rotate the propeller 20 is performed. For example, in a configuration in which the propulsion system 30 includes the clutch 145 as in the fourth embodiment, the flight control device 40 rotationally drives the motor 61 while maintaining the clutch 145 in the transmission state. In the propeller rotation process, the flight control device 40 performs the motor control such that a torque for rotating the motor rotor 63 is generated, similar to the rotational driving process of the fourth embodiment. A function of executing the processes in step S501 in the flight control device 40 corresponds to the motor discharging unit and a rotational discharging unit.

In step S502, the flight control device 40 determines whether the attitude of the eVTOL 10 is stable in a state where the eVTOL 10 is on the ground. In a state where the propeller 20 is rotated by the residual electric power in the inverter high-voltage unit 86, the lift is likely to be generated in the eVTOL 10 due to the rotation of the propeller 20. When the rotational speed of the motor 61 increases and the lift of the eVTOL 10 increases to a certain degree, the attitude of the eVTOL 10 tends to become unstable. Examples of the case where the attitude of the eVTOL 10 is unstable include a case where the attitude of the eVTOL 10 changes such that the eVTOL 10 swings in a roll direction, a pitch direction, or a yaw direction.

The flight control device 40 determines whether the attitude of the eVTOL 10 is stable using the eVTOL information. For example, the propulsion system 30 includes an attitude sensor that detects the attitude of the eVTOL 10. The attitude sensor is provided in the eVTOL 10 and outputs a detection signal to the flight control device 40. The attitude sensor includes a speed sensor, a gyro sensor, and an altitude sensor. The flight control device 40 acquires the detection signal of the attitude sensor as the eVTOL information. The flight control device 40 determines whether the attitude of the eVTOL 10 is stable using the detection result of the attitude sensor.

When the attitude of the eVTOL 10 is stable, the flight control device 40 performs the processes in steps S202 and S203, as in the first embodiment. However, in the present embodiment, the count value of the discharging counter Cd indicates discharging duration of the inverter high-voltage unit 86 in the propeller rotation process. The counter threshold TCd is a value indicating an upper limit time of the discharging duration in the propeller rotation process, and is a value indicating a time required to complete the discharging of the inverter high-voltage unit 86 by propeller rotation process.

When the discharging counter Cd reaches the counter threshold TCd, the flight control device 40 determines that the discharging of the inverter high-voltage unit 86 is completed, and proceeds to step S503. In step S503, the flight control device 40 performs a propeller stop process. In the propeller stop process, a process for stopping the propeller rotation process is performed. For example, in the propeller stop process, a process similar to the d-axis driving stop process of the first embodiment is performed. The propeller stop process is also a process for stopping the rotational driving of the motor 61.

After step S503, the flight control device 40 proceeds to step S205, and performs the discharging notification process, as in the first embodiment. In the discharging notification process, it is notified that the inverter high-voltage unit 86 is discharged by the propeller rotation process.

When the attitude of the eVTOL 10 is not stable, the flight control device 40 proceeds to step S504. In step S504, the flight control device 40 performs a rotation reduction process. In the rotation reduction process, a process for reducing the rotational speed of the propeller 20 is performed. The flight control device 40 controls the inverter circuit 85 such that the rotational speed of the propeller 20 is reduced to such an extent that the attitude of the eVTOL 10 on the ground is stabilized. For example, the flight control device 40 performs the motor control to reduce the rotation of the motor 61 and the propeller 20 by setting the required torque to such a small value that the attitude of the eVTOL 10 is stabilized.

According to the present embodiment, the flight control device 40 discharges the residual electric power in the inverter high-voltage unit 86 to the motor 61 such that the propeller 20 is rotated. In the configuration, the propeller 20 is rotated although the power supply from the battery 31 to the motor 61 is cut off by the power supply switch 132, and thus the operator such as the pilot can visually detect that the inverter high-voltage unit 86 is being discharged. Therefore, the operator touching the inverter high-voltage unit 86 in a situation where the discharging of the inverter high-voltage unit 86 is not completed after the inverter lid portion 95 is opened can be prevented.

In the configuration, the propeller 20 is rotated together with the motor 61 by the residual electric power in the inverter high-voltage unit 86. Therefore, consumption of the residual electric power tends to increase as compared with a configuration in which the propeller 20 is not rotated as in the fourth embodiment. Accordingly, a time required to complete the discharging of the inverter high-voltage unit 86 can be shortened by rotating the propeller 20.

### <Sixth Embodiment>

In a sixth embodiment, regardless of the opening and closing state of the inverter lid portion 95, the inverter high-voltage unit 86 is discharged when the power supply from the battery 31 to the motor 61 is cut off. Configurations, operations, and effects not particularly described in the sixth embodiment are the same as those in the first embodiment. In the sixth embodiment, differences from the first embodiment will be mainly described.

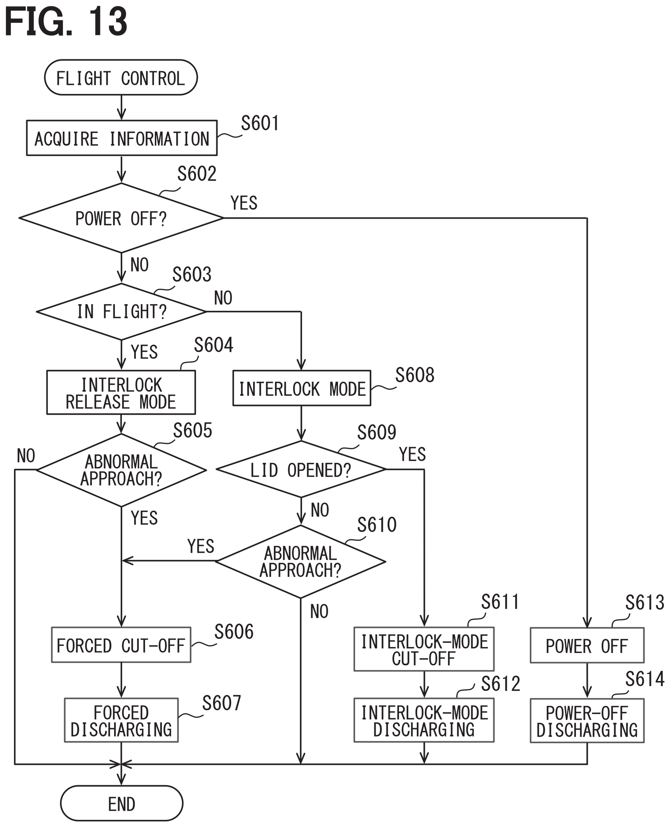

The flight control device 40 performs the flight control process, as in the first embodiment. In the present embodiment, the flight control process will be described with reference to a flowchart of FIG. 13.

In step S601 shown in FIG. 13, the flight control device 40 acquires the eVTOL information, as in step S101 of the first embodiment. In step S602, the flight control device 40 determines whether to power off the eVTOL 10. The flight control device 40 determines whether to power off the eVTOL 10 using the eVTOL information. For example, the flight control device 40 determines whether to power off the eVTOL 10 in response to an input operation of the pilot or an input signal from an external facility.

For example, the flight control device 40 determines whether to turn off a main switch of the eVTOL 10. When the main switch is turned off, the flight control device 40 determines to power off the eVTOL 10. The main switch is a power switch of the eVTOL 10 and is a switch for turning on and off a power supply of the eVTOL 10. A power supply of the propulsion system 30 is turned on and off by the main switch together with the power supply of the eVTOL 10. The main switch can cut off power supply from the battery 31 to the propulsion device 100, the communication unit 34, and the flight control device 40. The main switch may include the power supply switch 132.

When the eVTOL 10 is powered off, the flight control device 40 proceeds to step S613. The flight control device 40 performs a power-off process in step S613. In the power-off process, a process for turning off the power supply of the eVTOL 10 is performed. For example, the flight control device 40 switches the main switch to an off-state. In the power-off process, the power supply switch 132 is switched to the switch-off state. When the main switch is switched to the off-state, the residual electric power may remain in the inverter high-voltage unit 86, as in the case where the power supply switch 132 is the switch-off state in the interlock mode in the first embodiment.

Therefore, in step S614, the flight control device 40 performs a power-off discharging process. In the power-off discharging process, a process for discharging the inverter high-voltage unit 86 is performed. The flight control device 40 performs a process for discharging the residual electric power in the inverter high-voltage unit 86 to the motor 61. In the power-off discharging process, the discharging control process of the first embodiment, the fourth embodiment, or the fifth embodiment is performed. For example, in the power-off discharging process, the d-axis driving process in step S201, the rotational driving process in step S402, or the propeller rotation process in step S501 is performed. A function of executing the process in step S614 in the flight control device 40 corresponds to a power-off discharging unit.

When the eVTOL 10 is not to be powered off, the flight control device 40 proceeds to step S603. In step S603, the flight control device 40 determines whether the eVTOL 10 is in flight. For the determination, the eVTOL information is used.

When the eVTOL 10 is in flight, the flight control device 40 proceeds to step S604. In step S604, the flight control device 40 sets the control mode to the interlock release mode. For example, when the control mode is the interlock mode, the flight control device 40 switches the control mode from the interlock mode to the interlock release mode. When the control mode is already the interlock release mode, the flight control device 40 maintains the control mode in the interlock release mode. A function of executing the process in step S604 in the flight control device 40 corresponds to the interlock release unit.

In step S605, the flight control device 40 determines whether the eVTOL 10 and an obstacle abnormally approach each other. Examples of the obstacle in a situation where the eVTOL 10 is flying include another aircraft in flight and a tall building. The other aircraft is a flight vehicle different from the eVTOL 10. Examples of the case where the eVTOL 10 and the obstacle abnormally approach each other include a case where there is a high possibility that the eVTOL 10 comes into contact with or collides with the obstacle and a case where the flight control device 40 detects contact or collision between the eVTOL 10 and the other aircraft. A situation where the eVTOL 10 in flight and the obstacle abnormally approach each other corresponds to an emergency situation for the eVTOL 10.

When the eVTOL 10 abnormally approaches the obstacle while being in flight, the flight control device 40 proceeds to step S606. In step S606, the flight control device 40 performs a forced cut-off process. The forced cut-off process is a process for forcibly cutting off the power supply from the battery 31 to the motor 61. In the forced cut-off process, a process for switching the main switch to the off-state or a process for switching the power supply switch 132 to the switch-off state is performed. In the forced cut-off process, the power supply from the battery 31 to the motor 61 is cut off for at least one of the multiple propulsion devices 100.

In step S607, the flight control device 40 performs a forced discharging process. In the forced discharging process, a process for discharging the residual electric power in the inverter high-voltage unit 86 is performed. The flight control device 40 performs the forced discharging process such that a time required to discharge the inverter high-voltage unit 86 by the forced discharging process is shorter than a time required to discharge the inverter high-voltage unit 86 by the power-off discharging unit. In the forced discharging process, the residual electric power in the inverter high-voltage unit 86 is discharged more rapidly as compared when the inverter high-voltage unit 86 is discharged by the power-off discharging unit. In the forced discharging process, the discharging control process of the second embodiment is performed. For example, in the forced discharging process, the circuit discharging process in step S301 is performed. In the present embodiment, the propulsion system 30 includes the discharging circuit 141, as in the second embodiment.

In step S605, when the eVTOL 10 does not abnormally approach the obstacle, the flight control device 40 ends the flight control process as it is.

In step S603, when the eVTOL 10 is not in flight, the flight control device 40 determines that the eVTOL 10 is on the ground, and proceeds to step S608. In step S608, the flight control device 40 sets the control mode to the interlock mode. For example, when the control mode is the interlock release mode, the flight control device 40 switches the control mode from the interlock release mode to the interlock mode. When the control mode is already the interlock mode, the flight control device 40 maintains the control mode in the interlock mode. A function of executing the process in step S608 in the flight control device 40 corresponds to the interlock unit.

In step S609, the flight control device 40 determines whether the inverter lid portion 95 is in the open state, as in S105 of the first embodiment. A situation where the inverter lid portion 95 is opened in the interlock mode when the eVTOL 10 is on the ground corresponds to the emergency situation for the eVTOL 10.

When the inverter lid portion 95 is not in the open state, the flight control device 40 proceeds to step S610. Similar to step S605, the flight control device 40 determines whether the eVTOL 10 and an obstacle abnormally approach each other. Examples of the obstacle in a situation where the eVTOL 10 is on the ground include another aircraft on the ground, another aircraft flying low, and a building. In a case where both the eVTOL 10 and the other aircraft are on the ground, when at least one of the eVTOL 10 and the other aircraft moves on the ground, the eVTOL 10 and the other aircraft may abnormally approach each other. A situation where the eVTOL 10 on the ground and the obstacle abnormally approach each other corresponds to the emergency situation for the eVTOL 10.

When the eVTOL 10 abnormally approaches the obstacle while being on the ground, the flight control device 40 performs the processes in steps S606 and S607, as in the case where the eVTOL 10 abnormally approaches the obstacle while flying. In this case, the flight control device 40 performs the forced cut-off process and the forced discharging process. On the other hand, in a situation where the eVTOL 10 is on the ground, when the inverter lid portion 95 is not in the open state and the eVTOL 10 and the obstacle do not abnormally approach each other, the flight control device 40 ends the flight control process as it is.

When the inverter lid portion 95 is in the open state in step S609, the flight control device 40 proceeds to step S611. In step S611, the flight control device 40 performs the interlock-mode cut-off process, as in step S106 of the first embodiment.

In step S612, the flight control device 40 performs an interlock-mode discharging process. In the interlock-mode discharging process, a process for discharging the residual electric power from the inverter high-voltage unit 86 is performed. A function of executing the process in step S612 in the flight control device 40 corresponds to the discharging execution unit.

The flight control device 40 performs the interlock-mode discharging process such that a time required to discharge the inverter high-voltage unit 86 by the interlock-mode discharging process is shorter than the time required to discharge the inverter high-voltage unit 86 by the power-off discharging unit. In the interlock-mode discharging process, the residual electric power in the inverter high-voltage unit 86 is discharged more rapidly as compared with when the inverter high-voltage unit 86 is discharged by the power-off discharging unit. In the interlock-mode discharging process, the discharging control process of the second embodiment is performed. For example, in the interlock-mode discharging process, the circuit discharging process in step S301 is performed. A function of executing the process in step S612 in the flight control device 40 corresponds to an interlock-mode discharging unit.

In the inverter device 80, as a discharging current flowing from the inverter high-voltage unit 86 to the discharging circuit 141 increases, a time required for the inverter high-voltage unit 86 to discharge decreases. Meanwhile, there is a concern that as the discharging current flowing from the inverter high-voltage unit 86 to the discharging circuit 141 increases, discharging capability of the discharging circuit 141 tends to decrease due to progress of deterioration or the like. For example, it is considered that as the number of times that the inverter high-voltage unit 86 is discharged by the discharging circuit 141 increases, the discharging capability of the discharging circuit 141 tends to decrease. That is, discharging capability of a discharging device or the like forming the discharging circuit 141 tends to decrease.

Meanwhile, according to the present embodiment, when the eVTOL 10 is powered off, the inverter high-voltage unit 86 is discharged by the power-off discharging process. In this case, the inverter high-voltage unit 86 is discharged slowly as compared with when the inverter high-voltage unit 86 is rapidly discharged by the interlock-mode discharging process. In the power-off discharging process, the inverter high-voltage unit 86 is discharged by the motor 61, and thus the discharging current flowing through the motor 61 is limited by the motor control. Therefore, since the discharging current flowing through the motor 61 is less likely to be excessive, deterioration of the motor 61 caused by the discharging current is less likely to progress. In the power-off discharging process, since it is not necessary to use the discharging circuit 141 for discharging the inverter high-voltage unit 86, a frequency of using the discharging circuit 141 for discharging the inverter high-voltage unit 86 can be reduced. Therefore, a decrease in the discharging capability of the discharging device or the like can be limited.

In the present embodiment, when the eVTOL 10 and the obstacle abnormally approach each other in a situation where the eVTOL 10 is flying or on the ground, the power supply from the battery 31 to the motor 61 is cut off by the forced cut-off process. In this case, occurrence of an abnormality in the eVTOL 10 due to the supply of electric power from the battery 31 to the motor 61 accompanying the abnormal approach between the eVTOL 10 and the obstacle can be prevented. In this case, the inverter high-voltage unit 86 is rapidly discharged by the forced discharging process. Therefore, occurrence of an abnormality in the eVTOL 10 due to the residual electric power remaining in the inverter high-voltage unit 86 accompanying the approach between the eVTOL 10 and the obstacle can be limited.

### <Seventh Embodiment>

In a seventh embodiment, the arm switches 116 and 117 are switched such that the residual electric power in the smoothing capacitor 114 is discharged to the inverter circuit 85. Configurations, operations, and effects not particularly described in the seventh embodiment are the same as those in the first embodiment. In the seventh embodiment, differences from the first embodiment will be mainly described.

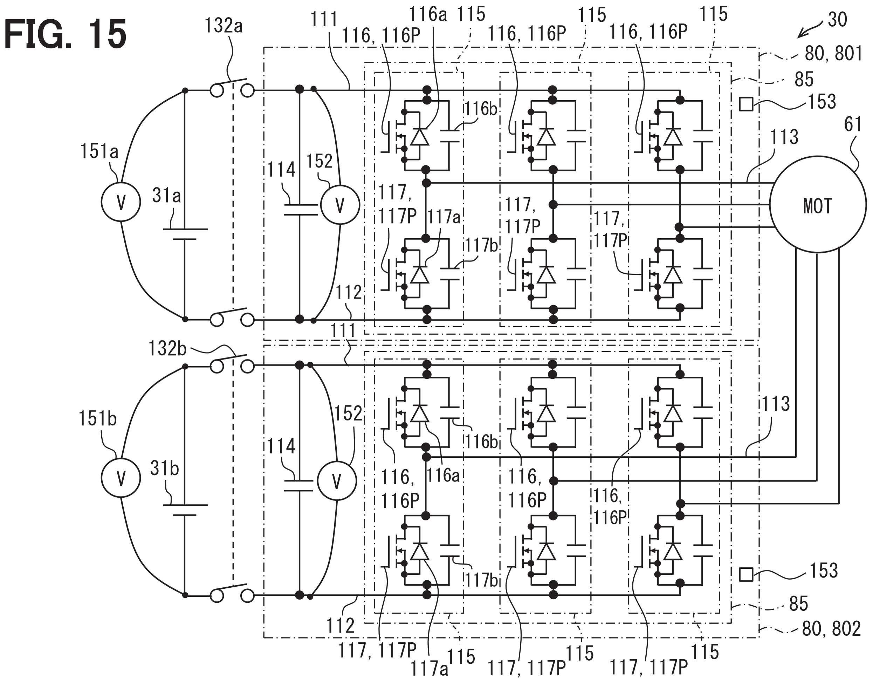

As shown in FIG. 15, the inverter device 80 includes upper switch components 116P and lower switch components 117P. Each of the upper switch components 116P is a semi-conductor component forming the upper arm switch 116. Each of the lower switch components 117P is a semi-conductor component forming the lower arm switch 117. Each of the switch components 116P and 117P has a switch protection portion which is not shown. The switch protection portion protects the corresponding arm switch 116 or 117. The switch protection portion is a package made of a resin material or the like, and covers the corresponding arm switch 116 or 117.

The upper switch component 116P includes an upper diode 116a and an upper parasitic capacitance 116b. The lower switch component 117P includes a lower diode 117a and a lower parasitic capacitance 117b. The diodes 116a and 117a and the parasitic capacitances 116b and 117b are included in the inverter circuit 85. The diodes 116a and 117a and the parasitic capacitances 116b and 117b are included in the upper and lower arm circuits 115 in the multiple phases.

The diodes 116a and 117a are freewheeling diodes, and are respectively connected in antiparallel to the arm switches 116 and 117. The diodes 116a and 117a are respectively freewheeling diodes of the arm switches 116 and 117. The switch components 116P and 117P may each include a freewheeling diode. In this case, the diodes 116a and 117a are parasitic diodes originally included in the respective switch components separately from the freewheeling diodes.

The upper parasitic capacitance 116b is a parasitic capacitance of the upper arm switch 116. The lower parasitic capacitance 117b is a parasitic capacitance of the lower arm switch 117. In the switch components 116P and 117P, the parasitic capacitances 116b and 117b are respectively connected in parallel to the arm switches 116 and 117. Each of the parasitic capacitances 116b and 117b is, for example, about 100 nF. The parasitic capacitances 116b and 117b are portions respectively serving as capacitors in the switch components 116P and 117P.

The arm switches 116 and 117 can be shifted to an on-state and an off-state. The on-state is a state where conduction through the arm switches 116 and 117 is allowed. The on-state corresponds to the switch-on state. The off-state is a state where the conduction through the arm switches 116 and 117 is cut off. The off-state corresponds to the switch-off state.

The eVTOL 10 is provided with multiple batteries 31. In the propulsion system 30, power supply to the first inverter device 801 and power supply to the second inverter device 802 are performed by separate batteries 31. The multiple batteries 31 include a first battery 31a and a second battery 31b. The batteries 31a and 31b are included in the propulsion system 30. The first battery 31a is electrically connected to the first inverter device 801. The first battery 31a can supply electric power to the first inverter device 801. The second battery 31b is electrically connected to the second inverter device 802. The second battery 31b can supply electric power to the second inverter device 802.

The eVTOL 10 is provided with multiple power supply switches 132. The multiple power supply switches 132 include a first power supply switch 132a and a second power supply switch 132b. The power supply switches 132a and 132b are included in the propulsion system 30. The first power supply switch 132a can cut off the power supply from the first battery 31a to the first inverter device 801. The second power supply switch 132b can cut off the power supply from the second battery 31b to the second inverter device 802.

The propulsion system 30 includes a first battery voltage sensor 151a, a second battery voltage sensor 151b, capacitor voltage sensors 152, and inverter temperature sensors 153. The voltage sensors 151a, 151b, and 152 are included in the various sensors. The first battery voltage sensor 151a is a sensor that detects a voltage of the first battery 31a. The second battery voltage sensor 151b is a sensor that detects a voltage of the second battery 31b. The battery voltage sensors 151a and 151b are communicably connected to the flight control device 40. The battery voltage sensors 151a and 151b output detection signals corresponding to the voltages of the batteries 31a and 31b to the flight control device 40. The battery voltage sensors 151a and 151b may output detection signals to the inverter control unit 81.

Each of the capacitor voltage sensors 152 is a sensor that detects a voltage of the smoothing capacitor 114. The capacitor voltage sensor 152 is included in the inverter device 80. The capacitor voltage sensor 152 is communicably connected to the inverter control unit 81. The capacitor voltage sensor 152 outputs a detection signal corresponding to the voltage of the smoothing capacitor 114 to the inverter control unit 81. The detection signal of the capacitor voltage sensor 152 is input to the flight control device 40 via the inverter control unit 81. The capacitor voltage sensors 152 are respectively provided in the first inverter device 801 and the second inverter device 802.

Each of the inverter temperature sensors 153 is a sensor that detects a temperature of the inverter device 80. The inverter temperature sensor 153 is included in the inverter device 80. The inverter temperature sensor 153 is communicably connected to the inverter control unit 81. The inverter temperature sensor 153 outputs a detection signal corresponding to the temperature of the inverter device 80 to the inverter control unit 81. The detection signal of the inverter temperature sensor 153 is input to the flight control device 40 via the inverter control unit 81.

The inverter temperature sensor 153 is accommodated in the inverter housing 90. The inverter temperature sensor 153 can detect an internal temperature of the inverter housing 90. For example, the inverter temperature sensor 153 can detect a temperature of the inverter high-voltage unit 86 and a temperature of the inverter low-voltage unit 87. Examples of the temperature of the inverter high-voltage unit 86 include a temperature of the upper switch component 116P, a temperature of the lower switch component 117P, and a temperature of the inverter circuit 85. When the temperatures of the switch components 116P and 117P are high, the temperature detected by the inverter temperature sensor 153 tends to be high.

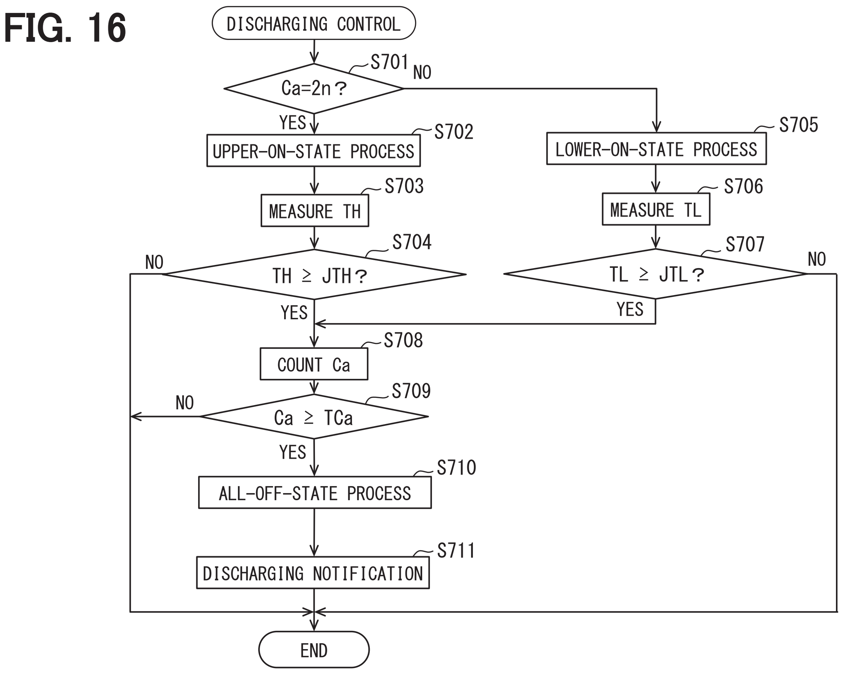

In the present embodiment, the discharging control process will be described with reference to a flowchart of FIG. 16. The discharging control process is performed on the inverter device 80. The flight control device 40 performs the discharging control process individually for each of the first inverter device 801 and the second inverter device 802. For example, the flight control device 40 synchronously performs the discharging control process for the first inverter device 801 and the discharging control process for the second inverter device 802.

In step S701 shown in FIG. 16, the flight control device 40 determines whether a value of an upper-lower counter Ca is n times 2. n is an integer. The flight control device 40 determines whether the upper-lower counter Ca is an even number. The upper-lower counter Ca is a counter indicating the number of times which is a total of the number of times of completion of an upper-on-state process and the number of times of completion of a lower-on-state process. The upper-on-state process and the lower-on-state process will be described later. When the upper-lower counter Ca is an even number, the flight control device 40 proceeds to step S702.

In step S702, the flight control device 40 performs the upper-on-state process. The upper-on-state process is a process for setting the inverter circuit 85 to an upper-on-state. In the upper-on-state process, a process for shifting the inverter circuit 85 to the upper-on-state and a process for maintaining the inverter circuit 85 in the upper-on-state are performed. In the upper-on-state, the upper arm switch 116 is in the on-state and the lower arm switch 117 is in the off-state in all the phases. The upper-on-state corresponds to an upper-switch-on state.

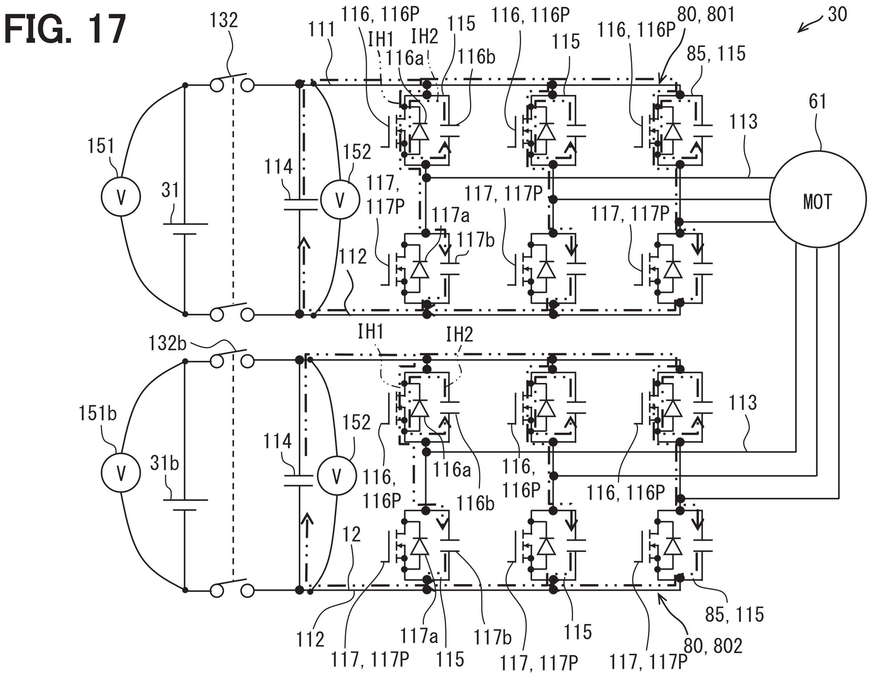

As shown in FIG. 17, when the inverter circuit 85 is in the upper-on-state, a first upper-on-state current IH1 and a second upper-on-state current IH2 flow through the inverter device 80. The first upper-on-state current IH1 is a discharging current for discharging the residual electric power in the smoothing capacitor 114 to the inverter circuit 85. Discharging the residual electric power in the smoothing capacitor 114 to the inverter circuit 85 may be referred to as in-inverter discharging.

The first upper-on-state current IH1 flows from the smoothing capacitor 114 to the lower parasitic capacitance 117b through the upper arm switch 116. The residual electric power in the smoothing capacitor 114 is supplied to the lower parasitic capacitance 117b by the first upper-on-state current IH1, and thus is stored in the lower parasitic capacitance 117b. In the upper-on-state process, the lower parasitic capacitance 117b is charged by the residual electric power in the smoothing capacitor 114. That is, in the upper-on-state process, the residual charges of the smoothing capacitor 114 move to the lower parasitic capacitance 117b.

The second upper-on-state current IH2 is a discharging current generated by discharging the electric power stored in the upper parasitic capacitance 116b to the upper arm switch 116. The second upper-on-state current IH2 flows to circulate between the upper arm switch 116 and the upper parasitic capacitance 116b. In the upper switch component 116P, the electric power of the upper parasitic capacitance 116b is consumed by an internal resistor of the upper arm switch 116, an internal resistor of the upper switch component 116P, or the like, and thus the electric power of the upper parasitic capacitance 116b is discharged to the upper arm switch 116. As to be described later, when the inverter circuit 85 is in a lower-on-state, the residual electric power in the smoothing capacitor 114 is stored in the upper parasitic capacitance 116b by a first lower-on-state current IL1.

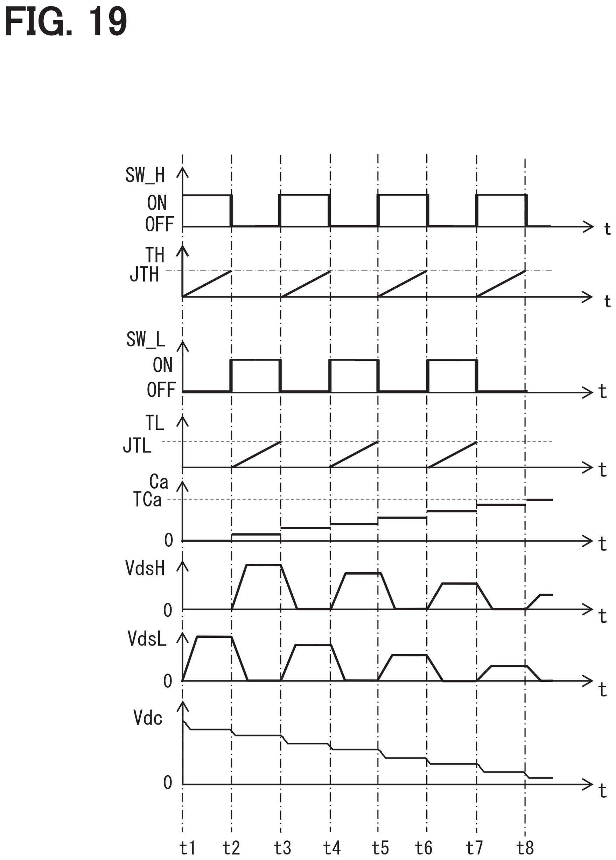

Returning to FIG. 16, in step S703, the flight control device 40 measures an upper-on-state time TH. The upper-on-state time TH is duration during which the upper-on-state process is continued. The upper-on-state time TH is also a time elapsed since the inverter circuit 85 is shifted to the upper-on-state. As the upper-on-state time TH increases, a power storage amount in the lower parasitic capacitance 117b based on the first upper-on-state current IH1 increases, and a lower parasitic voltage VdsL (see FIG. 19) increases. The lower parasitic voltage VdsL is a voltage of the lower parasitic capacitance 117b. By continuing the upper-on-state process, the lower parasitic voltage VdsL reaches a lower peak voltage VdsLp. The lower peak voltage VdsLp is a value determined according to magnitude of the residual electric power in the smoothing capacitor 114, magnitude of the lower parasitic capacitance 117b, and the like. The lower peak voltage VdsLp is a maximum value of the lower parasitic voltage VdsL during the period in which the upper-on-state process is continued. In the period in which the upper-on-state process is continued, the lower parasitic voltage VdsL reaches the lower peak voltage VdsLp and is then held at the lower peak voltage VdsLp.

In step S704, the flight control device 40 determines whether the upper-on-state time TH reaches the upper-on-state threshold JTH. The upper-on-state threshold JTH is a value determined in advance by a test or the like, and is stored in the memory 43 or the like. The upper-on-state threshold JTH is set to, for example, 50 µsec. The upper-on-state threshold JTH is a value indicating an upper limit time of the upper-on-state time TH. The upper-on-state threshold JTH is set to a value indicating a time longer than a time required for the lower parasitic voltage VdsL to reach the lower peak voltage VdsLp.

When the upper-on-state time TH does not reach the upper-on-state threshold JTH, the flight control device 40 determines to continue the current upper-on-state process, and ends the discharging control process as it is. In this case, the flight control device 40 performs the processes in steps S701 to S704 in a next discharging control process. The flight control device 40 repeatedly performs the processes in steps S701 to S704 until the upper-on-state time TH reaches the upper-on-state threshold JTH. In steps S702 to S704, the flight control device 40 maintains the inverter circuit 85 in the upper-on-state such that the residual electric power in the smoothing capacitor 114 is stored in the lower parasitic capacitance 117b and the electric power of the lower parasitic capacitance 117b is discharged to the lower arm switch 117. A function of executing the processes in steps S702 to S704 in the flight control device 40 corresponds to an upper-maintaining unit.

When the upper-on-state time TH reaches the upper-on-state threshold JTH, the flight control device 40 determines that the current upper-on-state process is completed, and proceeds to step S708. In step S708, the flight control device 40 counts the upper-lower counter Ca. In the upper-lower counter Ca, the number of times the smoothing capacitor 114 is discharged by the upper-on-state process is counted.

The flight control device 40 adds a predetermined addition value to the upper-lower counter Ca. For example, the flight control device 40 increments the upper-lower counter Ca by 1 with the addition value set to 1. The upper-lower counter Ca is set in the memory 43 or the like. After the upper-on-state process is performed when the upper-lower counter Ca is an even number, the upper-lower counter Ca is counted and becomes an odd number. When the upper-on-state time TH reaches the upper-on-state threshold JTH, the flight control device 40 resets the upper-on-state time TH to zero.

In step S709, the flight control device 40 determines whether the upper-lower counter Ca reaches an upper-lower counter threshold TCa. The upper-lower counter threshold TCa is a value determined in advance by a test or the like, and is stored in the memory 43 or the like. The upper-lower counter threshold TCa is a value indicating the number of times the upper-on-state process and the lower-on-state process are performed. As the upper-lower counter threshold TCa increases, the number of times the upper-on-state process and the lower-on-state process are performed increases. The upper-lower counter threshold TCa sets a length of a period in which the smoothing capacitor 114 continues to be discharged by the upper-on-state process and the lower-on-state process.

When the upper-lower counter Ca does not reach the upper-lower counter threshold TCa, the flight control device 40 ends the discharging control process as it is. In this case, the flight control device 40 performs the process in step S701 in the next discharging control process.

When the value of the upper-lower counter Ca is not an even number in step S701, the flight control device 40 proceeds to step S705 and performs the lower-on-state process. The lower-on-state process is a process for setting the inverter circuit 85 to the lower-on-state. In the lower-on-state process, a process for shifting the inverter circuit 85 to the lower-on-state and a process for maintaining the inverter circuit 85 in the lower-on-state are performed. In the lower-on-state, the lower arm switch 117 is in the on-state and the upper arm switch 116 is in the off-state in all the phases. The lower-on-state corresponds to a lower-switch-on state.

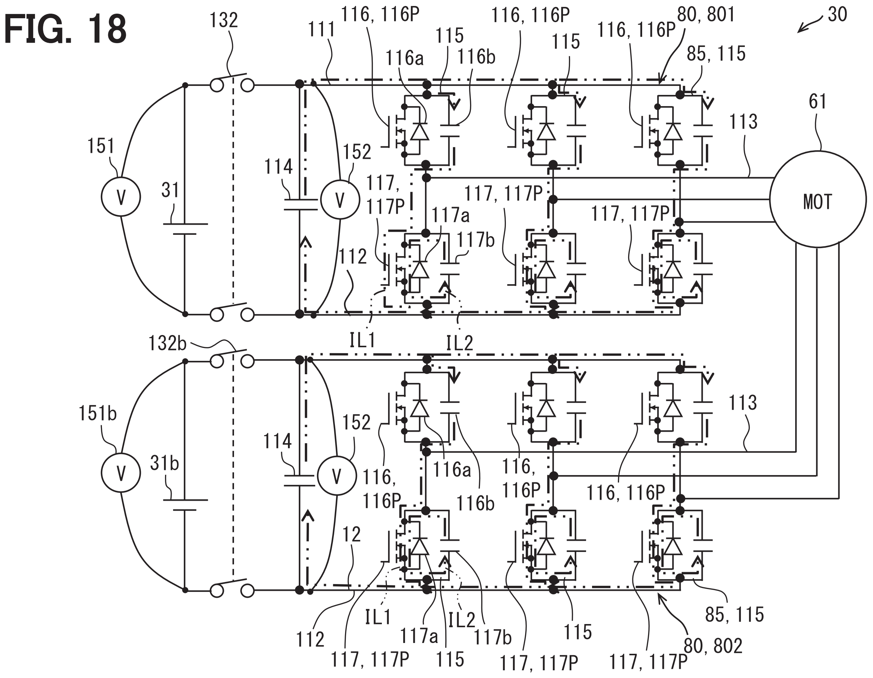

As shown in FIG. 18, when the inverter circuit 85 is in the lower-on-state, the first lower-on-state current IL1 and a second lower-on-state current IL2 flow through the inverter device 80. The first lower-on-state current IL1 is a discharging current for discharging the residual electric power in the smoothing capacitor 114 to the inverter circuit 85.

The first lower-on-state current IL1 flows from the smoothing capacitor 114 to the upper parasitic capacitance 116b through the lower arm switch 117. The residual electric power in the smoothing capacitor 114 is supplied to the upper parasitic capacitance 116b by the first lower-on-state current IL1, and thus is stored in the upper parasitic capacitance 116b. In the lower-on-state process, the upper parasitic capacitance is charged by the residual electric power in the smoothing capacitor 114. That is, in the lower-on-state process, the residual charges of the smoothing capacitor 114 move to the upper parasitic capacitance 116b.

The second lower-on-state current IL2 is a discharging current generated by discharging the electric power stored in the lower parasitic capacitance 117b to the lower arm switch 117. The second lower-on-state current IL2 flows to circulate between the lower arm switch 117 and the lower parasitic capacitance 117b. In the lower switch component 117P, the electric power of the lower parasitic capacitance 117b is consumed by an internal resistor of the lower arm switch 117, an internal resistor of the lower switch component 117P, or the like, and thus the electric power of the lower parasitic capacitance 117b is discharged to the lower arm switch 117. As described above, when the inverter circuit 85 is in the upper-on-state, the residual electric power in the smoothing capacitor 114 is stored in the lower parasitic capacitance 117b by the first upper-on-state current IH1.

Returning to FIG. 16, in step S706, the flight control device 40 measures a lower-on-state time TL. The lower-on-state time TL is duration during which the lower-on-state process is continued. The lower-on-state time TL is a time elapsed since the inverter circuit 85 is shifted to the lower-on-state. As the lower-on-state time TL increases, a power storage amount in the upper parasitic capacitance 116b based on the first lower-on-state current IL1 increases, and an upper parasitic voltage VdsH (see FIG. 19) increases. The upper parasitic voltage VdsH is a voltage of the upper parasitic capacitance 116b. By continuing the lower-on-state process, the upper parasitic voltage VdsH reaches an upper peak voltage VdsHp. The upper peak voltage VdsHp is a value determined according to the magnitude of the residual electric power in the smoothing capacitor 114, magnitude of the upper parasitic capacitance 116b, or the like. The upper peak voltage VdsHp is a maximum value of the upper parasitic voltage VdsH during the period in which the lower-on-state process is continued. In the period in which the lower-on-state process is continued, the upper parasitic voltage VdsH reaches the upper peak voltage VdsHp and is then held at the upper peak voltage VdsHp.

In step S707, the flight control device 40 determines whether the lower-on-state time TL reaches a lower-on-state threshold JTL. The lower-on-state threshold JTL is a value determined in advance by a test or the like, and is stored in the memory 43 or the like. The lower-on-state threshold JTL is set to, for example, 50 µsec. The lower-on-state threshold JTL is a value indicating an upper limit time of the lower-on-state time TL. The lower-on-state threshold JTL is set to a value indicating a time longer than a time required for the upper parasitic voltage VdsH to reach the upper peak voltage VdsHp.

When the lower-on-state time TL does not reach the lower-on-state threshold JTL, the flight control device 40 determines to continue the current lower-on-state process, and ends the discharging control process as it is. In this case, the flight control device 40 repeatedly performs the processes in steps S701 and S705 to S707 until the lower-on-state time TL reaches the lower-on-state threshold JTL. In steps S705 to S707, the flight control device 40 maintains the inverter circuit 85 in the lower-on-state such that the residual electric power in the smoothing capacitor 114 is stored in the upper parasitic capacitance 116b and the electric power of the upper parasitic capacitance 116b is discharged to the upper arm switch 116. A function of executing the processes in steps S705 to S707 in the flight control device 40 corresponds to a lower-maintaining unit.

When the lower-on-state time TL reaches the lower-on-state threshold JTL, the flight control device 40 determines that the current lower-on-state process is completed, proceeds to step S708, and counts the upper-lower counter Ca. In the upper-lower counter Ca, the number of times the smoothing capacitor 114 is discharged by the lower-on-state process is counted in addition to the number of times the smoothing capacitor 114 is discharged by the upper-on-state process.

After the lower-on-state process is performed when the upper-lower counter Ca is an odd number, the upper-lower counter Ca is counted and becomes an even number. When the lower-on-state time TL reaches the lower-on-state threshold JTL, the flight control device 40 resets the lower-on-state time TL to zero. In step S709, when the upper-lower counter Ca does not reach the upper-lower counter threshold TCa, the flight control device 40 performs the process in step S701 in the next discharging control process.

The flight control device 40 continues the upper-on-state process for an upper-on-state threshold JTH until the upper-lower counter Ca reaches the upper-lower counter threshold TCa, and then performs the upper-on-state process again at intervals of the lower-on-state threshold JTL. The flight control device 40 continues the lower-on-state process for the lower-on-state threshold JTL until the upper-lower counter Ca reaches the upper-lower counter threshold TCa, and then performs the lower-on-state process again at intervals of the upper-on-state threshold JTH. The upper-on-state threshold JTH is a value indicating the duration of the upper-on-state process and a value indicating a cycle of the lower-on-state process. The lower-on-state threshold JTL1 is a value indicating the duration of the lower-on-state process and a value indicating a cycle of the upper-on-state process. The upper-on-state threshold JTH and the lower-on-state threshold JTL are set to the same value. The upper-on-state threshold JTH and the lower-on-state threshold JTL may be set to different values.

The flight control device 40 alternately repeats the upper-on-state process in step S702 and the lower-on-state process in step S705 until the upper-lower counter Ca reaches the upper-lower counter threshold TCa. When the upper-lower counter Ca reaches the upper-lower counter threshold TCa, the flight control device 40 proceeds to step S710. The flight control device 40 performs an all-off-state process in step S710. The all-off-state process is a process for shifting the inverter circuit 85 from the upper-on-state or the lower-on-state to an all-off-state. In the all-off-state, both the upper arm switch 116 and the lower arm switch 117 are in the off-state in all the phases. The all-off-state may be referred to as an all-cut-off state. When the upper-lower counter Ca reaches the upper-lower counter threshold TCa, the flight control device 40 resets the upper-lower counter Ca to zero.

In step S711, the flight control device 40 performs the discharging notification process as in step S205 of the first embodiment. In the discharging notification process of the present embodiment, it is notified that the smoothing capacitor 114 is discharged by the upper-on-state process and the lower-on-state process.

The flight control device 40 repeatedly performs the flight control process to repeatedly shift the inverter circuit 85 between the upper-on-state and the lower-on-state in steps S701 to S709. A function of executing the processes in steps S701 to S709 in the flight control device 40 corresponds to a conversion shifting unit. In steps S701 to S711, the flight control device 40 operates the arm switches 116 and 117 such that the residual electric power in the smoothing capacitor 114 is discharged to the inverter circuit 85. A function of executing the processes in steps S701 to S711 in the flight control device 40 corresponds to a conversion discharging unit.

The flight control device 40 does not set both the upper arm switch 116 and the lower arm switch 117 in one phase to the on-state when the upper-on-state process and the lower-on-state process are repeatedly performed. That is, the flight control device 40 repeatedly performs the upper-on-state process and the lower-on-state process to prevent a short circuit between the P-line 111 and the N-line 112 via the upper arm switch 116 and the lower arm switch 117. For example, when shifting the inverter circuit 85 from one of the upper-on-state and the lower-on-state to the other, the flight control device 40 shifts the inverter circuit 85 from the one state to the all-off-state and then from the all-off-state to the other state.

Next, a mode in which the residual electric power in the smoothing capacitor 114 is reduced by the discharging control process will be described with reference to FIG. 19. FIG. 19 illustrates the upper arm switch 116 as SW_H, illustrates the lower arm switch 117 as SW_L, illustrates the on-state as ON, and illustrates the off-state as OFF.

As shown in FIG. 19, at a timing t1, the upper arm switch 116 is switched to the on-state and the lower arm switch 117 is switched to the off-state as the upper-on-state process is started. The upper-on-state time TH increases as the upper-on-state process is started. A count of the upper-lower counter Ca is started from zero as the discharging control process is started. The lower parasitic voltage VdsL starts to increase as the upper-on-state process is started, reaches the lower peak voltage VdsLp, and then is held at the lower peak voltage VdsLp until the upper-on-state process ends.

In the smoothing capacitor 114, a capacitor voltage Vdc decreases as the lower parasitic voltage VdsL increases. The capacitor voltage Vdc is a voltage of the smoothing capacitor 114. The capacitor voltage Vdc decreases as the residual electric power in the smoothing capacitor 114 decreases. During a period in which the lower parasitic voltage VdsL is held at the lower peak voltage VdsLp, the capacitor voltage Vdc is also held.

At a timing t2, the upper-on-state time TH reaches the upper-on-state threshold JTH, the upper-on-state process is ended, and the lower-on-state process is started. When the upper-on-state time TH reaches the upper-on-state threshold JTH, the upper-on-state time TH is reset to zero, and the upper-lower counter Ca is incremented by 1. At the timing t2, the upper arm switch 116 is switched to the off-state, and the lower arm switch 117 is switched to the on-state. The lower-on-state time TL increases as the lower-on-state process is started.

The upper parasitic voltage VdsH starts to increase as the lower-on-state process is started, reaches the upper peak voltage VdsHp, and then is held at the upper peak voltage VdsHp until the lower-on-state process ends. The lower parasitic voltage VdsL starts to decrease as the upper-on-state process is ended, decreases to substantially zero, and is maintained at substantially zero until the next upper-on-state process is started. In the smoothing capacitor 114, the capacitor voltage Vdc decreases as the upper parasitic voltage VdsH increases. During a period in which the upper parasitic voltage VdsH is held at the upper peak voltage VdsHp, the capacitor voltage Vdc is also held.

At a timing t3, the lower-on-state time TL reaches the lower-on-state threshold JTL, the lower-on-state process is ended, and a second upper-on-state process is started. When the lower-on-state time TL reaches the lower-on-state threshold JTL, the lower-on-state time TL is reset to zero, and the upper-lower counter Ca is incremented by 1. At the timing t3, the lower arm switch 117 is switched to the off-state, and the upper arm switch 116 is switched to the on-state.

In the second upper-on-state process, as in the previous upper-on-state process, the lower parasitic voltage VdsL starts to increase as the upper-on-state process is started and reaches the lower peak voltage VdsLp. The lower peak voltage VdsLp in the second upper-on-state process is a value smaller than the lower peak voltage VdsLp in the first upper-on-state process due to, for example, a decrease in the residual electric power in the smoothing capacitor 114. In the inverter device 80, the lower peak voltage VdsLp decreases stepwise every time the upper-on-state process is repeatedly performed.

At a timing t4, the upper-on-state time TH reaches the upper-on-state threshold JTH, the upper-on-state process is ended, and the second lower-on-state process is started. When the upper-on-state time TH reaches the upper-on-state threshold JTH, the upper-on-state time TH is reset to zero, and the upper-lower counter Ca is incremented by 1. At the timing t4, the upper arm switch 116 is switched to the off-state, and the lower arm switch 117 is switched to the off-state.

In the second lower-on-state process, as in the previous lower-on-state process, the upper parasitic voltage VdsH starts to increase as the lower-on-state process is started and reaches the upper peak voltage VdsHp. The upper peak voltage VdsHp in the second lower-on-state process is a value smaller than the upper peak voltage VdsHp in the first lower-on-state process due to, for example, the decrease in the residual electric power in the smoothing capacitor 114. In the inverter device 80, the upper peak voltage VdsHp decreases stepwise every time the lower-on-state process is repeatedly performed.

In the discharging control process, the upper-on-state threshold JTH and the lower-on-state threshold JTL are set to prevent the temperature of the inverter circuit 85 or the like from becoming too high. The upper-on-state threshold JTH is set to a value indicating such a long time that the temperature of the upper switch component 116P, the temperature of the lower switch component 117P, or the like does not become too high in the upper-on-state process. For example, the upper-on-state threshold JTH is set such that, even if the lower switch component 117P generates heat due to the charging of the lower parasitic capacitance 117b, the heat of the lower switch component 117P is sufficiently dissipated during a period in which the lower parasitic voltage VdsL is held at the lower peak voltage VdsLp. The upper-on-state threshold JTH is set such that, even if the upper switch component 116P generates heat due to the discharging of the upper parasitic capacitance 116b, the heat of the upper switch component 116P is sufficiently dissipated during a period in which the upper parasitic voltage VdsH is maintained at substantially zero.

The lower-on-state threshold JTL is set to a value indicating such a long time that the temperature of the upper switch component 116P, the temperature of the lower switch component 117P, or the like does not become too high in the lower-on-state process. For example, the lower-on-state threshold JTL is set such that, even if the upper switch component 116P generates heat due to the charging of the upper parasitic capacitance 116b, the heat of the upper switch component 116P is sufficiently dissipated during a period in which the upper parasitic voltage VdsH is held at the upper peak voltage VdsHp. The lower-on-state threshold JTL is set such that, even if the lower switch component 117P generates heat due to the discharging of the lower parasitic capacitance 117b, the heat of the lower switch component 117P is sufficiently dissipated during a period in which the lower parasitic voltage VdsL is held at substantially zero.

In particular, when the temperatures of the switch components 116P and 117P are high, for example, immediately after the driving of the motor 61 is stopped, it is preferable to discharge the smoothing capacitor 114 while dissipating the heat from the switch components 116P and 117P. Meanwhile, in the present embodiment, the upper-on-state threshold JTH and the lower-on-state threshold JTL are set such that the temperatures of the switch components 116P and 117P are lower than those immediately after the driving of the motor 61 is stopped.

According to the present embodiment, the flight control device 40 operates the arm switches 116 and 117 such that the residual electric power in the smoothing capacitor 114 is discharged to the inverter circuit 85. In the configuration, the smoothing capacitor 114 can be discharged without using a dedicated discharging circuit for discharging the residual charges of the smoothing capacitor 114. Therefore, the safety of the eVTOL 10 can be enhanced while avoiding an increase in size of the propulsion device 100 by an amount corresponding to the dedicated discharging circuit.

In the present embodiment, the residual charges of the smoothing capacitor 114 can be consumed using a switching loss of the inverter circuit 85. Therefore, the propulsion device 100 does not require an additional device such as the dedicated discharging circuit. In the propulsion device 100, it is not necessary to energize the motor 61 and to move the propeller 20. Therefore, there is no concern that the airframe 11 is unstable, and the discharging current of the smoothing capacitor 114 can be freely adjusted by adjusting the capacitances of the parasitic capacitances 116b and 117b, the upper-on-state threshold JTH, and the lower-on-state threshold JTL even without a monitoring unit such as a current sensor that monitors the state of the propulsion device 100.

According to the present embodiment, the flight control device 40 repeatedly shifts the inverter circuit 85 to the upper-on-state and the lower-on-state. In the configuration, when the inverter circuit 85 is in the upper-on-state, the electric power stored in the upper parasitic capacitance 116b can be discharged to the upper arm switch 116 while the residual electric power in the smoothing capacitor 114 is stored in the lower parasitic capacitance 117b. When the inverter circuit 85 is in the lower-on-state, the electric power stored in the lower parasitic capacitance 117b can be discharged to the lower arm switch 117 while the residual electric power in the smoothing capacitor 114 is stored in the upper parasitic capacitance 116b. Accordingly, by repeatedly shifting the inverter circuit 85 between the upper-on-state and the lower-on-state, the smoothing capacitor 114 can be discharged using the arm switches 116 and 117, the parasitic capacitances 116b and 117b, and the like.

According to the present embodiment, the flight control device 40 maintains the inverter circuit 85 in the upper-on-state such that the residual electric power in the smoothing capacitor 114 is stored in the lower parasitic capacitance 117b and the electric power of the upper parasitic capacitance 116b is discharged to the upper arm switch 116. The flight control device 40 maintains the inverter circuit 85 in the lower-on-state such that the residual electric power in the smoothing capacitor 114 is stored in the upper parasitic capacitance 116b and the electric power of the lower parasitic capacitance 117b is discharged to the lower arm switch 117. Accordingly, the residual electric power in the smoothing capacitor 114 can be discharged to the arm switches 116 and 117 via the parasitic capacitances 116b and 117b.

The propulsion device 100 mounted in the eVTOL 10 may be designed such that the motor output increases and inductance of the motor 61 decreases. Therefore, in the propulsion device 100, it is necessary to increase a switching frequency of the inverter circuit 85. Meanwhile, in the present embodiment, the parasitic capacitances 116b and 117b of the arm switches 116 and 117 increase easily, and the inverter circuit 85 can be driven in a state where the switching frequency is high. Therefore, the smoothing capacitor 114 can be discharged in a short time only by charging and discharging the parasitic capacitance 116b.

### <Eighth Embodiment>

In an eighth embodiment, in the discharging control process, switching of the inverter circuit 85 in the first inverter device 801 and switching of the inverter circuit 85 in the second inverter device 802 are performed at different timings. Configurations, operations, and effects not particularly described in the eighth embodiment are the same as those in the seventh embodiment. In the eighth embodiment, differences from the seventh embodiment will be mainly described.

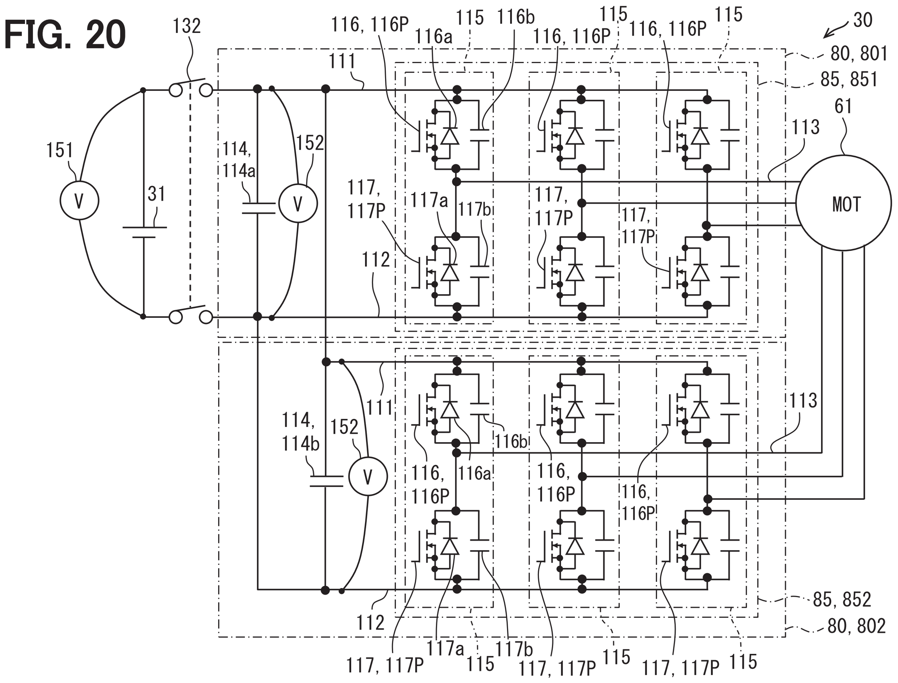

As shown in FIG. 20, as in the first embodiment, the first inverter device 801 and the second inverter device 802 are electrically connected to the common battery 31. The propulsion system 30 includes a battery voltage sensor 151. The battery voltage sensor 151 is a sensor that detects a voltage of the battery 31. The battery voltage sensor 151a has the same configuration as each of the battery voltage sensors 151a and 151b.

In the present embodiment, the inverter circuit 85 and the smoothing capacitor 114 included in the first inverter device 801 are respectively referred to as a first inverter circuit 851 and a first smoothing capacitor 114a. The first inverter circuit 851 corresponds to the power conversion unit and a first conversion unit. The inverter circuit 85 and the smoothing capacitor 114 included in the second inverter device 802 are respectively referred to as a second inverter circuit 852 and a second smoothing capacitor 114b. The second inverter circuit 852 corresponds to the power conversion unit and a second conversion unit.

The first inverter circuit 851 and the first smoothing capacitor 114a, and the second inverter circuit 852 and the second smoothing capacitor 114b are each connected in parallel to the battery 31 and the power supply switch 132. Therefore, the first inverter circuit 851 and the first smoothing capacitor 114a are electrically connected to the second inverter circuit 852 and the second smoothing capacitor 114b via the P-lines 111 and the N-lines 112.

The flight control device 40 causes the first inverter circuit 851 to discharge the first smoothing capacitor 114a and the second inverter circuit 852 to discharge the second smoothing capacitor 114b in parallel. Meanwhile, the flight control device 40 performs switching of the first inverter circuit 851 for discharging the first smoothing capacitor 114a and switching of the second inverter circuit 852 for discharging the second smoothing capacitor 114b at different timings.

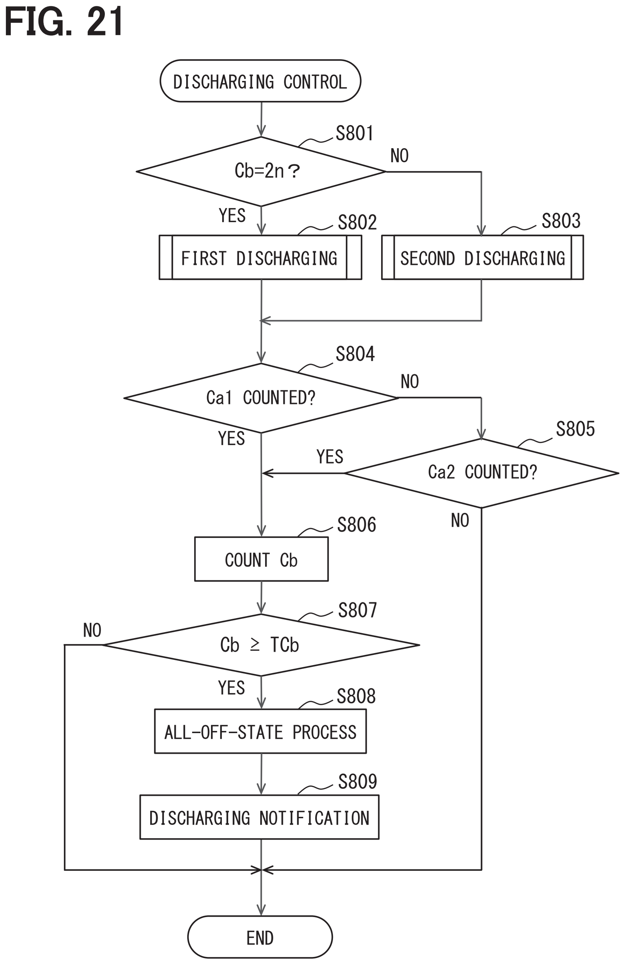

In the present embodiment, the discharging control process will be described with reference to a flowchart of FIG. 21. The discharging control process includes both a process performed on the first inverter device 801 and a process performed on the second inverter device 802. For example, the discharging control process includes a process of discharging the first smoothing capacitor 114a by switching the first inverter circuit 851 and a process of discharging the second smoothing capacitor 114b by switching the second inverter circuit 852.

In step S801 shown in FIG. 21, the flight control device 40 determines whether a common counter Cb is n times 2. The flight control device 40 determines whether the common counter Cb is an even number. When the common counter Cb is an even number, the flight control device 40 proceeds to step S802.

In step S802, the flight control device 40 performs a first discharging process. The first discharging process is a process for performing discharging in the first inverter device 801. In the first discharging process, the upper-on-state process and the lower-on-state process are alternately and repeatedly performed on the first inverter device 801. That is, in the first discharging process, a process for repeatedly shifting the first inverter circuit 851 to the upper-on-state and the lower-on-state is performed. A function of executing the process in step S802 in the flight control device 40 corresponds to a first shifting unit.

After the first discharging process, the flight control device 40 proceeds to step S804. In step S804, the flight control device 40 determines whether a first upper-lower counter Ca1 is counted in the current discharging control process. The first upper-lower counter Ca1 indicates the number of times which is a total of the number of times of completion of the upper-on-state process and the number of times of completion of the lower-on-state process in the first discharging process. When the first upper-lower counter Ca1 is counted, the flight control device 40 determines that one of the upper-on-state process and the lower-on-state process is completed in the first discharging process, and proceeds to step S806.

When the first upper-lower counter Ca1 is not counted, the flight control device 40 proceeds to step S805. In step S805, the flight control device 40 determines whether a second upper-lower counter Ca2 is counted in the current discharging control process. The second upper-lower counter Ca2 indicates the number of times which is a total of the number of times of completion of the upper-on-state process and the number of times of completion of the lower-on-state process in a second discharging process. When the second upper-lower counter Ca2 is counted, the flight control device 40 determines that one of the upper-on-state process and the lower-on-state process is completed in the second discharging process, and proceeds to step S806.

When the first upper-lower counter Ca1 or the second upper-lower counter Ca2 is counted, the flight control device 40 counts the common counter Cb in step S806. The flight control device 40 adds a predetermined addition value to the common counter Cb. For example, the flight control device 40 increments the common counter Cb by 1 with the addition value set to 1. The common counter Cb is set in the memory 43 or the like. After the first discharging process is performed when the common counter Cb is an even number, the common counter Cb is counted and becomes an odd number.

In step S807, the flight control device 40 determines whether the common counter Cb reaches a common counter threshold TCb. The common counter threshold TCb is a value determined in advance by a test or the like, and is stored in the memory 43 or the like. The common counter threshold TCb is a value indicating the number of times the first discharging process and the second discharging process to be described later are performed. As the common counter threshold TCb increases, the number of times the first discharging process and the second discharging process are performed increases. Regarding the common counter threshold TCb, a length of a period in which the discharging in the first inverter device 801 performed by the first discharging process is continued and a length of a period in which the discharging in the second inverter device 802 performed by the second discharging process is continued are set.

When the common counter Cb does not reach the common counter threshold TCb, the flight control device 40 ends the discharging control process as it is. In this case, the flight control device 40 performs the process in step S801 in the next discharging control process.

When the common counter Cb is not an even number in step S801, the flight control device 40 proceeds to step S803. In step S803, the flight control device 40 performs the second discharging process. The second discharging process is a process for performing the discharging in the second inverter device 802. In the second discharging process, the upper-on-state process and the lower-on-state process are alternately and repeatedly performed on the second inverter device 802. That is, in the second discharging process, a process for repeatedly shifting the second inverter circuit 852 to the upper-on-state and the lower-on-state is performed. The second discharging process will be described later. A function of executing the process in step S803 in the flight control device 40 corresponds to a second shifting unit.

After the second discharging process, the flight control device 40 performs the processes in steps S804 and S805. When the first upper-lower counter Ca1 or the second upper-lower counter Ca2 is counted in steps S804 and S805, the flight control device 40 proceeds to step S806 and counts the common counter Cb. After the second discharging process is performed when the common counter Cb is an odd number, the common counter Cb is counted and becomes an even number. In step S807, when the common counter Cb does not reach the common counter threshold TCb, the flight control device 40 performs the process in step S801 in the next discharging control process.

The flight control device 40 alternately repeats the first discharging process in step S802 and the second discharging process in step S803 until the common counter Cb reaches the common counter threshold TCb. When the common counter Cb reaches the common counter threshold TCb, the flight control device 40 proceeds to step S808 and performs the all-off-state process. The all-off-state process is a process for shifting each of the first inverter circuit 851 and the second inverter circuit 852 to the all-off-state. When the common counter Cb reaches the common counter threshold TCb, the flight control device 40 resets the common counter Cb to zero.

In step S809, the flight control device 40 performs the discharging notification process as in step S205 of the first embodiment. In the discharging notification process of the present embodiment, it is notified that the discharging in the first inverter device 801 and the second inverter device 802 is performed by the first discharging process and the second discharging process.

The flight control device 40 repeatedly performs the flight control process to repeatedly shift the inverter circuits 851 and 852 between the upper-on-state and the lower-on-state in steps S801 to S807. A function of executing the processes in steps S801 to S807 in the flight control device 40 corresponds to the conversion shifting unit. In steps S801 to S809, the flight control device 40 operates the arm switches 116 and 117 such that the residual electric power in the smoothing capacitors 114a and 114b is discharged to the inverter circuits 851 and 852. A function of executing the processes in steps S801 to S809 in the flight control device 40 corresponds to the conversion discharging unit.

The flight control device 40 shifts a timing at which the first inverter circuit 851 is shifted from one of the upper-on-state and the lower-on-state to the other and a timing at which the second inverter circuit 852 is shifted from one of the upper-on-state and the lower-on-state to the other, so as not to coincide with each other. For example, the flight control device 40 uses the common counter Cb to shift a timing at which the upper-on-state process or the lower-on-state process is started in the first discharging process and a timing at which the upper-on-state process or the lower-on-state process is started in the second discharging process. A function of executing the processes in steps S801, S806, and S807 in the flight control device 40 corresponds to a timing shifting unit.

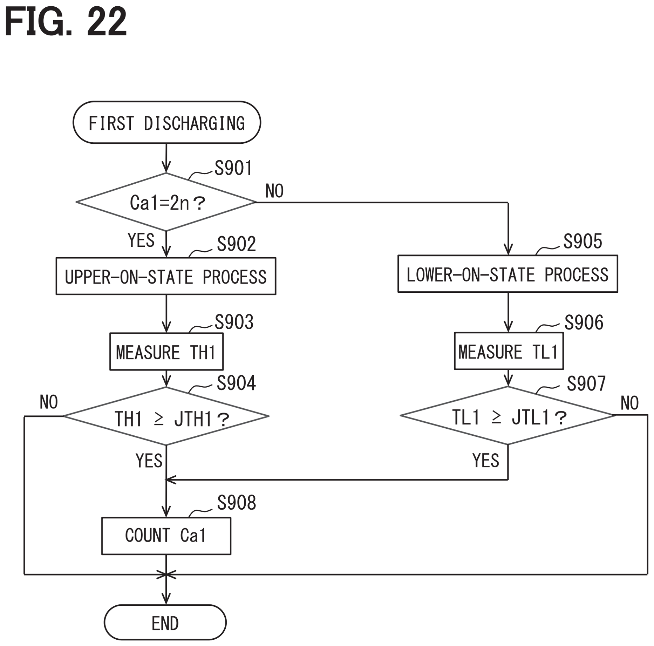

Next, the first discharging process will be described with reference to a flowchart of FIG. 22. The flight control device 40 performs processes in steps S901 to S908 shown in FIG. 22. The processes in steps S901 to S908 correspond to the processes in steps S701 to S708 in the seventh embodiment. In the first discharging process, the upper-lower counter Ca is referred to as the first upper-lower counter Ca1, the upper-on-state time TH is referred to as a first upper-on-state time TH1, and the upper-on-state threshold JTH is referred to as a first upper-on-state threshold JTH1. The lower-on-state time TL is referred to as a first lower-on-state time TL1, and the lower-on-state threshold JTL is referred to as a first lower-on-state threshold JTL1.

When the first upper-lower counter Ca1 is an even number in step S901, the flight control device 40 performs the upper-on-state process in step S902, and measures the first upper-on-state time TH1 in step S903. The flight control device 40 continues the upper-on-state process until the first upper-on-state time TH1 reaches the first upper-on-state threshold JTH1 in step S904. When the first upper-on-state time TH1 reaches the first upper-on-state threshold JTH1, the flight control device 40 counts the first upper-lower counter Ca1 in step S908.

When the first upper-lower counter Ca1 is not an even number, the flight control device 40 performs the lower-on-state process in step S905, and measures the first lower-on-state time TL1 in step S906. The flight control device 40 continues the lower-on-state process until the first lower-on-state time TL1 reaches the first lower-on-state threshold JTL1 in step S907. When the first lower-on-state time TL1 reaches the first lower-on-state threshold JTL1, the flight control device 40 counts the first upper-lower counter Ca1 in step S908.

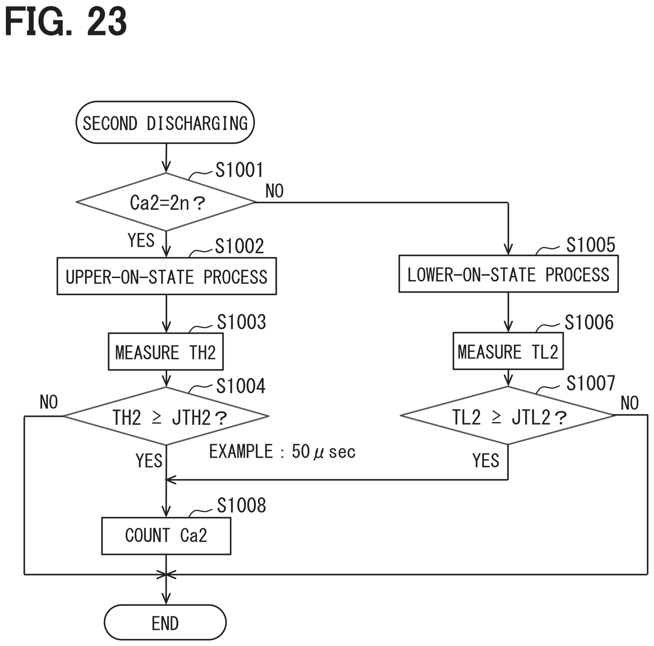

The second discharging process will be described with reference to a flowchart of FIG. 23. The flight control device 40 performs processes in steps S1001 to S1008 shown in FIG. 23. The processes in steps S1001 to S1008 correspond to the processes in steps S701 to S708 in the seventh embodiment. In the second discharging process, the upper-lower counter Ca is referred to as the second upper-lower counter Ca2, the upper-on-state time TH is referred to as a second upper-on-state time TH2, and the upper-on-state threshold JTH is referred to as a second upper-on-state threshold JTH2. The lower-on-state time TL is referred to as a second lower-on-state time TL2, and the lower-on-state threshold JTL is referred to as a second lower-on-state threshold JTL2.

When the second upper-lower counter Ca2 is an even number in step S1001, the flight control device 40 performs the upper-on-state process in step S1002, and measures the second upper-on-state time TH2 in step S1003. The flight control device 40 continues the upper-on-state process until the second upper-on-state time TH2 reaches the second upper-on-state threshold JTH2 in step S1004. When the second upper-on-state time TH2 reaches the second upper-on-state threshold JTH2, the flight control device 40 counts the second upper-lower counter Ca2 in step S1008.

When the second upper-lower counter Ca2 is not an even number, the flight control device 40 performs the lower-on-state process in step S1005, and measures the second lower-on-state time TL2 in step S1006. The flight control device 40 continues the lower-on-state process until the second lower-on-state time TL2 reaches the second lower-on-state threshold JTL2 in step S1007. When the second lower-on-state time TL2 reaches the second lower-on-state threshold JTL2, the flight control device 40 counts the second upper-lower counter Ca2 in step S1008.

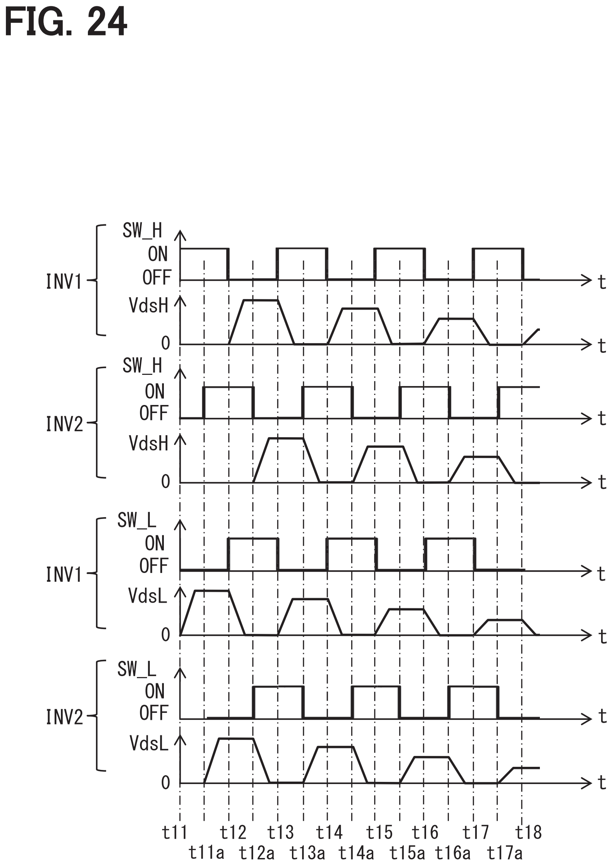

Next, switching modes of the inverter circuits 851 and 852 according to the discharging control process will be described with reference to FIG. 24. FIG. 24 illustrates the first inverter circuit 851 as INV1 and the second inverter circuit 852 as INV2. In the first inverter circuit 851 and the second inverter circuit 852, the parasitic voltages VdsH and VdsL change according to the start and the end of the upper-on-state process or the lower-on-state process, similar to the parasitic voltages VdsH and VdsL of the seventh embodiment.

As shown in FIG. 24, at the timing t11, the upper-on-state process is started in the first discharging process, thus the upper arm switch 116 is switched to the on-state and the lower arm switch 117 is switched to the off-state in the first inverter circuit 851. Then, at a timing t12, the upper-on-state process is ended in the first discharging process, and the lower-on-state process is started. In the first inverter circuit 851, the second upper-on-state process is started at a timing t13, and the second lower-on-state process is started at a timing t14.

In the second discharging process, the upper-on-state process is started at a timing different from those of the upper-on-state process and the lower-on-state process in the first discharging process. For example, the upper-on-state process in the second discharging process is started at a timing t11a. The timing t11a is a timing between the timing t11 at which the upper-on-state process in the first discharging process is started and the timing t12 at which the lower-on-state process in the first discharging process is started. In the discharging control process, since the first discharging process and the second discharging process are alternately performed according to whether the common counter Cb is an even number, the timing t11a is a timing midway between the timing t11 and the timing t12.

In the second discharging process, the lower-on-state process is started at a timing different from those of the upper-on-state process and the lower-on-state process in the first discharging process. For example, the lower-on-state process in the second discharging process is started at timing t12a. The timing t12a is a timing between the timing t12 at which the lower-on-state process in the first discharging process is started and the timing t13 at which the upper-on-state process in the first discharging process is started. In the discharging control process, since the first discharging process and the second discharging process are alternately performed according to whether the common counter Cb is an even number, the timing t12a is a timing midway between the timing t12 and the timing t13.

According to the present embodiment, the flight control device 40 shifts a timing at which the first inverter circuit 851 is shifted from one of the upper-on-state and the lower-on-state to the other and a timing at which the second inverter circuit 852 is shifted from one of the upper-on-state and the lower-on-state to the other. In the configuration, even if noise such as EMC noise occurs due to the switching of the inverter circuits 851 and 852, a timing at which the noise occurs can be shifted between the first inverter circuit 851 and the second inverter circuit 852. Therefore, occurrence of an abnormality in the inverter circuits 851 and 852 due to overlapping of noises generated in the first inverter circuit 851 and the second inverter circuit 852 can be limited.

In the present embodiment, the first inverter circuit 851 and the second inverter circuit 852 are electrically connected via the P-line 111 and the N-line 112. In the configuration, there is a concern that the noise generated by switching of the inverter circuits 851 and 852 is transmitted to the inverter circuits 851 and 852 or a filter circuit via the P-line 111 and the N-line 112. For example, the filter circuit is a DC-side filter circuit, and is provided between the battery 31 and the smoothing capacitors 114a and 114b. Meanwhile, according to the present embodiment, since the timing at which the noise occurs due to the switching is shifted between the first inverter circuit 851 and the second inverter circuit 852, a peak value of the noise to be transmitted to the filter circuit or the like can be reduced.

### <Ninth Embodiment>

In the seventh embodiment, when the upper-on-state process or the lower-on-state process is alternately repeated, the duration of the upper-on-state process or the lower-on-state process is kept constant. Meanwhile, in a ninth embodiment, the duration of the upper-on-state process or the lower-on-state process is gradually shortened. Configurations, operations, and effects not particularly described in the ninth embodiment are the same as those in the seventh embodiment. In the ninth embodiment, differences from the seventh embodiment will be mainly described.

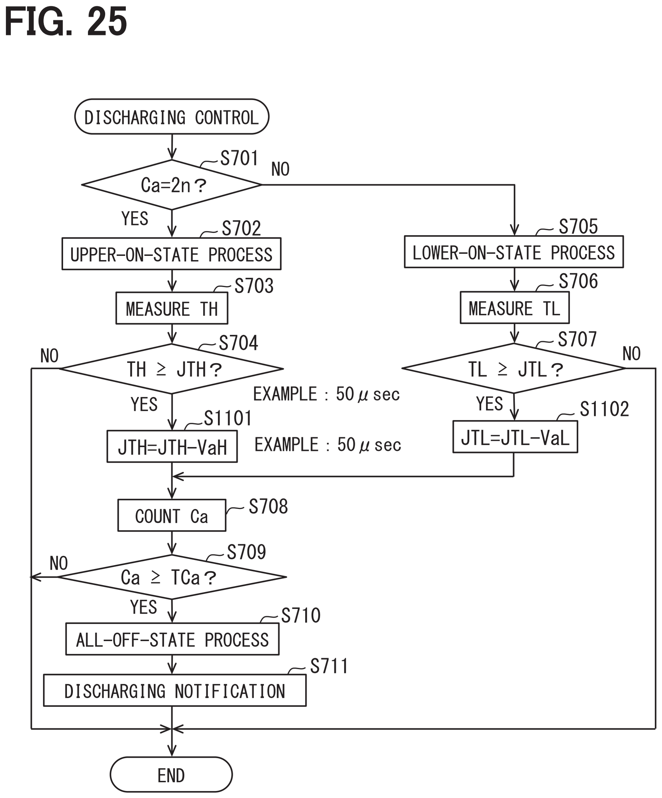

In the present embodiment, the discharging control process will be described with reference to a flowchart of FIG. 25. The flight control device 40 performs the processes in steps S701 to S711, as in the seventh embodiment. When the upper-on-state time TH reaches the upper-on-state threshold JTH in step S704 after the upper-on-state process is performed in step S702, the flight control device 40 proceeds to step S1101.

In step S1101, the flight control device 40 subtracts an upper subtraction value VaH from the upper-on-state threshold JTH. The upper subtraction value VaH is a value determined in advance by a test or the like, and is stored in the memory 43 or the like. The upper subtraction value VaH is set to several µsec, for example. The upper-on-state threshold JTH1 decreases by the upper subtraction value VaH every time the upper-on-state process is repeated. The flight control device 40 sets the period during which the next upper-on-state process is continued to be shorter than the period during which the current upper-on-state process is continued. A function of executing the process in step S1101 in the flight control device 40 corresponds to an upper shortening unit.

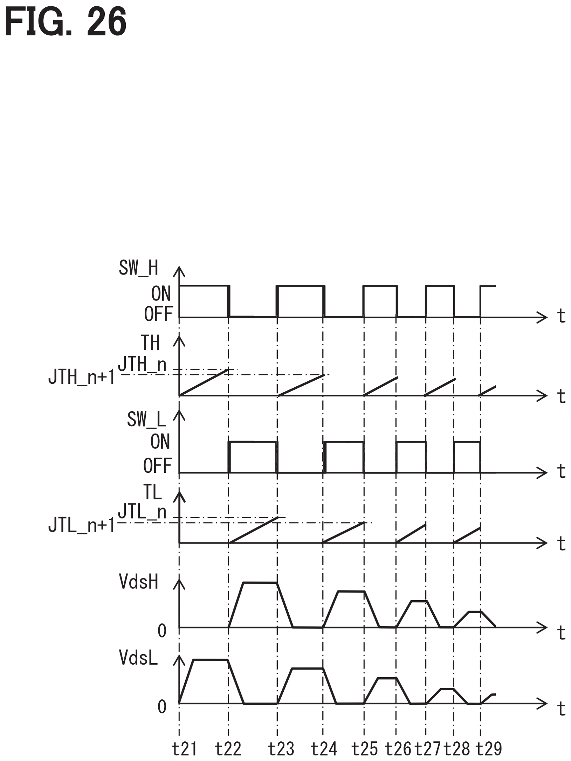

For example, as shown in FIG. 26, a next upper-on-state threshold JTH_n+1 is smaller than a current upper-on-state threshold JTH_n by the upper subtraction value VaH. The next upper-on-state threshold JTH_n+1 corresponds to a next period during which the upper-on-state is maintained. The current upper-on-state threshold JTH_n corresponds to a period during which the current upper-on-state is maintained. Every time the inverter circuit 85 is shifted to the upper-on-state, the period during which the inverter circuit 85 is maintained in the upper-on-state is shortened by the upper subtraction value VaH. For example, a period from a timing t23 to a timing t24 during which the second upper-on-state process is continued is shorter than a period from the timing t21 to the timing t22 during which the first upper-on-state process is continued. Every time the inverter circuit 85 is shifted to the lower-on-state, an interval between the two lower-on-states before and after the shifting is shortened by the upper subtraction value VaH.

Returning to FIG. 25, when the lower-on-state time TL reaches the lower-on-state threshold JTL in step S707 after the lower-on-state process is performed in step S705, the flight control device 40 proceeds to step S1102.

In step S1102, the flight control device 40 subtracts a lower subtraction value VaL from the lower-on-state threshold JTL. The lower subtraction value VaL is a value determined in advance by a test or the like, and is stored in the memory 43 or the like. The lower subtraction value VaL is set to several µsec, for example. The lower-on-state threshold JTL1 decreases by the lower subtraction value VaL every time the lower-on-state process is repeated. The flight control device 40 sets a period during which the next lower-on-state process is continued to be shorter than a period during which the current lower-on-state process is continued. A function of executing the process in step S1102 in the flight control device 40 corresponds to a lower shortening unit.

For example, as shown in FIG. 26, a next lower-on-state threshold JTL_n+1 is smaller than a current lower-on-state threshold JTL_n by the lower subtraction value VaL. The next lower-on-state threshold JTL_n+1 corresponds to a next period during which the lower-on-state is maintained. The current lower-on-state threshold JTL_n corresponds to a period in which the current lower-on-state is maintained. Every time the inverter circuit 85 is shifted to the lower-on-state, the period during which the inverter circuit 85 is maintained in the lower-on-state is shortened by the lower subtraction value VaL. For example, a period from the timing t24 to a timing t25 during which the second lower-on-state process is continued is shorter than a period from the timing t22 to the timing t23 during which the first lower-on-state process is continued. Every time the inverter circuit 85 is shifted to the upper-on-state, an interval between the two upper-on-states before and after the shifting is shortened by the lower subtraction value VaL.

In the present embodiment, a function of executing the processes in steps S1101 and S1102 in the flight control device 40 is included in the conversion shifting unit and the conversion discharging unit.

According to the present embodiment, for the inverter circuit 85, the flight control device 40 sets the period during which the next upper-on-state is maintained to be shorter than the period during which the current upper-on-state is maintained, and sets the period during which the next lower-on-state is maintained to be shorter than the period during which the current lower-on-state is maintained. In the configuration, a period during which the upper parasitic voltage VdsH is held at the upper peak voltage VdsHp and a period during which the lower parasitic voltage VdsL is held at the lower peak voltage VdsLp can be shortened. Therefore, a time required to discharge the residual electric power in the smoothing capacitor 114 to the inverter circuit 85 can be shortened.

The switch components 116P and 117P generate heat more easily as the peak voltages VdsHp and VdsLp increase. When the upper-on-state process and the lower-on-state process are repeated, the peak voltages VdsHp and VdsLp gradually decrease. Therefore, the heat generated in the switch components 116P and 117P decreases when the upper-on-state process and the lower-on-state process are repeated. Accordingly, as in the present embodiment, even if the duration of the next upper-on-state process is shorter than the duration of the current lower-on-state process, the temperatures of the switch components 116P and 117P are less likely to be increased by the heat generated in the switch components 116P and 117P. Accordingly, the time required to discharge the smoothing capacitor 114 can be shortened while preventing the temperatures of the switch components 116P and 117P from becoming excessively high.

When the smoothing capacitor 114 is discharged, since a large amount of electric charges still remains in the smoothing capacitor 114 immediately after the start of the discharging, an amount of heat generated in the switch components 116P and 117P by driving the inverter circuit 85 tends to be large. Therefore, first, from the viewpoint of preventing overheating of the switch components 116P and 117P, the duration of the upper-on-state process or the lower-on-state process is lengthened. When the discharging of the smoothing capacitor 114 progresses and the remaining charges in the smoothing capacitor 114 decrease, amounts of heat dissipated in the switch components 116P and 117P also tend to decrease. Therefore, by shortening the duration of the upper-on-state process or the lower-on-state process, the discharging of the smoothing capacitor 114 is completed quickly. The cycle may be changed stepwise or continuously. The duration of the upper-on-state process or the lower-on-state process may be simply referred to as a cycle.

### <Tenth Embodiment>

In the ninth embodiment, when the upper-on-state process and the lower-on-state process are alternately repeated, the duration of the upper-on-state process and the lower-on-state process is gradually shortened. Meanwhile, in a tenth embodiment, the duration of the upper-on-state process or the lower-on-state process is set according to a state of the smoothing capacitor 114. Configurations, operations, and effects not particularly described in the tenth embodiment are the same as those in the seventh embodiment. In the tenth embodiment, differences from the seventh embodiment will be mainly described.

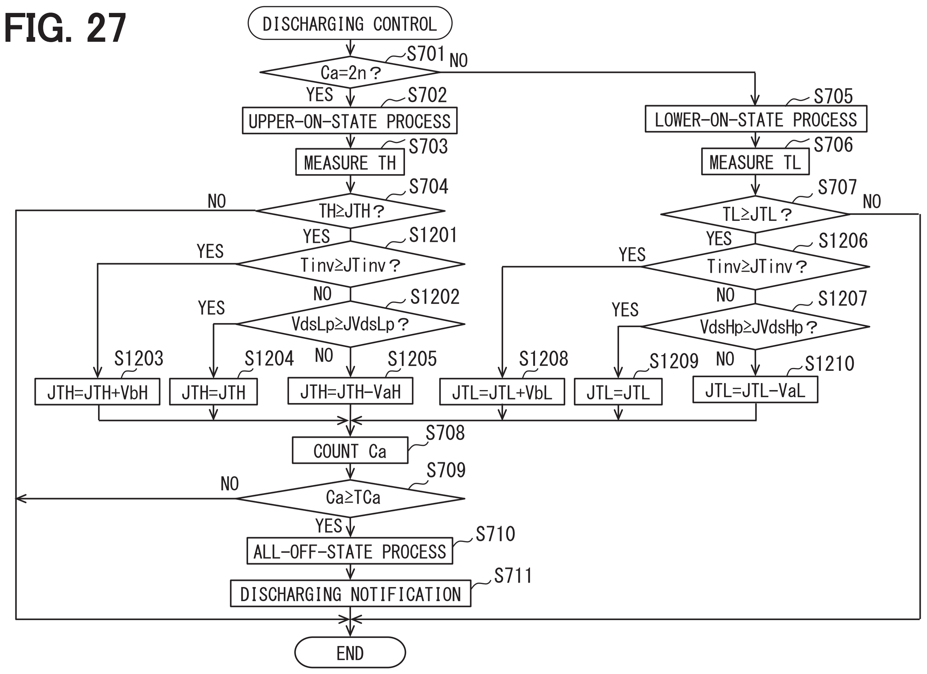

In the present embodiment, the discharging control process will be described with reference to a flowchart of FIG. 27. The flight control device 40 performs the processes in steps S701 to S711, as in the seventh embodiment and the ninth embodiment. When the upper-on-state time TH reaches the upper-on-state threshold JTH in step S704 after the upper-on-state process is performed in step S702, the flight control device 40 proceeds to step S1201.

In step S1201, the flight control device 40 determines whether an inverter temperature Tinv reaches an inverter temperature threshold JTinv. The inverter temperature Tinv is the temperature of the inverter device 80. Examples of the inverter temperature Tinv include the temperatures of the switch components 116P and 117P or the temperature of the inverter circuit 85. The inverter temperature Tinv is a parameter indicating the state of the inverter circuit 85. The flight control device 40 acquires the inverter temperature Tinv using the detection signal of the inverter temperature sensor 153. The inverter temperature threshold JTinv is a value determined in advance by a test or the like, and is stored in the memory 43 or the like.

When the inverter temperature Tinv reaches the inverter temperature threshold JTinv, the flight control device 40 proceeds to step S1203. In step S1203, the flight control device 40 adds an upper addition value VbH to the upper-on-state threshold JTH. The upper addition value VbH is a value determined in advance by a test or the like, and is stored in the memory 43 or the like. The upper addition value VbH is set to several µsec, for example. When the inverter temperature Tinv reaches the inverter temperature threshold JTinv, the upper-on-state threshold JTH increases by the upper addition value VbH every time the upper-on-state process is repeated. In this case, the flight control device 40 sets the period during which the next upper-on-state process is continued to be longer than the period during which the current upper-on-state process is continued.

When the inverter temperature Tinv does not reach the inverter temperature threshold JTinv, the flight control device 40 proceeds to step S1202. In step S1202, the flight control device 40 determines whether the lower peak voltage VdsLp is equal to or higher than a lower peak threshold JVdsLp. The lower peak voltage VdsLp is a parameter indicating a charging state or a discharging state of the lower parasitic capacitance 117b. The lower peak voltage VdsLp is one of parameters indicating the state of the inverter circuit 85.

The lower peak threshold JVdsLp is a value determined in advance by a test or the like, and is stored in the memory 43 or the like. The lower peak threshold JVdsLp is set to a value at which the heat generated in the lower switch component 117P does not excessively increase as the lower parasitic capacitance 117b is charged or discharged. For example, when the lower peak voltage VdsLp is equal to or higher than the lower peak threshold JVdsLp, the heat generation of the lower switch component 117P tends to increase as the lower parasitic capacitance 117b is charged or discharged. When the lower peak voltage VdsLp is smaller than the lower peak threshold JVdsLp, the heat generation of the lower switch component 117P is unlikely to increase even when the lower parasitic capacitance 117b is charged or discharged.

When the lower peak voltage VdsLp is equal to or higher than the lower peak threshold JVdsLp, the flight control device 40 proceeds to step S1204. In step S1204, the flight control device 40 holds the upper-on-state threshold JTH at a current value without increasing or decreasing the upper-on-state threshold JTH.

When the lower peak voltage VdsLp is not equal to or higher than the lower peak threshold JVdsLp, the flight control device 40 proceeds to step S1205. In step S1205, the flight control device 40 subtracts the upper subtraction value VaH from the upper-on-state threshold JTH as in step S1101 of the ninth embodiment. A function of executing the process in step S1205 in the flight control device 40 corresponds to the upper shortening unit.

In steps S1201 to S1205, the flight control device 40 variably sets the upper-on-state threshold JTH according to the state of the inverter circuit 85. The upper-on-state threshold JTH indicates a period during which the inverter circuit 85 is maintained in the upper-on-state. The upper-on-state threshold JTH corresponds to an upper-maintaining period. A function of executing the processes in steps S1201 to S1205 in the flight control device 40 corresponds to a maintaining setting unit.

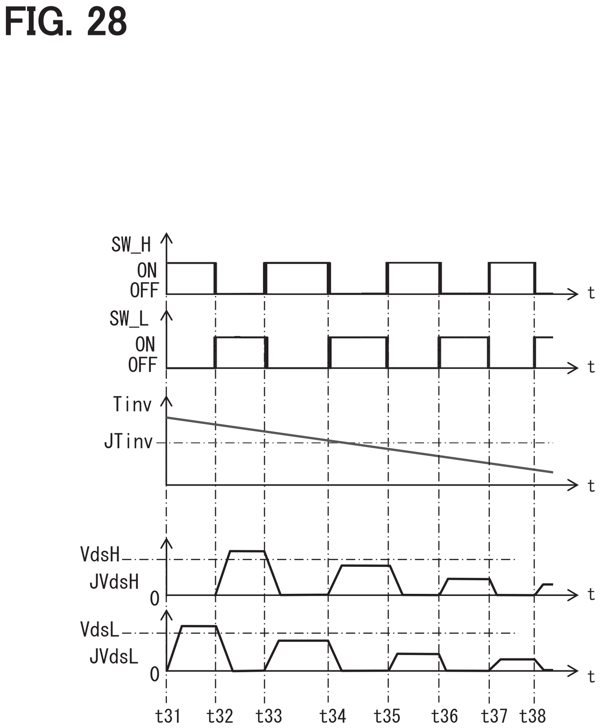

As shown in FIG. 28, a case is assumed in which the first upper-on-state process and the second upper-on-state process are started in a situation where the inverter temperature Tinv is higher than the inverter temperature threshold JTinv. In this case, a period from a timing t33 to a timing t34 during which the second upper-on-state process is continued is longer than a period from a timing t31 to a timing t32 during which the first upper-on-state process is continued. At a timing t35 at which a third upper-on-state process is started, the inverter temperature Tinv is lower than the inverter temperature threshold JTinv. In the second upper-on-state process, the lower peak voltage VdsLp is smaller than the lower peak threshold JVdsLp. Accordingly, a period from a timing t35 to a timing t36 during which the third upper-on-state process is continued is shorter than the period from the timing t33 to the timing t34 during which the second upper-on-state process is continued.

Returning to FIG. 27, when the lower-on-state time TL reaches the lower-on-state threshold JTL in step S707 after the lower-on-state process is performed in step S705, the flight control device 40 proceeds to step S1206.

In step S1206, the flight control device 40 determines whether the inverter temperature Tinv reaches the inverter temperature threshold JTinv, as in step S1201. When the inverter temperature Tinv reaches the inverter temperature threshold JTinv, the flight control device 40 proceeds to step S1208.

In step S1208, the flight control device 40 adds a lower addition value VbL to the lower-on-state threshold JTL. The lower addition value VbL is a value determined in advance by a test or the like, and is stored in the memory 43 or the like. The lower addition value VbL is set to several µsec, for example. When the inverter temperature Tinv reaches the inverter temperature threshold JTinv, the lower-on-state threshold JTL increases by the lower addition value VbL every time the lower-on-state process is repeated. In this case, the flight control device 40 sets the period during which the next lower-on-state process is continued to be longer than the period during which the current lower-on-state process is continued.

When the inverter temperature Tinv does not reach the inverter temperature threshold JTinv, the flight control device 40 proceeds to step S1207. In step S1207, the flight control device 40 determines whether the upper peak voltage VdsHp is equal to or higher than an upper peak threshold JVdsHp. The upper peak voltage VdsHp is a parameter indicating a charging state or a discharging state of the upper parasitic capacitance 116b. The upper peak voltage VdsHp is one of the parameters indicating the state of the inverter circuit 85.

The upper peak threshold JVdsHp is a value determined in advance by a test or the like, and is stored in the memory 43 or the like. The upper peak threshold JVdsHp is set to a value at which heat generated in the upper switch component 116P does not increase excessively as the upper parasitic capacitance 116b is charged or discharged. For example, when the upper peak voltage VdsHp is equal to or higher than the upper peak threshold JVdsHp, the heat generation of the upper switch component 116P tends to increase as the upper parasitic capacitance 116b is charged or discharged. When the upper peak voltage VdsHp is smaller than the upper peak threshold JVdsHp, the heat generation of the upper switch component 116P is unlikely to increase even when the upper parasitic capacitance 116b is charged or discharged.

When the upper peak voltage VdsHp is equal to or higher than the upper peak threshold JVdsHp, the flight control device 40 proceeds to step S1209. In step S1209, the flight control device 40 holds the lower-on-state threshold JTL at a current value without increasing or decreasing the lower-on-state threshold JTL.

When the upper peak voltage VdsHp is not equal to or higher than the upper peak threshold JVdsHp, the flight control device 40 proceeds to step S1210. In step S1210, the flight control device 40 subtracts the lower subtraction value VaL from the lower-on-state threshold JTL as in step S1102 of the ninth embodiment. A function of executing the process in step S1210 in the flight control device 40 corresponds to the lower shortening unit.

In steps S1206 to S1210, the flight control device 40 variably sets the lower-on-state threshold JTL according to the state of the inverter circuit 85. The lower-on-state threshold JTL indicates a period during which the inverter circuit 85 is maintained in the lower-on-state. The lower-on-state threshold JTL corresponds to a lower-maintaining period. A function of executing the processes in steps S1206 to S1210 in the flight control device 40 corresponds to the maintaining setting unit. A function of executing the processes in steps S1201 to S1210 in the flight control device 40 is included in the conversion shifting unit and the conversion discharging unit.

As shown in FIG. 28, a case is assumed in which the first lower-on-state process and the second lower-on-state process are started in a situation where the inverter temperature Tinv is higher than the inverter temperature threshold JTinv. In this case, a period from a timing t34 to a timing t35 during which the second lower-on-state process is continued is longer than a period from a timing t32 to a timing t33 during which the first lower-on-state process is continued. At a timing t36 at which a third lower-on-state process is started, the inverter temperature Tinv is lower than the inverter temperature threshold JTinv. In the second lower-on-state process, the upper peak voltage VdsHp is smaller than the upper peak threshold JVdsHp. Accordingly, a period from the timing t36 to a timing t37 during which the third lower-on-state process is continued is shorter than the period from the timing t34 to the timing t35 during which the second lower-on-state process is continued.

According to the present embodiment, the flight control device 40 sets, according to the state of the inverter circuit 85, a time during which the inverter circuit 85 is maintained in the upper-on-state and a time during which the inverter circuit 85 is maintained in the lower-on-state. In the configuration, one of the limitation in temperature increase of the inverter circuit 85 and the shortening in discharging time of the smoothing capacitor 114 can be prioritized according to the state of the inverter circuit 85. For example, when the inverter temperature Tinv is high, the limitation in temperature increase of the inverter circuit 85 can be prioritized over the shortening in discharging time of the smoothing capacitor 114, and the time during which the inverter circuit 85 is maintained in the upper-on-state or the lower-on-state can be set to be longer. In this case, by extending the period during which the parasitic voltages VdsH and VdsL are held at the peak voltages VdsHp and VdsLp, heat dissipation of the inverter circuit 85 tends to be promoted.

When the inverter temperature Tinv is low, the shortening in discharging time of the smoothing capacitor 114 can be prioritized over the limitation in temperature increase of the inverter circuit 85, and the time during which the inverter circuit 85 is maintained in the upper-on-state or the lower-on-state can be set to be shorter. In this case, by shortening the period during which the parasitic voltages VdsH and VdsL are held at the peak voltages VdsHp and VdsLp, the time required to discharge the smoothing capacitor 114 tends to be shortened.

In the present embodiment, in order to rapidly discharge the smoothing capacitor 114, it is desired to switch the arm switches 116 and 117 at high speed. That is, it is desired to set a cycle for shifting the inverter circuit 85 between the upper-on-state and the lower-on-state to be a short cycle. However, the inverter circuit 85 may be overheated by driving the inverter circuit 85 in a state where there is no cooling air that actively cools the inverter circuit 85. Meanwhile, in response to a situation different from that at the time of driving the motor, the cycle for shifting the inverter circuit 85 between the upper-on-state and the lower-on-state is set to an optimum cycle, thereby enabling appropriate discharging control.

### <Eleventh Embodiment>

In an eleventh embodiment, capacitors different from the parasitic capacitances 116b and 117b are provided for each of the arm switches 116 and 117. Configurations, operations, and effects not particularly described in the eleventh embodiment are the same as those in the seventh embodiment. In the eleventh embodiment, differences from the seventh embodiment will be mainly described.

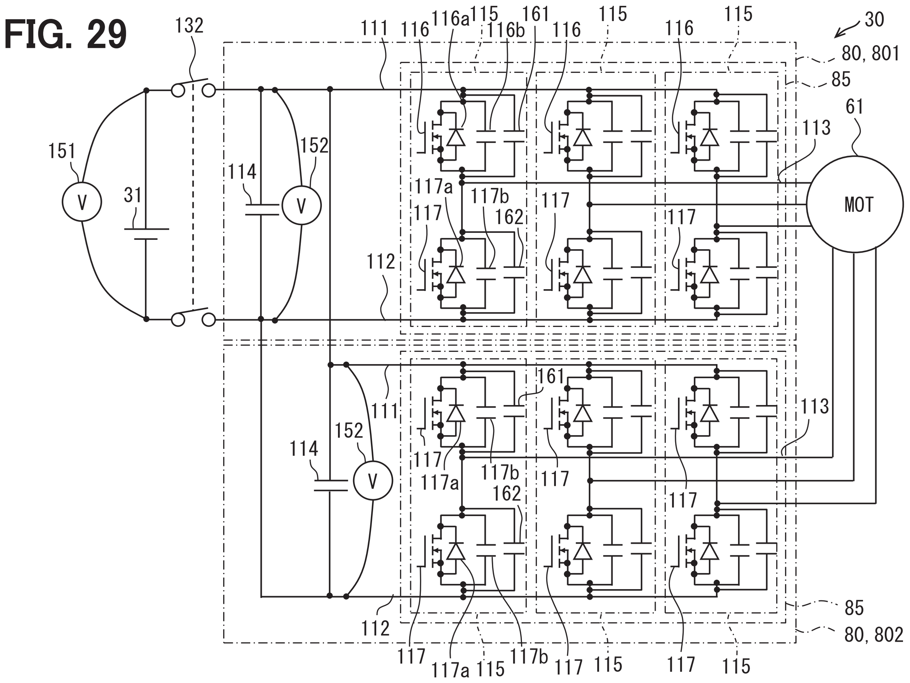

As shown in FIG. 29, the inverter device 80 includes upper snubber capacitors 161 and lower snubber capacitors 162. Each of the upper snubber capacitors 161 is connected in parallel to the upper arm switch 116. The upper snubber capacitor 161 is capable of reducing noise such as a surge voltage generated by switching of the upper arm switch 116. The upper snubber capacitor 161 is connected in parallel to the upper parasitic capacitance 116b. The upper snubber capacitor 161 may or may not be included in the upper switch component 116P.

Each of the lower snubber capacitors 162 is connected in parallel to the lower arm switch 117. The lower snubber capacitor 162 is capable of reducing noise such as a surge voltage generated by switching of the lower arm switch 117. The lower snubber capacitor 162 is connected in parallel to the lower parasitic capacitance 117b. The lower snubber capacitor 162 may or may not be included in the lower switch component 117P.

When the inverter circuit 85 is shifted to the upper-on-state, the residual electric power in the smoothing capacitor 114 is also stored in the lower snubber capacitor 162 in addition to the lower parasitic capacitance 117b. In addition to the electric power stored in the upper parasitic capacitance 116b, the electric power stored in the upper snubber capacitor 161 is discharged to the upper arm switch 116. When the inverter circuit 85 is shifted to the lower-on-state, the residual electric power in the smoothing capacitor 114 is also stored in the upper snubber capacitor 161 in addition to the upper parasitic capacitance 116b. In addition to the electric power stored in the lower parasitic capacitance 117b, the electric power stored in the lower snubber capacitor 162 is discharged to the lower arm switch 117. Accordingly, the time required to discharge the smoothing capacitor 114 can be shortened by the snubber capacitors 161 and 162.

A snubber resistor may be connected in series to each of the snubber capacitors 161 and 162. In the configuration, the electric power stored in the snubber capacitors 161 and 162 is likely to be consumed by the snubber resistors.

### <Twelfth Embodiment>

In a twelfth embodiment, the discharging control is started after the cut-off of the power supply to the motor 61 is detected. Configurations, operations, and effects not particularly described in the twelfth embodiment are the same as those in the sixth embodiment. In the twelfth embodiment, differences from the sixth embodiment will be mainly described.

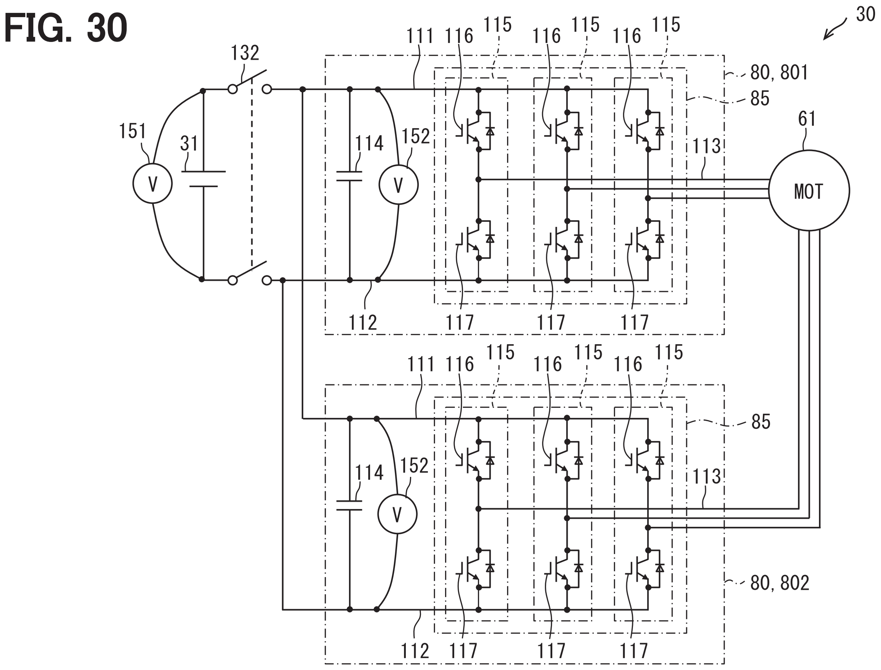

As shown in FIG. 30, the propulsion system 30 includes the battery voltage sensor 151 and the capacitor voltage sensors 152, as in the eighth embodiment. The capacitor voltage sensors 152 are respectively provided in the first inverter device 801 and the second inverter device 802.

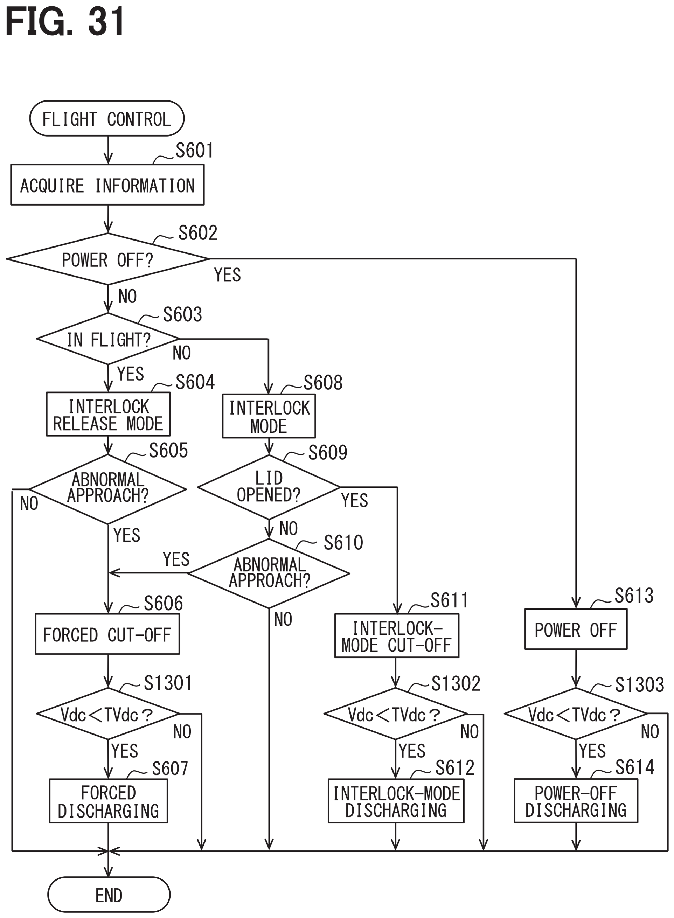

In the present embodiment, the flight control process will be described with reference to a flowchart of FIG. 31. The flight control device 40 performs the processes in steps S601 to S614, as in the sixth embodiment. After the forced cut-off process in step S606 is performed, the flight control device 40 proceeds to step S1301.

In step S1301, the flight control device 40 determines whether the capacitor voltage Vdc is smaller than a capacitor voltage threshold TVdc. The flight control device 40 acquires the capacitor voltage Vdc using the detection signal of the capacitor voltage sensor 152. The capacitor voltage threshold TVdc is a value determined in advance by a test or the like, and is stored in the memory 43 or the like. The capacitor voltage threshold TVdc is set to a value indicating that the power supply from the battery 31 to the inverter circuit 85 is cut off.

When the capacitor voltage Vdc is smaller than the capacitor voltage threshold TVdc, the flight control device 40 determines that the power supply from the battery 31 to the inverter circuit 85 is cut off, and performs the forced discharging process in step S607. In this case, a situation where the forced discharging process is performed in step S607 although the power supply from the battery 31 to the inverter circuit 85 is not normally cut off in step S606 is limited.

When the power supply switch 132 is normally turned off, in the inverter device 80, the capacitor voltage Vdc, which is a voltage in a high-voltage DC path, decreases to a value corresponding to the voltage of the battery 31. Therefore, the capacitor voltage threshold TVdc is set to a value lower than a voltage range in the switch-on state and higher than a voltage range in the switch-off state. The voltage range in the switch-on state is a voltage range that the capacitor voltage sensor 152 can detect when the power supply switch 132 is in the switch-on state. The voltage range in the switch-off state is a voltage range that can be generated by the residual electric power in the smoothing capacitor 114 when the power supply switch 132 is in the switch-off state. Accordingly, in the propulsion system 30, the discharging control can be appropriately and reliably started without causing an erroneous operation.

After the interlock-mode cut-off process in step S611 is performed, the flight control device 40 proceeds to step S1302. In step S1302, the flight control device 40 determines whether the capacitor voltage Vdc is smaller than the capacitor voltage threshold TVdc, as in step S1301. When the capacitor voltage Vdc is smaller than the capacitor voltage threshold TVdc, the flight control device 40 performs the interlock-mode discharging process in step S612. In this case, a situation where the interlock-mode discharging process is performed in step S612 although the power supply from the battery 31 to the inverter circuit 85 is not normally cut off in step S611 is limited.

After the power-off process in step S613 is performed, the flight control device 40 proceeds to step S1303. In step S1303, the flight control device 40 determines whether the capacitor voltage Vdc is smaller than the capacitor voltage threshold TVdc, as in step S1301. When the capacitor voltage Vdc is smaller than the capacitor voltage threshold TVdc, the flight control device 40 performs the power-off discharging process in step S614. In this case, a situation where the power-off discharging process is performed in step S614 although the power supply from the battery 31 to the inverter circuit 85 is not normally cut off in step S613 is limited.

In order to prevent the erroneous operation, it is preferable that, in all of steps S607, S612, and S614, start conditions of the discharging control include a condition that the capacitor voltage Vdc is smaller than the capacitor voltage threshold TVdc. However, in a process in which priority is given to a case where the discharging is started as early as possible, such as the forced discharging process or the interlock-mode discharging process in which the discharging is required in a short time, the start conditions of the discharging control may not include the condition that the capacitor voltage Vdc is smaller than the capacitor voltage threshold TVdc. Meanwhile, the condition that the capacitor voltage Vdc is smaller than the capacitor voltage threshold TVdc may be included in the start conditions of the discharging control only in the discharging control process during the power off.

### <Thirteenth Embodiment>

In a thirteenth embodiment, it is notified that the discharging control is not performed. Configurations, operations, and effects not particularly described in the thirteenth embodiment are the same as those in the sixth embodiment. In the thirteenth embodiment, differences from the sixth embodiment will be mainly described.

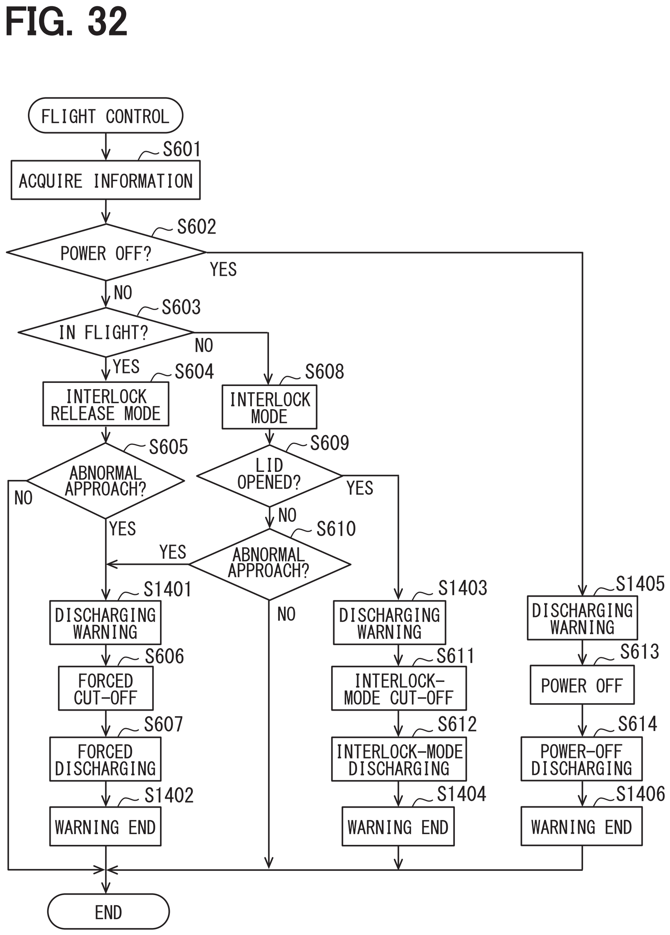

In the present embodiment, the flight control process will be described with reference to a flowchart of FIG. 32. The flight control device 40 performs the processes in steps S601 to S614, as in the sixth embodiment and the twelfth embodiment. When the eVTOL 10 and the obstacle abnormally approach each other in steps S605 and S610, the flight control device 40 proceeds to step S1401.

In step S1401, the flight control device 40 performs a discharging warning process. In the discharging warning process, the operator or the like is notified to warn that the power supply from the battery 31 to the motor 61 is not cut off, that a voltage is applied to the inverter high-voltage unit 86, that the residual electric power remains in the inverter high-voltage unit 86, and the like. Examples of the discharging warning process include a process of displaying a warning such as discharging control incompletion on a display, a process of turning on a lamp such as a warning lamp, and a process of generating a warning sound. The flight control device 40 issues a warning for reliably preventing the operator from receiving an electric shock during a period from when the discharging control is performed to when the discharging control is completed.

When the forced cut-off process and the forced discharging process are completed in steps S606 and S607 after step S1401, the flight control device 40 proceeds to step S1402. The flight control device 40 performs a warning end process in step S1402. In the warning end process, a process for ending the discharging warning process started in step S1401 is performed.

When the inverter lid portion 95 is in the open state in step S609, the flight control device 40 proceeds to step S1403. In step S1403, the flight control device 40 performs the discharging warning process as in step S1401. When the interlock-mode cut-off process and the interlock-mode discharging process are completed in steps S611 and S612 after step S1403, the flight control device 40 proceeds to step S1404. In step S1404, the flight control device 40 performs the warning end process as in step S1402.

When the eVTOL 10 is powered off in step S602, the flight control device 40 proceeds to step S1405. In step S1405, the flight control device 40 performs the discharging warning process as in step S1401. When the power-off process and the power-off discharging process are completed in steps S613 and S614 after step S1405, the flight control device 40 proceeds to step S1406. In step S1406, the flight control device 40 performs the warning end process, as in step S1402.

When the discharging control in step S607 or the like is completed before the discharging of the inverter high-voltage unit 86 is completed, the warning display is continued as long as a condition for the warning display is satisfied. Examples of the condition for the warning display include that the inverter lid portion 95 is in an open state.

### <Fourteenth Embodiment>

In a fourteenth embodiment, a process for resuming the power supply to the motor 61 is performed after the power supply to the motor 61 is cut off. Configurations, operations, and effects not particularly described in the fourteenth embodiment are the same as those in the sixth embodiment. In the fourteenth embodiment, differences from the sixth embodiment will be mainly described.

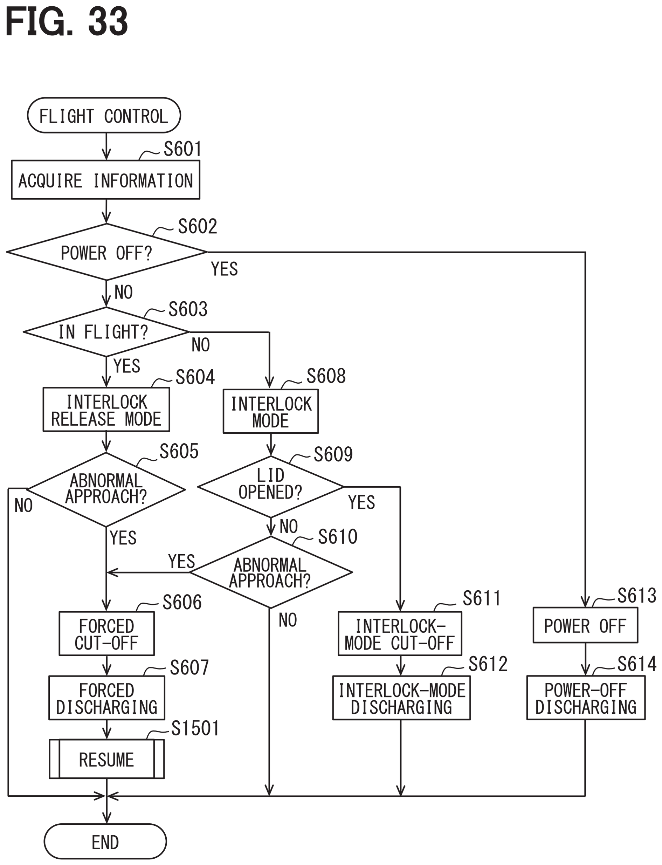

In the present embodiment, the flight control process will be described with reference to a flowchart of FIG. 33. The flight control device 40 performs the processes in steps S601 to S614, as in the sixth embodiment and the thirteenth embodiment. After the forced cut-off process and the forced discharging process in steps S606 and S607 are completed, the flight control device 40 proceeds to step S1501. The flight control device 40 performs a resuming process in step S1501. The resuming process is a process for resuming the power supply to the motor 61.

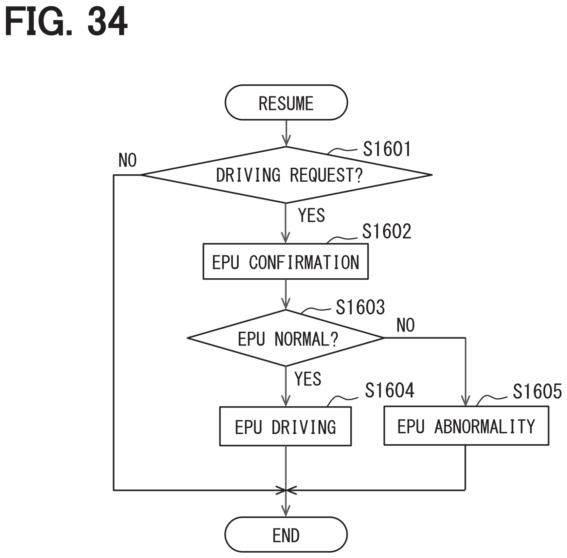

The resuming process will be described with reference to a flowchart of FIG. 34. In step S1601 shown in FIG. 34, the flight control device 40 determines whether there is a driving request. Examples of the case where there is a driving request include a case where a situation where the eVTOL 10 and the obstacle abnormally approach each other is resolved and a case where an operation for re-driving the EPU 50 is performed by a pilot or the like.

When there is a driving request, the flight control device 40 proceeds to step S1602. The flight control device 40 performs an EPU confirmation process in step S1602. In the EPU confirmation process, it is determined whether the EPU 50 is in a drivable state. Examples of the EPU confirmation process include a process of determining whether a detection value of a current sensor is normal and a process of determining whether a detection value of a voltage sensor is normal. When the detection value of the current sensor is normal, the flight control device 40 determines that it is confirmed that no short circuit, ground fault, electric leakage, or the like occurs in the P-line 111, the N-line 112, the inverter circuit 85, or the like.

In step S1603, the flight control device 40 determines whether the EPU 50 is normal. The flight control device 40 determines whether the EPU 50 is normal using information such as the current detection value acquired in the EPU confirmation process.

When the EPU 50 is normal, the flight control device 40 proceeds to step S1604 and performs an EPU driving process. In the EPU driving process, a process for restarting the driving of the EPU 50 is performed. Examples of the EPU driving process include a process of returning the power supply switch 132 from the switch-off state to the switch-on state.

When the EPU 50 is not normal, the flight control device 40 proceeds to step S1605 and performs an EPU abnormality process. Examples of the EPU abnormality process include a process of notifying that an abnormality of the EPU 50 occurs, and a process of not starting driving of the EPU 50. When the abnormal approach between the eVTOL 10 and the obstacle or the like is detected and the forced cut-off process and the forced discharging process are performed on the EPU 50, the EPU 50 cannot be re-driven even if the EPU 50 is normal. Meanwhile, in the present embodiment, in order to continue the flight of the eVTOL 10, the driving of the EPU is restarted if there is no abnormality in the EPU 50.

### <Fifteenth Embodiment>

In a fifteenth embodiment, when the power supply to the inverter high-voltage unit 86 is cut off, the power supply to the inverter low-voltage unit 87 is cut off. Configurations, operations, and effects not particularly described in the fifteenth embodiment are the same as those in the first embodiment. In the fifteenth embodiment, differences from the first embodiment will be mainly described.

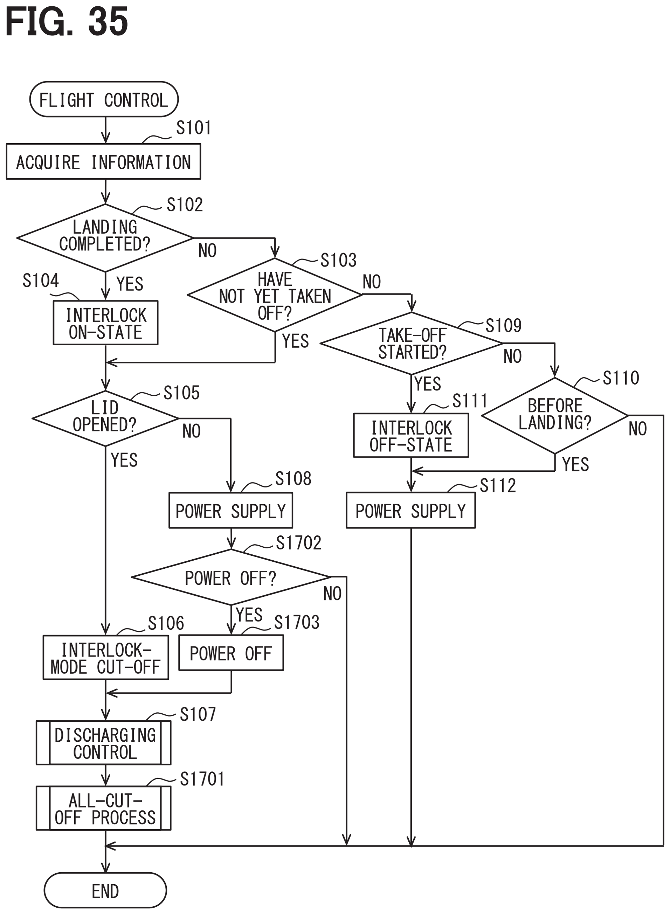

In the present embodiment, the flight control process will be described with reference to a flowchart of FIG. 35. The flight control device 40 performs the processes in steps S101 to S112, as in the first embodiment.

After the power supply process in step S108 is completed, the flight control device 40 proceeds to step S1702, and determines whether to turn off the power, as in step S602 of the sixth embodiment. When it is determined to turn off the power, the flight control device 40 proceeds to step S1703, and performs the power-off process, as in step S613 of the sixth embodiment. The processes in steps S1702 and S1703 may be individually performed for each of the multiple EPUs 50. For example, the flight control device 40 selects the EPU 50 whose power supply is to be cut off in step S1702, and switches the power supply switch 132 of the EPU 50 from the switch-on state to the switch-off state in step S1703. After step S1703, the flight control device 40 proceeds to step S107.

After the discharging control process in step S107 is completed, the flight control device 40 proceeds to step S1701. In step S1701, the flight control device 40 performs an all-cut-off process. The all-cut-off process is a process for cutting off both application of the driving voltage and application of the control voltage in the EPU 50.

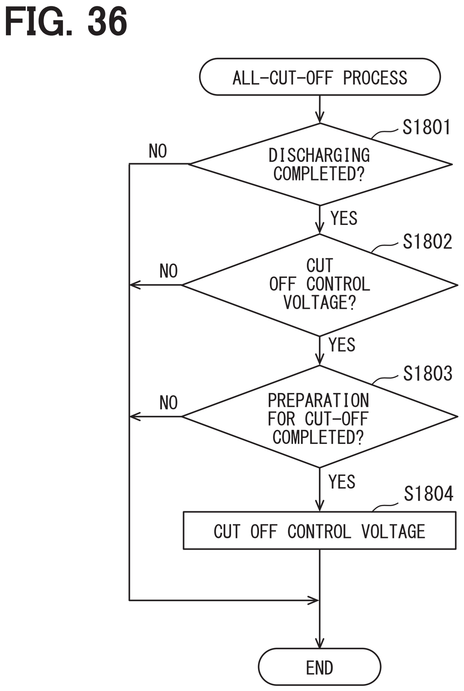

The all-cut-off process will be described with reference to a flowchart of FIG. 36. In step S1801 shown in FIG. 36, the flight control device 40 determines whether the discharging of the inverter high-voltage unit 86 is completed. For example, the flight control device 40 determines whether the discharging notification process is performed in step S205 of the first embodiment. When the discharging notification process is performed, the flight control device 40 determines that the discharging of the inverter high-voltage unit 86 is completed.

When the discharging of the inverter high-voltage unit 86 is completed, the flight control device 40 proceeds to step S1802. In step S1802, the flight control device 40 determines whether to cut off the control voltage. Examples of the cutting off the control voltage include powering off the eVTOL 10 and performing an operation for cutting off the control voltage by a pilot or the like. If the control voltage is to be cut off, the power supply to the inverter low-voltage unit 87 is to be cut off.

When the control voltage is to be cut off, the flight control device 40 proceeds to step S1803. In step S1803, the flight control device 40 determines whether a preparation for cutting off the control voltage is completed. Examples of the preparation for cutting off the control voltage include a process for storing information for performing the flight control process into a nonvolatile memory such as a ROM.

When the preparation for cutting off the control voltage is completed, the flight control device 40 proceeds to step S1804. In step S1804, the flight control device 40 cuts off the control voltage. Examples of the process for cutting off the control voltage include a process for cutting off a path electrically connecting the battery 31 and the inverter low-voltage unit 87 and a process for stopping driving of a device for applying the control voltage to the inverter low-voltage unit 87.

As an end preparation for control other than the discharging control, for example, three conditions are assumed. A first condition is that, in the case of diagnosing the propulsion system 30, the inverter control unit 81, and the flight control device 40 before shutdown, the diagnosis is completed. A second condition is that information necessary for a next flight or for flight history management is transmitted to the flight control device 40 and recorded in the memory 43 or transmitted to an external device. A third condition is that the operator such as the pilot performs a forced shutdown operation. When the propulsion device 100 includes multiple inverter devices 80, the control voltage is turned off after completion of the preparation is confirmed for all of the inverter devices 80.

<Sixteenth Embodiment>

In a sixteenth embodiment, a voltage of the discharging circuit 141 is detected. Configurations, operations, and effects not particularly described in the sixteenth embodiment are the same as those in the first embodiment. In the sixteenth embodiment, differences from the first embodiment will be mainly described.

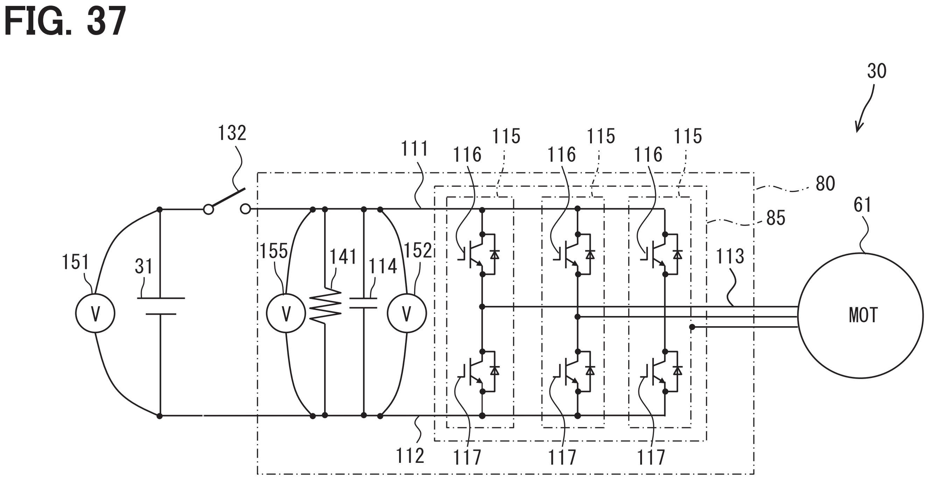

As shown in FIG. 37, in the EPU 50, one motor 61 is driven by one inverter device 80. The inverter device 80 includes a discharging voltage sensor 155. The discharging voltage sensor 155 is a sensor that detects the voltage of the discharging circuit 141. The discharging voltage sensor 155 is communicably connected to the flight control device 40.

In the present embodiment, multiple voltage sensors such as voltage sensors 151, 152, and 155 are provided in the high-voltage DC path for one inverter device 80. In the eighth embodiment, the common battery 31 is connected to the multiple inverter devices 80, and the voltage sensor 152 is provided in the high-voltage DC path of each inverter device 80. In a configuration in which multiple voltage sensors are provided as described above, the flight control device 40 or the like may diagnose normality or abnormality of a power supply system or the voltage sensors by mutual comparison of voltage sensor values.

If the power supply switch 132 is in the on-state, each of the voltage sensors outputs a voltage value corresponding to a battery voltage. Meanwhile, if the power supply switch 132 is in the off-state, the voltage sensor close to the battery than to the power supply switch 132 shows a voltage corresponding to the battery voltage. If the power supply switch 132 is in the off-state, the voltage sensor in the inverter device 80 shows a voltage lower than the battery voltage. When the power supply switch 132 is switched from one of the on-state and the off-state to the other, the voltage sensor in the inverter device 80 shows a change in voltage value corresponding to the switching of the power supply switch 132. During the discharging control, the voltage sensor in the inverter device 80 shows a decrease in voltage in response to the progress of the discharging control.

Accordingly, by comparing the outputs of the multiple voltage sensors that show a similar voltage or a similar voltage change, an abnormality in the propulsion system 30, the EPU 50, or the like can be accurately detected.

When an instruction to end the discharging control is received during the discharging control, the discharging control may be ended even if the discharging is not completed. The case where an instruction to end the discharging control is received during the discharging control is assumed to be a case where a re-flight instruction is received during the discharging control, a case where an instruction to forcibly cut off the power supply by an operation of the operator is received, or the like.

### <Other Embodiments>

The disclosure in the present description is not limited to the illustrated embodiments. The disclosure encompasses the illustrated embodiments and modifications thereof made by those skilled in the art. For example, the disclosure is not limited to the combination of components and elements described in the embodiments, and various modifications and implementations can be performed. The disclosure may be implemented in various combinations. The disclosure may have an additional portion that can be added to the embodiments. The disclosure encompasses the omission of components and elements of the embodiments. The disclosure encompasses the replacement or combination of components, elements between one embodiment and another embodiment. The disclosed technical scope is not limited to those described in the embodiments. The disclosed technical scope is indicated by the description of the claims, and should be construed to include all changes within the meaning and range equivalent to the description of the claims.

In each of the embodiments described above, a housing lid portion such as the inverter lid portion 95 may be provided on at least one of the motor housing 70 and the inverter housing 90. In this case, at least one of the motor housing 70 and the inverter housing 90 corresponds to the driving housing. For example, the housing lid portion may be provided on the motor housing 70. In the configuration, the housing lid portion covers an opening portion of the motor housing 70 to hide a motor high-voltage unit. The motor high-voltage unit is a part or a component in the motor device 60 to which a driving voltage is applied, and corresponds to the driving voltage unit. Examples of the motor high-voltage unit include a coil component forming a motor coil and a bus bar component electrically connected to the coil component. It is preferable that the discharging circuit 141 is electrically connected to the motor high-voltage unit via the first selection switch 142.

In each of the embodiments described above, a configuration for the flight control device 40 to acquire that the inverter lid portion 95 is opened may be any configuration. For example, the flight control device 40 may use a detection signal of a lid sensor to acquire that the inverter lid portion 95 is opened. The lid sensor may include a contact sensor as the lid detection circuit 120, or may include a non-contact sensor. A signal indicating that the inverter lid portion 95 is opened may be input to the flight control device 40 by the operator performing an input operation or the like.

In each of the embodiments described above, as a parameter for completing the discharging of the inverter high-voltage unit 86, the discharging current, the residual voltage, or the like may be used in addition to the discharging duration. For example, in the first embodiment described above, the d-axis driving stop process may be performed when the discharging current or the residual voltage is sufficiently small to an extent that the discharging current or the residual voltage decreases to a reference value after the discharging of the inverter high-voltage unit 86 by the d-axis driving process is started.

In each of the embodiments described above, the control mode may be changed at any timing. For example, the control mode may be changed to the interlock release mode or the interlock mode when a predetermined condition is satisfied for an operation of the pilot, the flight state of the eVTOL 10, or the like in a situation where the eVTOL 10 is flying. The control mode may be changed to the interlock mode or the interlock release mode when a predetermined condition is satisfied for the operation of the pilot, the flight state of the eVTOL 10, or the like in a situation where the eVTOL 10 is on the ground. Further, when the eVTOL 10 is powered on, the control mode may be set to the interlock mode.

In each of the embodiments described above, the residual electric power in the inverter high-voltage unit 86 may be discharged in any manner. For example, in the second embodiment described above, the inverter high-voltage unit 86 may be discharged by both the motor 61 and the discharging circuit 141. In the configuration, the first selection switch 142 can connect both the motor 61 and the discharging circuit 141 to the inverter circuit 85. Accordingly, the time required to discharge the inverter high-voltage unit 86 can be further shortened by both the motor 61 and the discharging circuit 141.

In each of the embodiments described above, a discharging switch such as the first selection switch 142 may be provided in any manner as long as the inverter high-voltage unit 86 can be discharged. For example, the discharging switch may be connected in series to the discharging circuit 141.

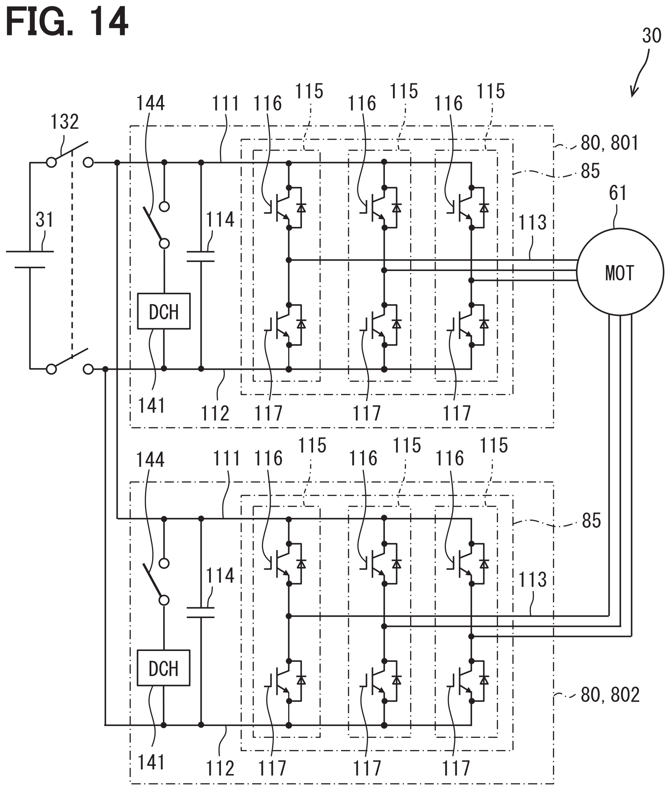

As shown in FIG. 14, in a configuration in which third selection switches 144 are provided in the propulsion system 30 as the discharging switches, each of the third selection switches 144 and the corresponding discharging circuit 141 are connected in series between the P-line 111 and the N-line 112. In the configuration, the third selection switch 144 and the discharging circuit 141 are connected in parallel to the smoothing capacitor 114 and the inverter high-voltage unit 86. The third selection switch 144 is capable of being shifted between a switch-on state and a switch-off state. When the third selection switch 144 is in the switch-on state, the discharging circuit 141 can discharge the inverter high-voltage unit 86 and the smoothing capacitor 114.

In the configuration, the flight control device 40 switches the third selection switch 144 to the switch-on state after switching the power supply switch 132 to the switch-off state in the circuit discharging process. Accordingly, the discharging current flows from the inverter high-voltage unit 86 to the discharging circuit 141 through the third selection switch 144, and thus the inverter high-voltage unit 86 is discharged. That is, the residual electric power in the smoothing capacitor 114 is discharged to the discharging circuit 141 via the third selection switch 144. The flight control device 40 is preferably configured to determine whether the power supply switch 132 is in the switch-off state, and switch the third selection switch 144 to the switch-on state only when it is determined that the power supply switch 132 is in the switch-off state.

In each of the embodiments described above, the flight control device 40 may perform a partial-upper-on-state process in addition to or instead of the upper-on-state process. In the partial-upper-on-state process, a process for setting the inverter circuit 85 to a partial-upper-on-state is performed. In the partial-upper-on-state, the upper arm switch 116 is set to the on-state in at least one of the phases, and the upper arm switches 116 in the remaining phases are set to the off-state. In the partial-upper-on-state, the lower arm switches 117 are set to the off-state in all phases. The partial-upper-on-state corresponds to the upper-switch-on state.

The flight control device 40 may perform a partial-lower-on-state process in addition to or instead of the lower-on-state process. In the partial-lower-on-state process, a process for setting the inverter circuit 85 to a partial-lower-on-state is performed. In the partial-lower-on-state, the lower arm switch 117 is set to the on-state in at least one of the phases, and the lower arm switches 117 in the remaining phases are set to the off-state. In the partial-lower-on-state, the upper arm switches 116 are set to the off-state in all the phases. The partial-lower-on-state corresponds to the lower-switch-on state.

The flight control device 40 may alternately repeat the partial-upper-on-state process and the partial-lower-on-state process in the same manner as alternately repeating the upper-on-state process and the lower-on-state process. That is, the flight control device 40 may repeatedly shift the inverter circuit 85 between the partial-upper-on-state and the partial-lower-on-state.

The flight control device 40 may variably set the phase to be shifted to the on-state when the inverter circuit 85 is repeatedly shifted to the partial-upper-on-state and the partial-lower-on-state. For example, when the partial-upper-on-state process and the partial-lower-on-state process are performed as one set, the flight control device 40 may shift a phase, which is different from a phase shifted to the on-state in a previous set, to the on-state in a current set.

However, it is preferable that the flight control device 40 repeats the partial-upper-on-state process and the partial-lower-on-state process such that no current flows through the motor 61. For example, the flight control device 40 repeats the partial-upper-on-state process and the partial-lower-on-state process such that an upper-on-state period in which the upper arm switch 116 is in the on-state in the partial-upper-on-state process in the previous set and a lower-on-state period in which the lower arm switch 117 is in the on-state in the partial-lower-on-state process in the current set do not overlap each other. If the upper-on-state period and the lower-on-state period overlap each other, there is a concern that a current flows to the motor 61 through the upper arm switch 116 in a certain phase and the lower arm switch 117 in another phase in the overlapping period. Meanwhile, if the upper-on-state period and the lower-on-state period do not overlap each other, no current flows to the motor 61 through the upper arm switch 116 in a certain phase and the lower arm switch 117 in another phase.

The flight control device 40 may variably set the number of phases to be shifted to the on-state when the inverter circuit 85 is repeatedly shifted to the partial-upper-on-state and the partial-lower-on-state. The flight control device 40 may shift different number of phases from those shifted to the on-state in the previous set, to the on-state in the current set. For example, the flight control device 40 may gradually reduce the number of phases to be shifted to the on-state in the partial-upper-on-state or the partial-lower-on-state. For example, the flight control device 40 may repeatedly perform the upper-on-state process and the lower-on-state process when the capacitor voltage Vdc is higher than a predetermined voltage, and may repeatedly perform the partial-upper-on-state process and the partial-lower-on-state process when the capacitor voltage Vdc is lower than the predetermined voltage.

In each of the embodiments described above, at least a part of the programs stored in the memories 43 and 83 may be rewritten through wireless communication such as OTA. The OTA is an abbreviation of over the air.

In each of the embodiments described above, at least one of the inverter control unit 81 and the flight control device 40 may perform the flight control process. The propulsion control program may be included in at least one of the programs 44 and 84. At least one of the processors 42 and 82 may be included in at least one processing unit that executes the propulsion control program.

In each of the embodiments described above, the vertical take-off and landing aircraft on which the flight control device 40 is mounted may be an electric-type vertical take-off and landing aircraft in which at least one propeller 20 is driven by at least one EPU 50. For example, one propeller 20 may be driven by multiple EPUs 50, or multiple propellers 20 may be driven by one EPU 50.

In each of the embodiments described above, the flight vehicle on which the EPU 50 is mounted may not be the vertical take-off and landing aircraft as long as being of an electric type. For example, the flight vehicle may be a flight vehicle capable of taking off and landing while gliding, as an example of the electric aircraft. The flight vehicle may be a rotorcraft, or a fixed-wing aircraft. The flight vehicle may be an unmanned flight vehicle carrying no person. The unmanned flight vehicle may or may not include the occupant compartment 14. The pilot may remotely control the flight vehicle.

In each of the embodiments described above, the moving object on which the EPU 50 is mounted may not be a flight vehicle as long as the moving object is movable by rotation of the rotary body. For example, the moving object may be a vehicle, a ship, a construction machine, or an agricultural machine. For example, when the moving object is a vehicle, a construction machine, or the like, the rotary body is a movement-wheel or the like, and an output shaft portion is an axle or the like. When the moving object is a ship, the rotary body is a propulsion-screw propeller or the like, and the output shaft portion is a propeller shaft or the like.

In each of the above embodiments, the flight control device 40 and the inverter control unit 81 is provided by a control system including at least one computer. The control system includes at least one processor that is hardware. The processor, which is now be referred to as a hardware processor, can be provided in the following manner (i), (ii), or (iii).
(i) The hardware processor may be a hardware logic circuit. In such case, the computer is provided with a digital circuit including a number of programmed logic units (gate circuits). The digital circuit may comprise a memory for storing at least one of programs and/or data. The computer may be provided by an analog circuit. The computer may be provided as a combination of a digital circuit and an analog circuit.
(ii) The hardware processor may be at least one processor core that executes a program stored in at least one memory. In such case, the computer is provided with at least one memory and at least one processor core. The processor core is called, for example, as a CPU. The memory is also called as a storage medium. The memory is a non-transitory, tangible storage medium in which "at least one of a program and data" that is computer-readable by the processor is non-temporarily stored.
(iii) The hardware processor may be a combination of (i) and (ii) described above. (i) and (ii) are placed on different chips or on a common chip.

That is, at least one of the means and functions provided by the flight control device 40 and the inverter control unit 81 can be provided only by hardware, only by software, or a combination thereof.

### (Disclosure of Technical ideas)

This description discloses multiple technical ideas described in multiple items listed below. Some items may be written in a multiple dependent form with subsequent items referring to the preceding item as an alternative. Some items may be written in a multiple dependent form referring to another multiple dependent form. These items written in a multiple dependent form define multiple technical ideas.

### (Technical idea 1)

A propulsion system (30) is configured to propel a flight vehicle (10). The propulsion system includes: a motor (61) configured to be driven to propel the flight vehicle using electric power supplied from a power supply unit (31); a driving voltage unit (86) configured to be applied with a driving voltage to drive the motor, when the power supply unit supplies the electric power to the motor; a driving housing (90) accommodating the driving voltage unit; a housing lid portion (95) covering an opening portion (92) of the driving housing to hide the driving voltage unit and configured to open the opening portion; an interlock unit (S104, S608) configured to set, as a control mode to control the power supply from the power supply unit to the motor, an interlock mode to cut off the power supply from the power supply unit to the motor to stop the application of the driving voltage to the driving voltage unit due to opening of the housing lid portion; and an interlock release unit (S111, S604) configured to release the interlock mode when the flight vehicle is in flight.

### (Technical idea 2)

The propulsion system according to technical idea 1, in which the interlock release unit is configured to release the interlock mode by setting the control mode to a continuation mode, in which the power supply unit continues the power supply to the motor, even when the housing lid portion is opened.

### (Technical idea 3)

The propulsion system according to technical idea 1 or 2, in which the interlock release unit is configured to release the interlock mode in response to take-off of the flight vehicle.

### (Technical idea 4)

The propulsion system according to any one of technical ideas 1 to 3, in which the interlock unit is configured to set the interlock mode in response to landing of the flight vehicle.

### (Technical idea 5)

The propulsion system according to any one of technical ideas 1 to 4, in which the interlock unit is configured to maintain the interlock mode when the flight vehicle is on a ground.

### (Technical idea 6)

The propulsion system according to any one of technical ideas 1 to 5, further includes: a discharging execution unit (S107, S612) configured to discharge the driving voltage unit when the control mode is the interlock mode to cut off the power supply from the power supply unit to the motor due to opening of the housing lid portion.

### (Technical idea 7)

The propulsion system according to technical idea 6, in which the discharging execution unit includes a motor discharging unit (S201, S401, S402, S501) configured to discharge residual electric power in the driving voltage unit to the motor.

### (Technical idea 8)

The propulsion system according to technical idea 6 or 7, in which the discharging execution unit includes a stationary discharging unit (S201, S401, S402) configured to discharge residual electric power in the driving voltage unit to the motor, such that a propeller (20) of the flight vehicle does not rotate.

### (Technical idea 9)

The propulsion system according to any one of technical ideas 6 to 8, in which the discharging execution unit includes a rotational discharging unit (S501) configured to discharge residual electric power in the driving voltage unit to the motor, such that a propeller (20) of the flight vehicle rotates.

### (Technical idea 10)

The propulsion system according to any one of technical ideas 6 to 9, in which the discharging execution unit includes a circuit discharging unit (S301) configured to discharge residual electric power in the driving voltage unit to a discharging circuit (141), which is different from the motor.

### (Technical idea 11)

The propulsion system according to any one of technical ideas 6 to 10, further includes a power conversion unit (85, 851, 852) including a switch element (116, 117) provided in the driving voltage unit and configured to convert the electric power supplied from the power supply unit to the motor by switching the switch element; and a smoothing capacitor (114) provided in the driving voltage unit and electrically connected to the power conversion unit. The discharging execution unit includes a conversion discharging unit (S701 to S711, S801 to S809) configured to operate the switch element, such that residual electric power in the smoothing capacitor is discharged to the power conversion unit.

### (Technical idea 12)

The propulsion system according to technical idea 11, in which the power conversion unit includes upper and lower arm circuits (115) respectively provided in a plurality of phases and each including an upper arm switch (116) which is the switch element and a lower arm switch (117) which is the switch element different from the upper arm switch, and the conversion discharging unit includes a conversion shifting unit (S701 to S709, S801 to S807) configured to repeatedly shift the power conversion unit between an upper-switch-on state where the upper arm switch is in a switch-on state and the lower arm switch is in a switch-off state in each of the upper and lower arm circuits in the plurality of phases, and a lower-switch-on state where the lower arm switch is in the switch-on state and the upper arm switch is in the switch-off state in each of the upper and lower arm circuits in the plurality of phases.

### (Technical idea 13)

The propulsion system according to technical idea 12, in which the conversion discharging unit includes a maintaining setting unit (S1201 to S1210) configured to, when the conversion shifting unit repeatedly shifts the power conversion unit between the upper-switch-on state and the lower-switch-on state, set an upper-maintaining period (JTH) during which the upper-switch-on state is maintained and a lower-maintaining period (JTL) during which the lower-switch-on state is maintained, according to the state of the power conversion unit.

### (Technical idea 14)

The propulsion system according to technical idea 12 or 13, in which the conversion discharging unit includes an upper shortening unit (S1101, S1205) configured to, when the conversion shifting unit repeatedly shifts the power conversion unit to the upper-switch-on state, set a next period (JTH_n+1) during which the upper-switch-on state is maintained to be shorter than a current period (JTH_n) during which the upper-switch-on state is maintained, and a lower shortening unit (S1102, S1210) configured to, when the conversion shifting unit repeatedly shifts the power conversion unit to the lower-switch-on state, set a next period (JTL_n+1) during which the lower-switch-on state is maintained to be shorter than a current period (JTL_n) during which the lower-switch-on state is maintained.

### (Technical idea 15)

The propulsion system according to any one of technical ideas 12 to 14, further includes: a first conversion unit (851) which is the power conversion unit and is electrically connected to the motor; and a second conversion unit (852) which is the power conversion unit different from the first conversion unit and is electrically connected to the motor to be connected in parallel to the first conversion unit. The conversion discharging unit includes a first shifting unit (S802) configured to repeatedly shift the first conversion unit between the upper-switch-on state and the lower-switch-on state, a second shifting unit (S803) configured to repeatedly shift the second conversion unit between the upper-switch-on state and the lower-switch-on state, and a timing shifting unit (S801, S806, S807) configured to shift a timing at which the first conversion unit is shifted from one of the upper-switch-on state and the lower-switch-on state to the other and a timing at which the second conversion unit is shifted from one of the upper-switch-on state and the lower-switch-on state to the other, from each other.

### (Technical idea 16)

The propulsion system according to any one of technical ideas 12 to 15, in which the conversion shifting unit includes an upper-maintaining unit (S702 to S704) configured to maintain the power conversion unit in the upper-switch-on state, such that the residual electric power in the smoothing capacitor is stored in a parasitic capacitance (117b) of the lower arm switch and electric power stored in a parasitic capacitance (116b) of the upper arm switch is discharged to the upper arm switch, and a lower-maintaining unit (S705 to S707) configured to maintain the power conversion unit in the lower-switch-on state, such that the residual electric power in the smoothing capacitor is stored in the parasitic capacitance of the upper arm switch and electric power stored in the parasitic capacitance of the lower arm switch is discharged to the lower arm switch.

### (Technical idea 17)

The propulsion system according to technical idea 6, in which the discharging execution unit includes a power-off discharging unit (S614) configured to discharge residual electric power in the driving voltage unit when the flight vehicle is powered off, and an interlock-mode discharging unit (S612) configured to, in a case where the control mode is the interlock mode to cut off the power supply from the power supply unit to the motor due to opening of the housing lid portion, discharge the residual electric power in the driving voltage unit more rapidly than when the discharging is performed by the power-off discharging unit.

### (Technical idea 18)

A propulsion control device (40) is configured to control a propulsion system (30). The propulsion system includes: a motor (61) configured to be driven to propel a flight vehicle (10) using electric power supplied from a power supply unit (31); a driving voltage unit (86) configured to be applied with a driving voltage to drive the motor, when the power supply unit supplies the electric power to the motor; a driving housing (90) accommodating the driving voltage unit; and a housing lid portion (95) covering an opening portion (92) of the driving housing to hide the driving voltage unit and configured to open the opening portion. The propulsion control device includes: an interlock unit (S104, S608) configured to set, as a control mode to control the power supply from the power supply unit to the motor, an interlock mode to cut off the power supply from the power supply unit to the motor to stop the application of the driving voltage to the driving voltage unit due to opening of the housing lid portion; and an interlock release unit (S111, S604) configured to release the interlock mode when the flight vehicle is in flight.

### (Technical idea 19)

A propulsion control program (44) is configured to control a propulsion system (30). The propulsion system includes: a motor (61) configured to be driven to propel a flight vehicle (10) using electric power supplied from a power supply unit (31); a driving voltage unit (86) configured to be applied with a driving voltage to drive the motor, when the power supply unit supplies the electric power to the motor; a driving housing (90) accommodating the driving voltage unit; and a housing lid portion (95) covering an opening portion (92) of the driving housing to hide the driving voltage unit and configured to open the opening portion. The propulsion control program is configured to cause at least one processing unit (42) to: set (S104, S608), as a control mode to control the power supply from the power supply unit to the motor, an interlock mode to cut off the power supply from the power supply unit to the motor to stop the application of the driving voltage to the driving voltage unit due to opening of the housing lid portion; and release (S111, S604) the interlock mode when the flight vehicle is in flight.

## Claims

1. A propulsion system (30) configured to propel a flight vehicle (10), the propulsion system comprising:
a motor (61) configured to be driven to propel the flight vehicle using electric power supplied from a power supply unit (31);
a driving voltage unit (86) configured to be applied with a driving voltage to drive the motor, when the power supply unit supplies the electric power to the motor;
a driving housing (90) accommodating the driving voltage unit;
a housing lid portion (95) covering an opening portion (92) of the driving housing to hide the driving voltage unit and configured to open the opening portion;
an interlock unit (S104, S608) configured to set, as a control mode to control the power supply from the power supply unit to the motor, an interlock mode to cut off the power supply from the power supply unit to the motor to stop the application of the driving voltage to the driving voltage unit due to opening of the housing lid portion; and
an interlock release unit (S111, S604) configured to release the interlock mode when the flight vehicle is in flight.

2. The propulsion system according to claim 1, wherein
the interlock release unit is configured to release the interlock mode by setting the control mode to a continuation mode, in which the power supply unit continues the power supply to the motor, even when the housing lid portion is opened.

3. The propulsion system according to claim 1 or 2, wherein
the interlock release unit is configured to release the interlock mode in response to take-off of the flight vehicle.

4. The propulsion system according to claim 1 or 2, wherein
the interlock unit is configured to set the interlock mode in response to landing of the flight vehicle.

5. The propulsion system according to claim 1 or 2, wherein
the interlock unit is configured to maintain the interlock mode when the flight vehicle is on a ground.

6. The propulsion system according to claim 1 or 2, further comprising:
a discharging execution unit (S107, S612) configured to discharge the driving voltage unit when the control mode is the interlock mode to cut off the power supply from the power supply unit to the motor due to opening of the housing lid portion.

7. The propulsion system according to claim 6, wherein
the discharging execution unit includes a motor discharging unit (S201, S401, S402, S501) configured to discharge residual electric power in the driving voltage unit to the motor.

8. The propulsion system according to claim 6, wherein
the discharging execution unit includes a stationary discharging unit (S201, S401, S402) configured to discharge residual electric power in the driving voltage unit to the motor, such that a propeller (20) of the flight vehicle does not rotate.

9. The propulsion system according to claim 6, wherein
the discharging execution unit includes a rotational discharging unit (S501) configured to discharge residual electric power in the driving voltage unit to the motor, such that a propeller (20) of the flight vehicle rotates.

10. The propulsion system according to claim 6, wherein
the discharging execution unit includes a circuit discharging unit (S301) configured to discharge residual electric power in the driving voltage unit to a discharging circuit (141), which is different from the motor.

11. The propulsion system according to claim 6, further comprising:
a power conversion unit (85, 851, 852) including a switch element (116, 117) provided in the driving voltage unit and configured to convert the electric power supplied from the power supply unit to the motor by switching the switch element; and
a smoothing capacitor (114) provided in the driving voltage unit and electrically connected to the power conversion unit, wherein
the discharging execution unit includes a conversion discharging unit (S701 to S711, S801 to S809) configured to operate the switch element, such that residual electric power in the smoothing capacitor is discharged to the power conversion unit.

12. The propulsion system according to claim 11, wherein
the power conversion unit includes upper and lower arm circuits (115) respectively provided in a plurality of phases and each including an upper arm switch (116) which is the switch element and a lower arm switch (117) which is the switch element different from the upper arm switch, and
the conversion discharging unit includes a conversion shifting unit (S701 to S709, S801 to S807) configured to repeatedly shift the power conversion unit between an upper-switch-on state where the upper arm switch is in a switch-on state and the lower arm switch is in a switch-off state in each of the upper and lower arm circuits in the plurality of phases, and a lower-switch-on state where the lower arm switch is in the switch-on state and the upper arm switch is in the switch-off state in each of the upper and lower arm circuits in the plurality of phases.

13. The propulsion system according to claim 12, wherein
the conversion discharging unit includes a maintaining setting unit (S1201 to S1210) configured to, when the conversion shifting unit repeatedly shifts the power conversion unit between the upper-switch-on state and the lower-switch-on state, set an upper-maintaining period (JTH) during which the upper-switch-on state is maintained and a lower-maintaining period (JTL) during which the lower-switch-on state is maintained, according to the state of the power conversion unit.

14. The propulsion system according to claim 12, wherein
the conversion discharging unit includes
an upper shortening unit (S1101, S1205) configured to, when the conversion shifting unit repeatedly shifts the power conversion unit to the upper-switch-on state, set a next period (JTH_n+1) during which the upper-switch-on state is maintained to be shorter than a current period (JTH_n) during which the upper-switch-on state is maintained, and
a lower shortening unit (S1102, S1210) configured to, when the conversion shifting unit repeatedly shifts the power conversion unit to the lower-switch-on state, set a next period (JTL_n+1) during which the lower-switch-on state is maintained to be shorter than a current period (JTL_n) during which the lower-switch-on state is maintained.

15. The propulsion system according to claim 12, further comprising:
a first conversion unit (851) which is the power conversion unit and is electrically connected to the motor; and
a second conversion unit (852) which is the power conversion unit different from the first conversion unit and is electrically connected to the motor to be connected in parallel to the first conversion unit, wherein
the conversion discharging unit includes
a first shifting unit (S802) configured to repeatedly shift the first conversion unit between the upper-switch-on state and the lower-switch-on state,
a second shifting unit (S803) configured to repeatedly shift the second conversion unit between the upper-switch-on state and the lower-switch-on state, and
a timing shifting unit (S801, S806, S807) configured to shift a timing at which the first conversion unit is shifted from one of the upper-switch-on state and the lower-switch-on state to the other and a timing at which the second conversion unit is shifted from one of the upper-switch-on state and the lower-switch-on state to the other, from each other.

16. The propulsion system according to claim 12, wherein
the conversion shifting unit includes
an upper-maintaining unit (S702 to S704) configured to maintain the power conversion unit in the upper-switch-on state, such that the residual electric power in the smoothing capacitor is stored in a parasitic capacitance (117b) of the lower arm switch and electric power stored in a parasitic capacitance (116b) of the upper arm switch is discharged to the upper arm switch, and
a lower-maintaining unit (S705 to S707) configured to maintain the power conversion unit in the lower-switch-on state, such that the residual electric power in the smoothing capacitor is stored in the parasitic capacitance of the upper arm switch and electric power stored in the parasitic capacitance of the lower arm switch is discharged to the lower arm switch.

17. The propulsion system according to claim 6, wherein
the discharging execution unit includes
a power-off discharging unit (S614) configured to discharge residual electric power in the driving voltage unit when the flight vehicle is powered off, and
an interlock-mode discharging unit (S612) configured to, in a case where the control mode is the interlock mode to cut off the power supply from the power supply unit to the motor due to opening of the housing lid portion, discharge the residual electric power in the driving voltage unit more rapidly than when the discharging is performed by the power-off discharging unit.

18. A propulsion control device (40) configured to control a propulsion system (30), the propulsion system including: a motor (61) configured to be driven to propel a flight vehicle (10) using electric power supplied from a power supply unit (31); a driving voltage unit (86) configured to be applied with a driving voltage to drive the motor, when the power supply unit supplies the electric power to the motor; a driving housing (90) accommodating the driving voltage unit; and a housing lid portion (95) covering an opening portion (92) of the driving housing to hide the driving voltage unit and configured to open the opening portion,
the propulsion control device comprising:
an interlock unit (S104, S608) configured to set, as a control mode to control the power supply from the power supply unit to the motor, an interlock mode to cut off the power supply from the power supply unit to the motor to stop the application of the driving voltage to the driving voltage unit due to opening of the housing lid portion; and
an interlock release unit (S111, S604) configured to release the interlock mode when the flight vehicle is in flight.

19. A propulsion control program (44) configured to control a propulsion system (30), the propulsion system including: a motor (61) configured to be driven to propel a flight vehicle (10) using electric power supplied from a power supply unit (31); a driving voltage unit (86) configured to be applied with a driving voltage to drive the motor, when the power supply unit supplies the electric power to the motor; a driving housing (90) accommodating the driving voltage unit; and a housing lid portion (95) covering an opening portion (92) of the driving housing to hide the driving voltage unit and configured to open the opening portion,
the propulsion control program configured to cause at least one processing unit (42) to:
set (S104, S608), as a control mode to control the power supply from the power supply unit to the motor, an interlock mode to cut off the power supply from the power supply unit to the motor to stop the application of the driving voltage to the driving voltage unit due to opening of the housing lid portion; and
release (S111, S604) the interlock mode when the flight vehicle is in flight.
